# EUROPEAN PATENT SPECIFICATION

(11) **EP 2 636 709 B1**
(45) Date of publication and mention of the grant of the patent: **05.04.2017**
(21) Application number: 13156977.4
(22) Date of filing: 27.02.2013
(51) Int. Cl.: C09D 11/101, C09D 11/40, C09D 11/54, C09D 11/38, C09D 11/30

(54) **Actinic radiation-curing type ink set, inkjet recording method, and printed material**
Durch aktinische Strahlung härtbarer Tintensatz, Tintenstrahlaufzeichnungsverfahren und Druckmaterial
Ensemble d'encre de type durcissant au rayonnement actinique, procédé d'enregistrement à jet d'encre et matériau imprimé

(30) Priority: 05.03.2012 JP 2012047974
(43) Date of publication of application: 11.09.2013
(73) Proprietor: Fujifilm Corporation, Minato-ku Tokyo (JP)
(72) Inventor: Mochizuki, Kyohei, Ashigarakami-gun, Kanagawa 258-8577 (JP)
(74) Representative: Höhfeld, Jochen

(56) References cited:
- EP-A1- 1 958 782
- WO-A1-2011/065095
- JP-A- 2008 100 501
- US-A1- 2009 081 367
- US-A1- 2009 289 973

## Description

This application claims priority under 35 USC 119 from Japanese Patent Application No. 2012-047974 filed on March 5, 2012, the disclosure of which is incorporated by reference herein.

The present invention relates to an actinic radiation-curing type ink set, an inkjet recording method, and a printed material.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays.

Various radiation curing ink compositions have previously been proposed; JP-A-2007-131755 (JP-A denotes a Japanese unexamined patent application publication) describes an actinic radiation curable ink for ink jet comprising a polymerizable monomer, the polymerizable monomer comprising a monofunctional monomer at 80 mass% to 99.99 mass% and a polyfunctional monomer at 20 mass% to 0.01 mass% relative to the entire monomer, and the percentage change of mass of a cured film of said ink when immersed in said ink for 30 seconds being no greater than 30 mass%.

Currently, when printing is carried out using an ink jet printer by firing ink droplets onto plain paper or a non-water absorbing recording medium such as a plastic, higher speed, higher image quality, and fixation onto the recording medium are important objects.

JP-A-2008-100501 discloses an ink set for ink jet recording for the purpose of improving image uniformity, etc. between various recording media, the ink set comprising at least a colored liquid composition comprising at least a polymerizable compound, a photopolymerization initiator, and a colorant and an undercoat liquid composition comprising at least a polymerizable compound and a photopolymerization initiator, the polymerizable compound contained in the colored liquid composition comprising at least one type of monofunctional monomer and at least one type of polyfunctional monomer, the amount of monofunctional monomer in the entire colored liquid composition being 10 to 70 mass%, and the amount of polyfunctional monomer being 10 to 50 mass%.

Furthermore, improving the durability, etc. of a printed material is also an object.

JP-A-2010-000788 discloses an ink jet printed material for the purpose of obtaining an ink jet printed material having excellent weatherability and durability, the ink jet printed material having a transparent protective layer formed on the surface, the ink jet printed material comprising a substrate and a picture layer formed above the substrate by ink jet type printing, the transparent protective layer being formed above the picture layer, the picture layer comprising a UV-curable resin ink that cures upon irradiation with UV, and the transparent protective layer comprising an electron beam-curable resin that cures upon irradiation with an electron beam.

It is an object of the present invention to provide an actinic radiation-curing type ink set that can form an ink image having excellent surface gloss and excellent blocking resistance and stretchability, and provide an inkjet recording method using the ink set and a printed material recorded by the inkjet recording method. In particular, up until now, with regard to an actinic radiation-curing type inkjet ink printer using a clear ink, in a multipass mode of a shuttle scanning type printer a good surface state cannot be obtained and the surface gloss is insufficient.

The objects have been attained by means described in <1>, <16>, <21>, or <22> below. They are described below together with <2> to <15> and <17> to <20>, which are preferred embodiments.
<1> An actinic radiation-curing type ink set comprising a colored ink composition and a clear ink composition (C1), the colored ink composition comprising (Component A1) a radically polymerizable compound, (Component B1) a polymerization initiator, and (Component D) a colorant, and the clear ink composition (C1) comprising (Component A2) a radically polymerizable compound, (Component B2) a polymerization initiator, and (Component S) an organic solvent,
<2> the actinic radiation-curing type ink set according to <1>, wherein it further comprises a clear ink composition (C2) that does not comprise an organic solvent,
<3> the actinic radiation-curing type ink set according to <2>, wherein the clear ink composition (C2) comprises (Component A3) a radically polymerizable compound and (Component B3) a polymerization initiator,
<4> the actinic radiation-curing type ink set according to <3>, wherein the colored ink composition comprises at least a bisacylphosphine oxide as the polymerization initiator, and the clear ink composition (C1) and/or the clear ink composition (C2) comprise a monoacylphosphine oxide as the polymerization initiator,
<5> the actinic radiation-curing type ink set according to any one of <1> to <4>, wherein the colored ink composition does not contain an organic solvent,
<6> the actinic radiation-curing type ink set according to any one of <1> to <5>, wherein the actinic radiation-curing type ink set is for forming multiple layers,
<7> the actinic radiation-curing type ink set according to any one of <1> to <6>, wherein the colored ink composition comprises (Component A1-1) an *N-*vinyl compound as Component A1,
<8> the actinic radiation-curing type ink set according to <7>, wherein Component A1-1 is *N-*vinylcaprolactam,
<9> the actinic radiation-curing type ink set according to any one of <1> to <8>, wherein said Component S comprises at least one type selected from the group consisting of an alcohol, a polyhydric alcohol, a polyhydric alcohol ether, a nitrogen-containing compound, and a sulfur-containing compound,
<10> the actinic radiation-curing type ink set according to any one of <1> to <9>, wherein said Component S comprises at least one type selected from the group consisting of an alcohol, a polyhydric alcohol, and a polyhydric alcohol ether,
<11> the actinic radiation-curing type ink set according to any one of <1> to <10>, wherein said Component S has a boiling point of 65°C to 250°C,
<12> the actinic radiation-curing type ink set according to any one of <1> to <11>, wherein said Component S has a content in the clear ink composition (C1) of 1 to 80 mass%,
<13> the actinic radiation-curing type ink set according to any one of <1> to <12>, wherein said Component S comprises at least one type selected from the group consisting of methanol, isopropyl alcohol, 1-butyl alcohol, 1-ethoxy-2-propanol, ethylene glycol monomethyl ether, and diethylene glycol monobutyl ether,
<14> the actinic radiation-curing type ink set according to any one of <1> to <13>, wherein the colored ink composition comprises (Component A1-2) a compound represented by Formula (a-2) as Component A1, 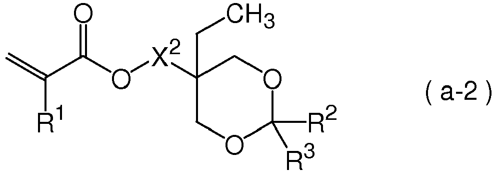 wherein in Formula (a-2), R¹, R², and R³ independently denote a hydrogen atom, a methyl group, or an ethyl group and X² denotes a single bond or a divalent linking group,
<15> the actinic radiation-curing type ink set according to any one of <1> to <14>, wherein the colored ink composition comprises a monofunctional radically polymerizable compound at 60 to 100 mass% relative to the total amount of Component A1,
<16> an inkjet recording method using the actinic radiation-curing type ink set according to any one of <1> to <15>, the method comprising, in this order, an image formation step of forming a color image by discharging the colored ink composition onto a recording medium and a clear ink layer formation step of forming a clear ink layer by discharging the clear ink composition (C1),
<17> the inkjet recording method according to <16>, wherein it further comprises a step of heating the recording medium at 30°C to 80°C subsequent to the clear ink layer formation step,
<18> the inkjet recording method according to <16> or <17>, wherein it comprises a scanning step of moving, in a first direction relative to the recording medium, an inkjet head having a plurality of nozzle arrays comprising a first nozzle array having a plurality of nozzles arranged for discharging the colored ink composition and a second nozzle array having a plurality of nozzles arranged for discharging the clear ink composition (C1), a relative movement step of reciprocating the recording medium relative to the inkjet head in a second direction that is not parallel to the first direction, a discharge control step of dividing the nozzle array into a plurality of regions in the second direction and controlling ink discharge from the inkjet head for each divided nozzle region unit, and an actinic radiation irradiation step of irradiating with actinic radiation the ink that has been discharged from the inkjet head in the discharge control step and has been deposited on the recording medium, the actinic radiation irradiation step being a step of carrying out the irradiation with actinic radiation by dividing the actinic radiation irradiation area into a plurality of regions so as to correspond to the divided nozzle regions and controlling the amount of light for each region of the divided irradiation regions,
<19> the inkjet recording method according to <18>, wherein the actinic radiation irradiation area is divided into two regions, the illumination intensity of an irradiation light source for the first region is 100 mW/cm² to 800 mW/cm² and the illumination intensity of an irradiation light source for the second region is 800 mW/cm² to 1,600 mW/cm²,
<20> the inkjet recording method according to any one of <16> to <19>, wherein the minimum droplet volume for discharging the colored ink composition is at least 5 pL but less than 20 pL, and the minimum droplet volume for discharging the clear ink composition (C1) is at least 20 pL but no greater than 60 pL,
<21> a printed material obtained by the method according to any one of <16> to <20>, and
<22> use of the actinic radiation-curing type ink set according to any one of <1> to <15> as an actinic radiation-curing type inkjet ink set for formation of multiple layers.

In accordance with the present invention, there can be provided an actinic radiation-curing type ink set that can form an ink image having excellent surface gloss and excellent blocking resistance and stretchability, and in addition thereto there can be provided an inkjet recording method having high productivity using the ink set and a printed material recorded by the inkjet recording method.
FIG. 1: A schematic diagram showing a sectional view when an image layer and a clear ink layer are formed above a recording medium using the ink set of the present invention.
FIG. 2: An external perspective view showing one example of ink jet recording equipment suitably used in the present invention.
FIG. 3: A transparent plan view schematically showing a paper transport path of the ink jet recording equipment shown in FIG. 2.
FIG. 4: A transparent plan view showing the layout configuration of an ink jet head and a UV irradiation section shown in FIG. 2.
FIG. 5: A perspective view showing an example of the configuration of a light source movement part for moving the UV irradiation section shown in FIG. 4.
FIG. 6: An explanatory view showing an example of the configuration of the ink jet head and the UV irradiation section for forming an image shown in FIG. 1.
FIG. 7: A transparent side view showing an example of the configuration of a provisional curing light source unit used as a provisional curing light source of the present embodiment.
FIG. 8: A transparent plan view of the provisional curing light source unit shown in FIG. 7.
FIG. 9: A block diagram showing the configuration of an ink supply system of the ink jet recording equipment.
FIG. 10: A block diagram showing the configuration of the ink jet recording equipment.

The actinic radiation-curing type ink set of the present invention (hereinafter, also called simply an 'ink set') comprises a colored ink composition and a clear ink composition (C1), the colored ink composition comprising (Component D) a colorant, (Component A1) a radically polymerizable compound, and (Component B1) a polymerization initiator, and the clear ink composition (C1) comprising (Component S) an organic solvent, (Component A2) a radically polymerizable compound, and (Component B2) a polymerization initiator.

In the present invention, the notation 'X to Y', which expresses a numeral range, has the same meaning as 'at least X but no greater than Y'. Furthermore, '(Component S) an organic solvent', etc. are also simply called 'Component S', etc. Moreover, when both or either of 'acrylate' and 'methacrylate' are referred to, it might be expressed as '(meth)acrylate'.

Furthermore, 'a clear ink composition', etc. are also simply called 'a clear ink' etc. A clear ink composition (C1) and a clear ink composition (C2) are collectively referred to as 'a clear ink composition' or 'a clear ink'.

Furthermore, 'mass%' and 'parts by mass' have the same meanings as 'wt%' and 'parts by weight' respectively.

Moreover, in the present invention a combination of the preferred embodiments explained below is a more preferred embodiment.

The present invention is explained in detail below.

### I. Actinic radiation-curing type ink set

The actinic radiation-curing type ink set of the present invention comprises an ink composition which is curable upon exposure to actinic radiation.

The 'actinic radiation' referred to in the present invention is radiation that can provide energy that enables an initiating species to be generated in the ink when irradiated, includes α rays, γ rays, X rays, ultraviolet rays, visible light, and an electron beam. Among these, ultraviolet rays and an electron beam are preferable from the viewpoint of curing sensitivity and the availability of equipment, and ultraviolet rays are more preferable.

The actinic radiation-curing type ink set of the present invention is preferably an ink set for multiple layer formation, and the ink set for multiple layer formation preferably forms an image layer by means of a colored ink composition group comprising a yellow ink composition, a magenta ink composition, a cyan ink composition, and a black ink composition and forms a clear ink layer by means of a clear ink composition.

Furthermore, the actinic radiation-curing type ink set of the present invention comprises a clear ink composition (C1) comprising an organic solvent and, furthermore, preferably comprises a clear ink composition (C2) that does not comprise an organic solvent. The clear ink (C2) not comprising an organic solvent means that it comprises substantially no organic solvent, and means that the organic solvent including moisture contained in a normal state (25°C 1 atm) is no greater than 1.0 mass% relative to the total amount of the clear ink composition. It is preferable for the colored ink composition not to comprise an organic solvent or to have an organic solvent content of no greater than 1.0 mass% relative to the total amount of the colored ink composition.

One example of a mode in which an image layer and a clear ink layer are formed above a recording medium using the actinic radiation-curing type ink set of the present invention is explained below by reference to a drawing.

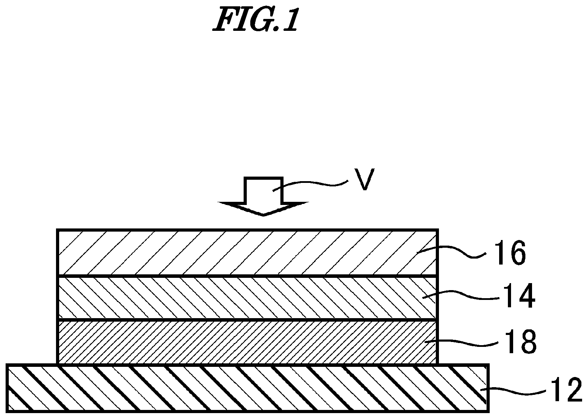

FIG. 1 is a schematic diagram showing a sectional view when an image layer 14 and a clear ink layer 16 are formed above a recording medium (support or substrate) 12 using the actinic radiation-curing type ink set of the present invention. Furthermore, the arrow V in the diagram shows the direction from which the image is viewed (observation direction).

In FIG. 1, when the recording medium 12 is transparent, after a white layer 18 is formed above the recording medium 12, the image layer 14 may be formed thereabove. When the recording medium 12 is reflective, such as when it is paper, the white layer 18 is unnecessary.

In the present invention, the recording medium 12 is preferably light-reflecting, and examples thereof include paper, synthetic paper, and tarpaulin (PVC), which are described later for the recording medium.

In addition, the clear ink layer is provided in a region where at least an image has been formed, and it is preferably provided as a substantially uniform layer in a region where an image has been formed or a region wider than it.

In the clear ink layer, the clear ink (C1) is preferably used in a high surface gloss (gloss) mode of a high image quality mode of an inkjet printer, and the clear ink (C2) is preferably used in a low surface gloss (matte) mode of the printer.

The present invention is not limited to the mode in which two layers are formed; examples thereof include a mode in which three layers, that is, the white layer 18, the image layer 14, and the clear ink layer (C1 or C2) 16 are provided in that order above the recording medium 12 and a mode in which a multi-layer structure is formed by providing above a reflective recording medium 12 a plurality of the image layers 14 and the clear ink layer 16 in that order. The clear layer may have a multi-layer structure, and the clear layer may be overlaid above the whole of the image layer or the whole of a non-image area and a specific image area. Furthermore, only one of a high surface gloss (gloss) part and a low surface gloss (matte) part may be formed or they may be formed simultaneously, and a mode in which a gloss part is formed in an area that is desired to have high surface gloss and a matte part is formed in an area that is desired to have low surface gloss is also preferable.

Although details of the mechanism of action for the exhibition of the effects of the present invention are unclear, it is surmised to be as follows.

When carrying out inkjet printing using a clear ink composition, there is a case in which the actual amount of the clear ink composition discharged is smaller than the amount of ink that is required to be discharged as determined from the maximum liquid droplet volume of the inkjet printer head, the head nozzle resolution, the ink discharge frequency, and the productivity (transport speed of recording medium). In this case, since the amount of ink of the landed clear ink composition necessary for spreading while wet has not been fully discharged, it is thought that crater-shaped recesses (orange-like craters) are formed within an image. When a printer is made to have high productivity, a lot of the performance is achieved by increasing the speed of transport of a carriage, which includes an inkjet head. However, because of this, the actual amount of clear ink discharged is smaller than the amount of clear ink that is required to be discharged in order to obtain high surface gloss, and the above-mentioned defect is a problem in achieving high productivity. In this way, it is thought that when high productivity is sought, the spreading while wet of the clear ink composition becomes insufficient, the surface state of a printed image becomes poor, and the surface gloss becomes insufficient. Furthermore, when printing in high image quality mode, since the time from discharge onto a recording medium to exposure is long, oxygen dissolves in a landed ink liquid droplet, the polymerizability of the surface of the ink liquid droplet is degraded, and there is the problem that sand-ripple-like lines (swath lines) are formed on a printed image surface.

In the present invention, it is surmised that, due to use of the clear ink composition comprising an organic solvent, the clear ink layer undergoes appropriate spreading while wet, thus improving the surface gloss of a printed image. Furthermore, it is surmised that due to the clear ink layer decreasing in film thickness due to evaporation of the organic solvent after being discharged, the curability of the clear layer improves and the blocking resistance improves. Moreover, it is surmised that, although the mechanism of action is unclear, due to the film thickness of the clear layer being decreased, the stretchability improves.

In one embodiment, shown in FIG. 1, the image layer is a lower layer, a clear ink layer comprising an organic solvent and having good spreading while wet and excellent curability is formed above the image layer, and it is surmised that this clear ink layer suppresses degradation of the polymerizability of the surface of the image layer, which is a lower layer, caused by oxygen dissolving therein, thus improving the curability.

In accordance with the ink set of the present invention, when forming two layers as above, an image having excellent adhesion between substrate and ink and between ink and ink and also having excellent image quality, surface gloss, and surface state is obtained.

### (Ink composition)

The colored ink composition and the clear ink composition of the actinic radiation-curing type ink set of the present invention are now explained. In the present invention, when referring simply to an 'ink composition', it means 'a collective term for the colored ink composition and the clear ink composition'. The colored ink composition is also called simply a 'colored ink' or a 'color ink'. When a 'clear ink composition' is referred to, it means 'a collective term for the clear ink composition (C1) and the clear ink composition (C2)', and the 'clear ink composition (C1)' and the 'clear ink composition (C2)' are also simply called a 'clear ink C1' and a 'clear ink C2'.

The colored ink composition is an ink composition, other than the clear ink, having a color, and examples thereof include a black ink, a cyan ink, a magenta ink, and a yellow ink. The ink set of the present invention comprises at least one type of colored ink composition as the colored ink composition, and when it comprises a plurality of colored ink compositions, it is preferable that at least one type of colored ink satisfies requirements described in <4>, <5>, <7>, <14>, <15>, etc. above, and it is more preferable that all of the colored ink compositions satisfy them.

The ink composition used in the present invention is preferably an oil-based ink composition that can be cured by actinic radiation. The actinic radiation is, as described above, preferably UV or an electron beam from the viewpoint of curing sensitivity and the ready availability of equipment, and is particularly preferably UV.

Components of the ink compositions forming the actinic radiation-curing type ink set of the present invention are explained below.

### (Component S) Organic solvent

The clear ink composition (C1) used in the actinic radiation-curing type ink set of the present invention comprises (Component S) an organic solvent. The organic solvent referred to in the present invention means a solvent that contains a carbon atom and is a liquid at 25°C, and is preferably a water-soluble organic solvent.

The water-soluble organic solvent referred to here means an organic solvent that has a solubility in 100 parts by mass of water at 25°C of at least 10 parts by mass.

As the water-soluble organic solvent that can be used in the present invention, at least one type of organic solvent selected from the group consisting of an alcohol, a polyhydric alcohol, a polyhydric alcohol ether, a nitrogen-containing compound, and a sulfur-containing compound is preferable, at least one type of organic solvent selected from the group consisting of an alcohol, a polyhydric alcohol, and a polyhydric alcohol ether is more preferable, and at least one type of organic solvent selected from the group consisting of an alcohol and a polyhydric alcool ether is yet more preferable.

Specific examples of the water-soluble organic solvent that can be used in the present invention include those below.

Examples of the alcohol include a monohydric straight-chain or branched aliphatic alcohol having 1 to 20 carbons and a monohydric aliphatic cyclic alcohol having 4 to 20 carbons. Preferred examples of the alcohol include a monohydric straight-chain or branched aliphatic alcohol having 1 to 6 carbons, and a monohydric aliphatic cyclic alcohol having 5 to 8 carbons. Preferred examples thereof include methanol, ethanol, propanol, isopropanol, 1-butyl alcohol, isobutanol, secondary butanol, tertiary butanol, pentanol, hexanol, cyclohexanol, and benzyl alcohol.

Examples of the polyhydric alcohol include a di- or higher-hydric straight-chain or branched aliphatic alcohol having 2 to 20 carbons, preferably 2 to 8 carbons, and more preferably 2 to 6 carbons, and a di- or higher-hydric aliphatic cyclic alcohol having 4 to 20 carbons, and preferably 5 to 8 carbons. The number of hydroxy groups per molecule is preferably 2 to 6, more preferably 2 to 4, and yet more preferably 2 or 3. Furthermore, the polyhydric alcohol preferably contains at least one alkyleneoxy group having 2 to 6 carbons in the hydrocarbon chain. Among them, a dihydric straight-chain or branched aliphatic alcohol having 2 to 8 carbons is preferable, and a dihydric straight-chain or branched aliphatic alcohol having 2 to 6 carbons is more preferable. The dihydric straight-chain or branched aliphatic alcohol may have an ether bond in the molecule. Preferred examples thereof include ethylene glycol, diethylene glycol, triethylene glycol, polyethylene glycol, propylene glycol, dipropylene glycol, polypropylene glycol, butylene glycol, hexanediol, pentanediol, glycerol, hexanetriol, thiodiglycol, and 2-methylpropanediol.

Examples of the polyhydric alcohol ether include an ether in which the hydrogen atom of a hydroxy group of a di- or higher-hydric straight-chain or branched aliphatic alcohol having 2 to 20 carbons, preferably 2 to 9 carbons, and more preferably 2 to 6 carbons is replaced by an aliphatic hydrocarbon group having 1 to 10 carbons, and preferably 2 to 4 carbons or an aromatic hydrocarbon group having 6 to 12 carbons and an ether in which the hydrogen atom of a hydroxy group of a di-or higher-hydric aliphatic cyclic alcohol having 4 to 20 carbons, and preferably 5 to 8 carbons is replaced by an aliphatic hydrocarbon group having 1 to 10 carbons, and preferably 1 to 4 carbons or an aromatic hydrocarbon group having 6 to 12 carbons. Furthermore, the polyhydric alcohol ether may contain as an ether bond at least one alkyleneoxy group having 2 to 6 carbons in the hydrocarbon chain in addition to the ether bond formed by etherification of the hydroxy group of the polyhydric alcohol. The polyhydric alcohol ether is preferably a monoether of dihydric alcohol. Preferred examples thereof include ethylene glycol monomethyl ether, ethylene glycol monoethyl ether, ethylene glycol mononormal butyl ether, ethylene glycol monotertiary butyl ether, diethylene glycol monoethyl ether, diethylene glycol monomethyl ether, diethylene glycol monobutyl ether, propylene glycol monomethyl ether, 1-ethoxy-2-propanol, propylene glycol monobutyl ether, tripropylene glycol monomethyl ether, dipropylene glycol monomethyl ether, dipropylene glycol dimethyl ether, ethylene glycol monomethyl ether acetate, ethylene glycol monoethyl ether acetate, triethylene glycol monomethyl ether, triethylene glycol monoethyl ether, triethylene glycol monobutyl ether, ethylene glycol monophenyl ether, and propylene glycol monophenyl ether.

Examples of the nitrogen-containing compound include an amine, an amide, and a nitrogen-containing heterocyclic compound.

Examples of the amine include a primary to tertiary monoamine substituted with an aliphatic hydrocarbon group having 1 to 10 carbons, an aliphatic cyclic amine having 1 to 10 carbons, and a polyamine having 2 to 20 carbons. Preferred examples thereof include ethanolamine, diethanolamine, triethanolamine, *N-*methyldiethanolamine, *N*-ethyldiethanolamine, morpholine, *N*-ethylmorpholine, ethylenediamine, diethylenediamine, triethylenetetramine, tetraethylenepentamine, polyethyleneimine, pentamethyldiethylenetriamine, and tetramethylpropylenediamine.

Examples of the amide include an amide having 1 to 10 carbons. Preferred examples thereof include formamide, *N,N-*dimethylformamide, and *N,N-*dimethylacetamide.

Examples of the nitrogen-containing heterocyclic compound include a nitrogen-containing cyclic compound having 4 to 20 carbons, which may contain an oxygen atom, a sulfur atom, etc. in the molecule in addition to a nitrogen atom. Preferred examples thereof include 2-pyrrolidone, *N-*methyl-2-pyrrolidone, cyclohexylpyrrolidone, 2-oxazolidone, and 1,3-dimethyl-2-imidazolidinone.

Examples of other nitrogen-containing compounds include urea and acetonitrile.

Furthermore, in addition thereto, as an oxygen-containing heterocyclic compound, γ-butyrolactone can be cited, and as the sulfur-containing compound a sulfoxide (e.g. dimethyl sulfoxide, etc.) and a sulfone (e.g. sulfolane, etc.) can be cited.

Among them, Component S is preferably at least one type of organic solvent selected from the group consisting of a monohydric straight-chain or branched aliphatic alcohol having 1 to 6 carbons, a monohydric aliphatic cyclic alcohol having 5 to 8 carbons, and monoalkyl ether (alkyl group having 1 to 4 carbons) of dihydric straight-chain or branched aliphatic alcohol having 2 to 9 carbons.

Among them, Component S is preferably methanol, isopropyl alcohol, 1-butyl alcohol, ethylene glycol monomethyl ether, diethylene glycol monobutyl ether, 1-ethoxy-2-propanol, ethylene glycol monoethyl ether, ethylene glycol mononormal butyl ether, ethylene glycol monotertiary butyl ether, ethylene glycol monomethyl ether acetate, ethylene glycol monoethyl ether acetate, 2-pyrrolidone, or *N-*methyl-2-pyrrolidone, more preferably methanol, isopropyl alcohol, 1-butyl alcohol, ethylene glycol monomethyl ether, diethylene glycol monobutyl ether, 1-ethoxy-2-propanol, ethylene glycol monoethyl ether, ethylene glycol mononormal butyl ether, ethylene glycol monotertiary butyl ether, ethylene glycol monomethyl ether acetate, or ethylene glycol monoethyl ether acetate, and yet more preferably methanol, isopropyl alcohol, 1-butyl alcohol, ethylene glycol monomethyl ether, diethylene glycol monobutyl ether, or 1-ethoxy-2-propanol, particularly preferably isopropaol or 1-butyl alcohol, and most preferably isopropaol.

The boiling point of Component S is preferably 65°C to 250°C, more preferably 65 °C to 230 °C, yet more preferably 70 °C to 140 °C, and particularly preferably 80°C to 120°C. It is preferable for the boiling point to be in the above range since a printed material having excellent surface gloss and excellent blocking resistance is obtained. Component S is particularly preferably the monohydric alcohol, the polyhydric alcohol and the polyhydric alcohol ether having the above-mentioned boiling point.

Component S may be used singly or in a combination of a plurality thereof.

The content of Component S is preferably 1 to 80 mass% relative to the total amount of the clear ink composition (C1), more preferably 5 to 70 mass%, yet more preferably 10 to 60 mass%, and particularly preferably more than 20 mass% but no greater than 40 mass%.

The clear ink composition (C1) comprising Component S is an oil-based ink composition and preferably contains no more water as a solvent than an amount that is the moisture content of Component S in a normal state. The content of water in the clear ink C1 is preferably no greater than 1 mass% relative to the total mass of the ink composition.

### (Component A1), (Component A2), and (Component A3) Radically polymerizable compounds

In the ink composition used in the present invention, the colored ink composition comprises (Component A1) a radically polymerizable compound and the clear ink composition (C1) comprises (Component A2) a radically polymerizable compound. Furthermore, the clear ink composition (C2) preferably comprises (Component A3) a radically polymerizable compound.

In the present invention, the radically polymerizable compounds of Component A1 to Component A3 are not particularly limited as long as they are compounds that undergo a polymerization reaction caused by a radical generated by decomposition of a radical polymerization initiator contained in the ink composition used in the present invention when irradiated with actinic radiation, and known radically polymerizable compounds may be used.

In the present invention, the colored ink composition preferably comprises as Component A1 (Component A1-1) an *N-*vinyl compound and/or (Component A1-2) a compound represented by Formula (a-2). Component A1-1 and Component A1-2 are explained below.

### (Component A1-1) N-vinyl compound

The colored ink composition used in the present invention preferably comprises (Component A1-1) an *N-*vinyl compound as (Component A1) the radically polymerizable compound.

In addition, one in which the clear ink comprises Component A1-1 is not excluded.

As the *N-*vinyl compound, an *N-*vinyllactam is preferable and a compound represented by Formula (a-1) is more preferable.

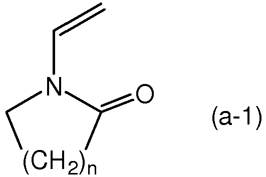

In Formula (a-1), n denotes an integer of 1 to 5; n is preferably an integer of 2 to 4 from the viewpoint of flexibility after the ink composition is cured, adhesion to a recording medium, and ease of availability of starting material, n is more preferably an integer of 2 or 4, and n is particularly preferably 4, which is *N*-vinylcaprolactam. *N*-vinylcaprolactam is preferable since it has excellent safety, is commonly used and easily available at a relatively low price, and gives particularly good ink curability and adhesion of a cured film to a recording medium.

The content of Component A1-1 in the colored ink composition used in the present invention is preferably in the range of 5 to 60 mass% relative to the mass of the entire colored ink composition, more preferably in the range of 15 to 35 mass%. When the content is 5 mass% or greater the adhesion to a recording medium is excellent, and when the content is no greater than 60 mass% the storage stability is excellent.

### (Component A1-2) Compound represented by Formula (a-2)

The colored ink composition used in the present invention preferably comprises (Component A1-2) a compound represented by Formula (a-2) as (Component A1) the radically polymerizable compound. In addition, one in which the clear ink comprises Component A1-2 is not excluded. It is surmised that the compound represented by Formula (a-2) has a low surface tension and improves spreading while wet of the ink composition. Furthermore, it has appropriate polarity, is resistant to incomplete surface curing, and can give a cured material (image layer and clear ink layer) having excellent adhesion. 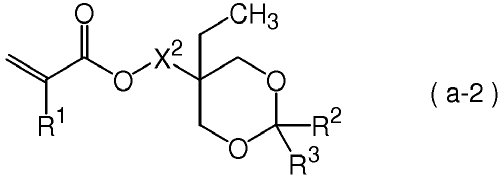 (In (a-2), R¹, R², and R³ independently denote a hydrogen atom, a methyl group, or an ethyl group, and X² denotes a single bond or a divalent linking group.)

R¹ is preferably a hydrogen atom or a methyl group, and more preferably a hydrogen atom.

R² and R³ are independently preferably a hydrogen atom or a methyl group, and more preferably a hydrogen atom, and it is yet more preferable that both R² and R³ are hydrogen atoms.

The divalent linking group denoted by X² is not particularly limited as long as the effects of the present invention are not greatly impaired, and is preferably a divalent hydrocarbon group or a divalent group in which a hydrocarbon group and an ether bond are combined, and more preferably a divalent hydrocarbon group, poly(alkyleneoxy) group, or poly(alkyleneoxy)alkyl group. Furthermore, the number of carbons of the divalent linking group is preferably 1 to 60, and more preferably 1 to 20.

X² is preferably a single bond, a divalent hydrocarbon group, or a divalent group in which a hydrocarbon group and an ether bond are combined, more preferably a divalent hydrocarbon group having 1 to 20 carbons, yet more preferably a divalent hydrocarbon group having 1 to 8 carbons, and particularly preferably a methylene group.

Specific examples of Component A1-2 are cited below, but it is not limited to these compounds. In the specific examples below, R denotes a hydrogen atom or a methyl group.

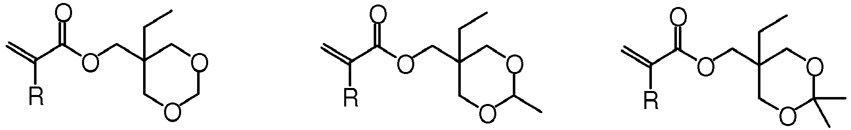

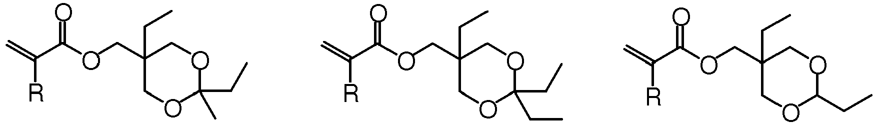

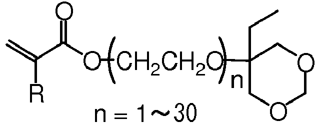

Among them, cyclic trimethylolpropane formal (meth)acrylate is preferable, and cyclic trimethylolpropane formal acrylate (CTFA) is particularly preferable. Component A1-2 may be a commercial product, and specific examples of the commercial product include SR531 (SARTOMER).

From the viewpoint of curability of the colored ink composition and adhesion between a recording medium and an image, the content of Component A1-2 is preferably 1 to 65 mass% relative to the entire mass of the colored ink composition, more preferably 3 to 60 mass%, and yet more preferably 5 to 60 mass%, and most preferably 5 to 40 mass%.

### (Component A-3) Trimethylolpropane triacrylate

In the present invention, the ink composition (the colored ink composition and the clear ink composition) preferably comprises (Component A-3) trimethylolpropane triacrylate as (Component A1) to (Component A3) the radically polymerizable compound. It is preferable for Component A-3 to be contained since a balance can be achieved between curability and wind-up suitability (flexibility) of an output sample of a roll substrate.

From the viewpoint of a balance being achieved between the curability and the wind-up suitability (flexibility) of an output sample of a roll substrate, the content of Component A-3 is preferably 0.1 to 10 mass% relative to the total mass of the ink composition.

### (Component A-4) Other monofunctional (meth)acrylate

The ink composition used in the present invention may comprise (Component A-4) a monofunctional (meth)acrylate other than Component A1-2.

From the viewpoint of inkjet discharge properties and flexibility, the content of Component A-4 is preferably 1 to 50 mass% relative to the total mass of the ink composition, more preferably 3 to 45 mass%, and yet more preferably 5 to 40 mass%.

Specific examples of the other monofunctional (meth)acrylate compound include 2-phenoxyethyl (meth)acrylate, benzyl (meth)acrylate, isoamyl (meth)acrylate, stearyl (meth)acrylate, lauryl (meth)acrylate, octyl (meth)acrylate, isooctyl (meth)acrylate, decyl (meth)acrylate, isomyristic (meth)acrylate, isostearyl (meth)acrylate, 2-ethylhexyl diglycol (meth)acrylate, 2-hydroxybutyl (meth)acrylate, buthoxyethyl (meth)acrylate, methoxydiethylene glycol (meth)acrylate, methoxypolyethylene glycol (meth)acrylate, methoxypropylene glycol (meth)acrylate, tetrahydrofurfuryl (meth)acrylate, isobornyl (meth)acrylate, 2-hydroxyethyl (meth)acrylate, 2-hydroxypropyl (meth)acrylate, 2-(meth)acryloyloxyethylsuccinic acid, 2-(meth)acryloyloxyethyl-2-hydroxyethylphthalic acid, a lactone-modified flexible (meth)acrylate, *t*-butylcyclohexyl (meth)acrylate, 2-(2-ethoxyethoxy)ethyl (meth)acrylate, cyclopentenyl (meth)acrylate, cyclopentenyloxyethyl (meth)acrylate, and dicyclopentanyl (meth)acrylate, etc.

The monofunctional (meth)acrylate contained in the colored ink composition is preferably a compound represented by Formula (a-2), and the monofunctional (meth)acrylate contained in the clear ink composition is preferably isobornyl (meth)acrylate, cyclopentenyl acrylate, dicyclopentenyloxyethyl acrylate, or *t-*butylcyclohexyl acrylate.

In the present invention, the total content of monofunctional radically polymerizable compounds of the colored ink composition, including Component A1-1 and Component A1-2, is preferably 60 to 100 mass% relative to the total amount of (Component A1) the radically polymerizable compound. When the content of the monofunctional radically polymerizable compounds is in the above-mentioned range, an image having excellent ink - ink and ink-recording medium adhesion and excellent flexibility can be obtained. The content of the monofunctional polymerizable compounds of the each of colored ink compositions is preferably 70 to 100 mass% relative to the total amount of Component A1, and more preferably 75 to 95 mass%.

In addition, the monofunctional polymerizable compound includes a monofunctional polymerizable compound such as (Component A-4) another monofunctional (meth)acrylate.

Furthermore, the clear ink composition (C1) preferably has a total content of the monofunctional radically polymerizable compound of 0 to 30 mass% relative to the total amount of the radically polymerizable compound (Component A2), more preferably 0 to 25 mass%, and yet more preferably 0 to 20 mass%. Moreover, the clear ink composition (C2) has a total content of the monofunctional radically polymerizable compound of 0 to 30 mass% relative to the total amount of the radically polymerizable compound (Component A3), more preferably 0 to 25 mass%, and yet more preferably 0 to 20 mass%.

When the content of the monofunctional radically polymerizable compound in the clear ink composition is in the above ranges, the curability and blocking resistance are excellent.

### (Component A-5) Other polyfunctional (meth)acrylate

The ink composition used in the present invention may comprise (Component A-5) other polyfunctional (meth)acrylate other than Component A-3 above.

Due to the ink composition comprising a polyfunctional (meth)acrylate compound, high curability can be obtained.

Specific examples of Component A-5 include bis(4-(meth)acryloxypolyethoxyphenyl)propane, neopentyl glycol di(meth)acrylate, ethoxylated (2) neopentyl glycol di(meth)acrylate (compound formed by di(meth)acrylating neopentyl glycol ethylene oxide 2 mol adduct), propoxylated (2) neopentyl glycol di(meth)acrylate (compound formed by di(meth)acrylating neopentyl glycol propylene oxide 2 mol adduct), ethoxylated (3) trimethylol propane tri(meth)acrylate (compound formed by tri(meth)acrylating trimethylol propane ethylene oxide 3 mol adduct), 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, tetrapropylene glycol di(meth)acrylate, polypropylene glycol di(meth)acrylate, pentaerythritol tri(meth)acrylate, tricyclodecanedi methanol di(meth)acrylate, ethoxylated trimethylolpropane tri(meth)acrylate, pentaerythritol tetra(meth)acrylate, dipentaerythritol tetra(meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, bisphenol A propylene oxide (PO) adduct di(meth)acrylate, bisphenol A ethylene oxide (EO) adduct di(meth)acrylate, dipentaerythritol hexa(meth)acrylate, and caprolactone-modified dipentaerythritol hexa(meth)acrylate.

The colored ink composition preferably comprises as Component A-5 1,6-hexanediol diacrylate or ethoxylated (3) trimethylolpropane triacrylate. Furthermore, the clear ink composition preferably comprises as Component A-5 dipropylene glycol diacrylate, tricyclodecanedimethanol diacrylate, or propoxylated (2) neopentyl glycol diacrylate (a compound in which the 2 mole propylene oxide adduct of neopentyl glycol is diacrylated).

Examples of preferred combinations of polyfunctional (meth)acrylates in the colored ink composition include a combination of trimethylolpropane triacrylate (Component A-3) and 1,6-hexanediol diacrylate and a combination of ethoxylated (3) trimethylolpropane triacrylate and 1,6-hexanediol diacrylate.

Examples of preferred combinations of polyfunctional (meth)acrylates in the clear ink composition include a combination of dipropylene glycol diacrylate and tricyclodecanedimethanol diacrylate and a combination of dipropylene glycol diacrylate, tricyclodecanedimethanol diacrylate, and propoxylated (2) neopentyl glycol diacrylate.

The ink composition used in the present invention may comprise an oligomer as the polyfunctional (meth)acrylate compound.

The 'oligomer' means a polymer having a limited number (preferably 5 to 100) of monomer-based constituent units. A weight-average molecular weight of the oligomer is preferably 400 to 10,000, and more preferably 500 to 5,000.

The oligomer is preferably a compound having a (meth)acryloyl group as a functional group.

From the viewpoint of a balance between flexibility and curability, it is preferable for the number of the functional group contained in the oligomer to be 2 to 15 per oligomer molecule, more preferably 2 to 6, yet more preferably 2 to 4, and particularly preferably 2.

Examples of the oligomer in the present invention include a polyester (meth)acrylate-based oligomer, an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, a (meth)acrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester (meth)acrylate, a polyamide oligomer, a polyisocyanate oligomer), an addition-condensation oligomer (a phenolic resin, an amino resin, a xylene resin, a ketone resin, etc.), and amine-modified polyester oligomer, etc. Among these, an oligoester (meth)acrylate are preferable, and among them a urethane (meth)acrylate and a polyester (meth)acrylate are more preferable, and a urethane (meth)acrylate is particularly preferable because the ink composition provides excellent curability and adhesion. With regard to the oligomer, one type thereof may be used on its own or two or more types may be used in combination.

As the urethane (meth)acrylate, an aliphatic urethane (meth)acrylate and an aromatic urethane (meth)acrylate may preferably be cited.

With respect to the oligomer, 'Origomar Handobukku (Oligomer Handbook)' (edited by Junji Furukawa, The Chemical Daily Co., Ltd.) may also be referred to.

Examples of the oligomer based on the urethane (meth)acrylate include U-2PPA, U-4HA, U-6HA, U-6LPA, U-15HA, U-324A, UA-122P, UA5201, UA-512, etc. manufactured by Shin-Nakamura Chemical Co., Ltd.; CN964A85, CN964, CN959, CN962, CN963J85, CN965, CN982B88, CN981, CN983, CN996, CN9002, CN9007, CN9009, CN9010, CN9011, CN9178, CN9788, CN9893 manufactured by Sartomer; EB204, EB230, EB244, EB245, EB270, EB284, EB285, EB810, EB4830, EB4835, EB4858, EB1290, EB210, EB215, EB4827, EB4830, EB4849, EB6700, EB204, EB8402, EB8804, EB8800-20R, etc. manufactured by DAICEL-CYTEC COMPANY LTD.

Examples of the amine-modified polyester oligomer include EB524, EB80, EB81 manufactured by DAICEL-CYTEC COMPANY LTD.; CN550, CN501, CN551 manufactured by Sartomer; GENOMER5275 manufactured by RAHN AG.

From the viewpoint of a balance being achieved between curability and adhesion, the content of the oligomer is preferably 0.3 to 10 mass% relative to the total mass of the ink composition, more preferably 0.5 to 8 mass%, and yet more preferably 0.5 to 7 mass%.

In practice, the total content of the other polyfunctional (meth)acrylate (Component A-5) is adjusted from the viewpoint of viscosity increase when preparing an ink and improvement of curability. Because of this, the appropriate mass% depends on the viscosity of each ink, but it is preferably 0 to 30 mass% relative to the total mass of the colored ink composition, more preferably 0.5 to 25 mass%, yet more preferably 1 to 20 mass%, and particularly preferably 3 to 20 mass%.

Furthermore, the total content of the other polyfunctional (meth)acrylate (Component A-5) is preferably 30 to 97 mass% relative to the total mass of the clear ink composition, more preferably 40 to 95 mass%, and yet more preferably 50 to 90 mass%.

The total content of the polyfunctional radically polymerizable compound is preferably 0 to 30 mass% relative to the total mass of the colored ink composition, more preferably 1 to 25 mass%, yet more preferably 3 to 20 mass%, and particularly preferably 5 to 20 mass%.

The total content of the polyfunctional radically polymerizable compound is preferably 30 to 97 mass% relative to the total mass of the clear ink composition, more preferably 40 to 95 mass%, yet more preferably 50 to 93 mass%, and particularly preferably 55 to 90 mass%.

### (Other radically polymerizable compound)

In the present invention, the ink composition may comprise a vinyl ether compound as the other radically polymerizable compound. Vinyl ether compounds can be broadly divided into monovinyl ether compounds and di- or tri-vinyl ether compounds.

The clear ink composition preferably comprises a vinyl ether compound, particularly preferably comprises a di- or tri-vinyl ether compound, and more preferably comprises a divinyl ether compound.

Examples of vinyl ether compounds that are suitably used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and monovinyl ether compounds such as ethylene glycol monovinyl ether, triethylene glycol monovinyl ether, hydroxyethyl monovinyl ether, ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, hydroxynonyl monovinyl ether, cyclohexanedimethanol monovinyl ether, *n*-propyl vinyl ether, isopropyl vinyl ether, isopropenyl vinyl ether, dodecyl vinyl ether, and diethylene glycol monovinyl ether.

The total content of the radically polymerizable compound (Component A1) in the colored ink composition is preferably 65 to 99 mass% relative to the total mass of the colored ink composition, and more preferably 70 to 90 mass%.

The total content of the radically polymerizable compound (Component A2) in the clear ink composition (C1) is preferably 20 to 90 mass% relative to the total mass of the clear ink composition (C1), more preferably 35 to 85 mass%, and yet more preferably 50 to 70 mass%.

The total content of the radically polymerizable compound (Component A3) in the clear ink composition (C2) is preferably 65 to 99 mass% relative to the total mass of the clear ink composition (C2), and more preferably 70 to 90 mass%.

### (Component B1), (Component B2), and (Component B3) Polymerization initiators

In the ink composition used in the present invention, the colored ink composition comprises (Component B1) a polymerization initiator and the clear ink composition (C1) comprises (Component B2) a polymerization initiator. Furthermore, the clear ink composition (C2) preferably comprises (Component B3) a polymerization initiator.

In the present invention, the polymerization initiator is preferably a radical polymerization initiator, and a known radical polymerization initiator may be used. With regard to the radical polymerization initiator that can be used in the present invention, a single type may be used or two or more types may be used in combination. Furthermore, the radical polymerization initiator may be used in combination with a cationic polymerization initiator.

The radical polymerization initiator that can be used in the present invention is a compound that absorbs external energy to thus generate a polymerization initiating species. The external energy used in order to initiate polymerization is preferably actinic radiation, and a photopolymerization initiator is preferably used. Preferred examples of actinic radiation include an electron bean and UV as described above.

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (I) a compound having a carbon-halogen bond, (m) an alkylamine compound, etc. With regard to these radical polymerization initiators, the above-mentioned compounds (a) to (m) may be used singly or in combination

In the present invention, as (Component B1) to (Component B3) the polymerization initiator, (Component B-1) a bisacylphosphine compound and (Component B-2) a monoacylphosphine compound are preferable. Hereinafter, (Component B-1) a bisacylphosphine compound, (Component B-2) a monoacylphosphine compound, and other polymerization initiator are explained.

### (Component B-1) Bisacylphosphine compound

In the present invention, (Component B-1) a bisacylphosphine compound can preferably be cited as the radical polymerization initiator (Component B1) to (Component B3).

Preferred examples of Component B-1 and Component B-2, which is described later, include bisacylphosphine oxide compounds and monoacylphosphine compounds described in paragraphs 0080 to 0098 of JP-A-2009-096985.

Component B-1 preferably has a partial structure represented by Formula (b-1-1) in the structure of the compound. 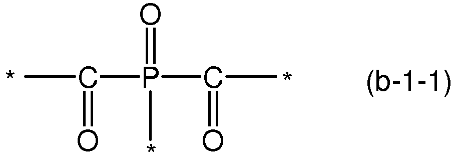 * (In Formula (b-1-1), denotes a bonding position.)

Component B-1 is particularly preferably a compound represented by Formula (b-1-2). 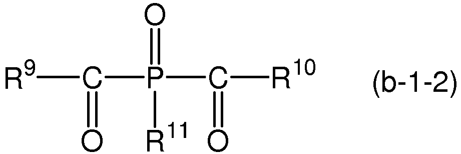 (In Formula (b-1-2), R⁹, R¹⁰ and R¹¹ independently denote an aromatic hydrocarbon group, which may have a methyl group or an ethyl group as a substituent.)

With regard to a bisacylphosphine oxide compound represented by Formula (b-1-2), it is preferable that R⁹ to R¹¹ are phenyl groups, which may have a methyl group as a substituent, and it is more preferable that R¹¹ is a phenyl group and R⁹ and R¹⁰ are phenyl groups having 1 to 3 methyl groups.

Among them, as the bisacylphosphine oxide compound represented by Formula (b-1-2), bis(2,4,6-trimethylbenzoyl)phenylphosphine oxide (IRGACURE 819, manufactured by Ciba Japapn) is preferable.

### (Component B-2) Monoacylphosphine compound

In the present invention, (Component B-2) a monoacylphosphine compound can preferably be cited as the radical polymerization initiator (Component B).

Component B-2 preferably has a partial structure represented by Formula (b-2-1) in the structure of the compound. 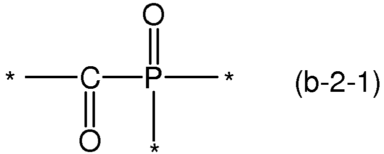 * (In Formula (b-2-1), denotes a bonding position.)

Component B-2 is particularly preferably a compound represented by Formula (b-2-2).

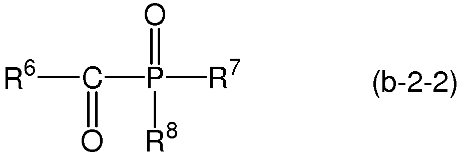

### (In Formula (b-2-2), R⁶, R⁷, and R⁸ independently denote an aromatic hydrocarbon group, which may have a methyl group or an ethyl group as a substituent.)

With regard to a monoacylphosphine oxide compound represented by Formula (b-2-2), it is preferable that R⁶ to R⁸ are phenyl groups, which may have a methyl group as a substituent, and it is more preferable that R⁷ and R⁸ are phenyl groups and R⁶ is a phenyl group having 1 to 3 methyl groups.

Among them, as the monoacylphosphine oxide compound represented by Formula (b-2-2), 2,4,6-trimethylbenzoyldiphenylphosphine oxide (Darocur TPO manufactured by Ciba Japan, Lucirin TPO manufactured by BASF) is preferable.

In the present invention, the colored ink composition preferably comprises a bisacylphosphine oxide compound (Component B-1) and/or a monoacylphosphine oxide compound (Component B-2).

Furthermore, the colored ink composition preferably comprises at least a bisacylphosphine oxide compound (Component B-1) as Component B. It is preferable for the colored ink composition to comprise Component B-1 since the excellent curability can be obtained even if a small amount is added.

In addition, compared with a monoacylphosphine oxide compound, a bisacylphosphine oxide compound can improve ink sensitivity with a low amount thereof added, but from the viewpoint of a printed material being colored yellow it is not suitable for a clear ink. Because of this, for an ink having high saturation such as a clear ink or a white ink, it is not desirable to add a bisacylphosphine oxide compound from the viewpoint of yellow coloration. On the other hand, in a color ink for which yellowing of an image is not conspicuous a bisacylphosphine oxide compound can be added from the viewpoint of ensuring sensitivity, but if the amount thereof added is large since there is the possibility of yellow coloration, it cannot be used on its own. It is therefore preferable to use it in combination with a monoacylphosphine oxide compound, which is a high sensitivity initiator causing less yellow coloration than a bisacylphosphine oxide compound.

In the colored ink composition, when the total amount of radical polymerization initiator is 100 parts by mass, the total amount of Component B-1 and Component B-2 is preferably at least 20 parts by mass, more preferably at least 25 parts by mass, and yet more preferably at least 30 parts by mass.

The total content of Component B-1 and Component B-2 in the colored ink composition is preferably 0.1 to 20 mass% relative to the total mass of the colored ink composition, and more preferably 1 to 15 mass%.

Furthermore, in the present invention, the clear ink composition (C1) and the clear ink composition (C2) preferably comprise a monoacylphosphine oxide compound (Component B-2) as Component B2 and Component B3.

It is preferable for the clear ink composition to comprise Component B-2 as Component B2 and Component B3 since yellowing of the image is suppressed and excellent curability is obtained.

In the clear ink composition, when the total amount of radical polymerization initiator is 100 parts by mass, it is preferable for it to comprise at least 50 parts by mass of the monoacylphosphine oxide compound, more preferably 60 to 100 parts by mass, yet more preferably 70 to 100 parts by mass, and particularly preferably substantially 100 parts by mass.

The content of Component B-2 of the clear ink composition (C1) is preferably 1 to 20 mass% relative to the total mass of the clear ink composition (C1), and more preferably 5 to 15 mass%.

The content of Component B-2 of the clear ink composition (C2) is preferably 5 to 25 mass% relative to the total mass of the ink composition (C2), and more preferably 10 to 20 mass%.

### (Component B-3) Thioxanthone compound and/or thiochromanone compound

The ink composition used in the present invention preferably comprises (Component B-3) a thioxanthone compound and/or a thiochromanone compound. In particular, from the viewpoint of curability, the colored ink composition and the clear ink composition preferably comprise Component B-3.

In the colored ink composition, the amount of Component B-3 is preferably 10 to 50 parts by mass when the total amount of the radical polymerization initiator is 100 parts by mass, and more preferably 20 to 40 parts by mass.

The content of Component B-3 in the colored ink composition is preferably 0.1 to 10 mass% relative to the total mass of the colored ink composition, and more preferably 0.5 to 5 mass%.

In the clear ink composition, the content of Component B-3 is preferably 0 to 1 parts by mass when the total amount of the radical polymerization initiator is 100 parts by mass, and more preferably 0 to 0.5 parts by mass.

In the clear ink composition, the content of Component B-2 is preferably 0 to 5 mass% relative to the total mass of the clear ink composition, and more preferably 0.1 to 1 mass%.

### <Thioxanthone compound>

The thioxanthone compound is preferably a compound represented by Formula (b-3-1). 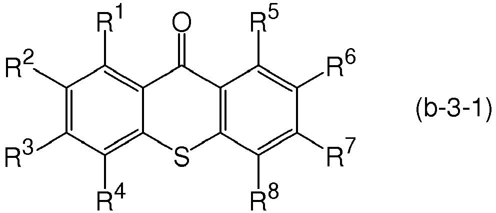 (In Formula (b-3-1), R¹ to R⁸ independently denote a hydrogen atom, an alkyl group, a halogen atom, a hydroxy group, a cyano group, a nitro group, an amino group, an alkylthio group, an alkylamino group (The alkylamino group includes the case of monoalkylsubstituted amino group and dialkylsubstituted amino group.), an alkoxy group, an alkoxycarbonyl group, an acyloxy group, an acyl group, a carboxy group, or a sulfo group.)

The number of carbon atoms of an alkyl moiety in the alkyl group, alkylthio group, alkylamino group, alkoxy group, alkoxycarbonyl group, acyloxy group, and acyl group is preferably 1 to 20, more preferably 1 to 8, and yet more preferably 1 to 4.

Two of R¹ to R⁸ that are adjacent may be joined to each other to form a ring. When they form a ring, examples of the ring structure include a 5- or 6-membered aliphatic or aromatic ring; it may be a heterocyclic ring containing an element other than a carbon atom, and rings thus formed may be further combined to form a bicyclic ring, for example a condensed ring. These ring structures may further have a substituent. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of a heteroatom when the resulting ring structure is a heterocyclic ring include N, O, and S.

Examples of the thioxanthone compound include thioxanthone, 2-isopropylthioxanthone, 4-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1 -dimethoxybenzyl)thioxanthone, 2-morpholinomethylthioxanthone, 2-methyl-6-morpholinomethylthioxanthone, *n-*allylthioxanthone-3,4-dicarboximide, *n*-octylthioxanthone-3,4-dicarboxyimide, *N-*(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9*H-*thioxanthon-2-yloxy)-*N,N,N-*trimethyl-1-propanaminium chloride.

Among them, from the viewpoint of ready availability and curability, 2,4-diethylthioxanthone, 2-isopropylthioxanthone, and 4-isopropylthioxanthone are more preferable.

### <Thiochromanone compound>

The thiochromanone compound is preferably a compound represented by Formula (b-3-2).

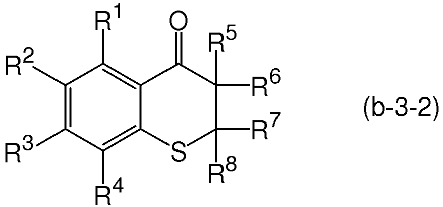

In Formula (b-3-2), R¹, R², R³, R⁴, R⁵, R⁶, R⁷, and R⁸ independently denote a hydrogen atom, an alkyl group, a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, or a sulfo group. The number of carbon atoms of an alkyl moiety of the alkyl group, alkylthio group, alkylamino group, alkoxy group, alkoxycarbonyl group, acyloxy group, and acyl group is preferably 1 to 20, more preferably 1 to 8, and yet more preferably 1 to 4. The acyloxy group may be an aryloxycarbonyl group, and the acyl group may be an arylcarbonyl group. In this case, the number of carbon atoms of an aryl moiety is preferably 6 to 14, and more preferably 6 to 10.

Two of R¹, R², R³, and R⁴ that are adjacent may be bonded to each other, for example condensed, to form a ring.

Examples of the ring structure when those above form a ring include a 5 or 6-membered aliphatic ring or aromatic ring; it may be a heterocyclic ring containing an element other than a carbon atom, and rings thus formed may be further combined to form a bicyclic ring, for example a condensed ring. These ring structures may further have a substituent. Examples of the substituent include those described for Formula (b-3-1). Examples of a heteroatom when the resulting ring structure is a heterocyclic ring include N, O, and S.

Furthermore, the thiochromanone compound is preferably a compound having on the thiochromanone ring structure at least one substituent (an alkyl group, a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, or a sulfo group, etc.). As examples of the substituent above, an alkyl group, a halogen atom, a hydroxy group, an alkylthio group, an alkylamino group, an alkoxy group and an acyloxy group are preferable, an alkyl group having 1 to 20 carbons and a halogen atom are more preferable, and an alkyl group having 1 to 4 carbons and a halogen atom are yet more preferable.

Furthermore, the thiochromanone compound is more preferably a compound having at least one substituent on an aromatic ring and at least one substituent on a thiocyclohexenone ring.

The specific examples of the thiochromanone compound preferably include (I-1) to (I-31) listed below. Among them, (I-14), (I-17) and (I-19) are more preferable, and (I-14) is particularly preferable.

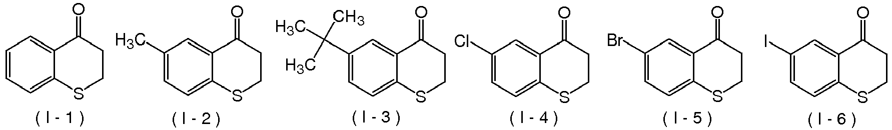

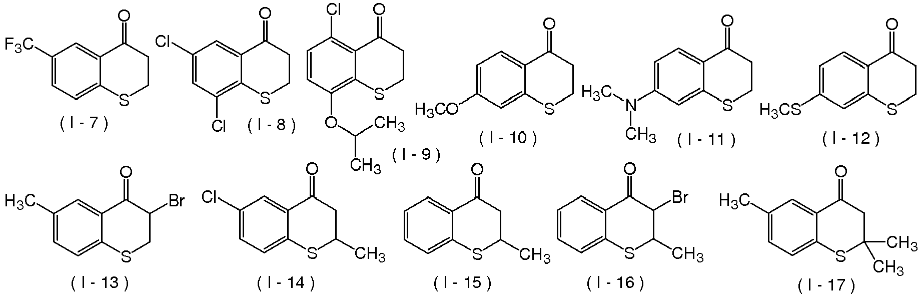

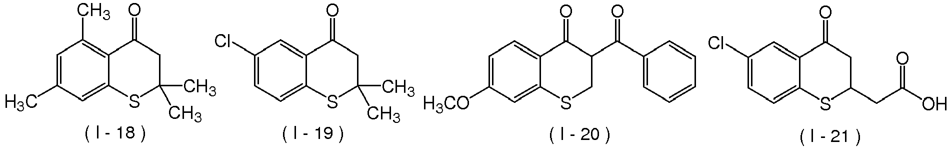

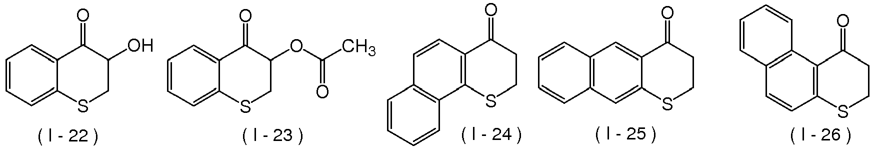

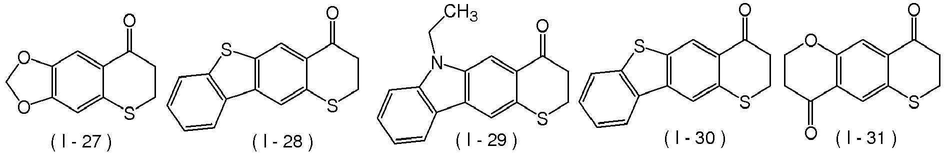

### <Other polymerization initiator>

The ink composition used in the present invention may comprise a polymerization initiator other than Component B-1 to Component B-3. The other polymerization initiator is preferably (Component B-4) an α-aminoalkylphenone compound.

### (Component B-4) α-Aminoalkylphenone compound

The ink composition used in the present invention may comprise (Component B-4) an α-aminoalkylphenone compound. The colored ink composition preferably comprises Component B-4. Component B-4 is preferably a compound represented by Formula (b-4-1).

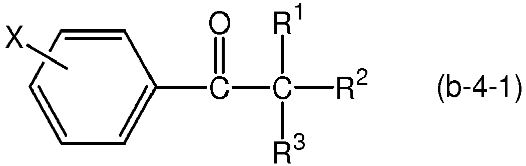

In Formula (b-4-1), R¹, R², and R³ independently denote a hydroxy group, an optionally substituted alkyl group, an optionally substituted alkoxy group, or an optionally substituted amino group, and X denotes a hydrogen atom, an optionally substituted amino group, an optionally substituted alkylthio group, or an optionally substituted alkyl group. When R¹, R², R³, and X is an amino group, the substituents may be bonded to each other to form a heterocyclic group. Examples of the substituent include an alkyl group having 1 to 10 carbons.

As Component B-4, a compound represented by Formula (b-4-2) or (b-4-3) is preferable.

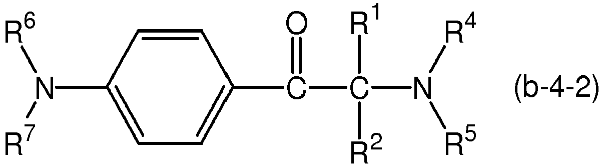

In Formula (b-4-2), R⁴, R⁵, R⁶, and R⁷ independently denote an optionally substituted alkyl group, and at least one of R⁴, R⁵ and R⁶, R⁷ may be bonded to each other to form a heterocyclic group. R¹, R², and the substituent have the same meanings as R¹, R², and the substituent in Formula (b-4-1).

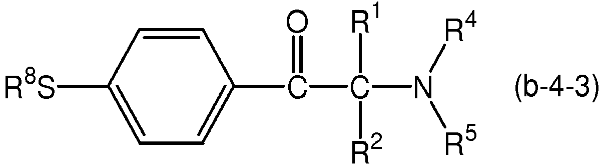

In Formula (b-4-3), R⁸ denotes an optionally substituted alkyl group.

R¹, R² and the substituent have the same meaning as R¹, R² and the substituent in Formula (b-4-1), and R⁴ and R⁵ have the same meaning as R⁴ and R⁵ in Formula (b-4-2).

The heterocyclic group is not particularly limited and may be selected appropriately. For example, a morpholino group is preferable.

Preferred examples of the α-aminoalkylphenone compound include a commercial product such as IRGACURE 369 and IRGACURE 907 manufactured by Ciba Japan.

From the viewpoint of curability, the content of (Component B-4) the α-aminoalkylphenone compound is preferably 0.1 to 15 mass% relative to the ink composition, more preferably 0.5 to 10 mass%, and yet more preferably 1 to 5 mass%.

Examples of the other polymerization initiator include aromatic ketones, aromatic onium salt compounds, organic peroxides, thio compounds, hexaarylbiimidazole compounds, ketoxime ester compounds, borate compounds, azinium compounds, metallocene compounds, active ester compounds, and carbon halogen bond-containing compounds. Details of the above-mentioned polymerization initiators are known to a person skilled in the art, and are described in for example paragraphs 0090 to 0116 of JP-A-2009-185186.

In the colored ink composition, the total amount of the radical polymerization initiator is preferably 0.5 to 30 mass% relative to the total mass of the ink composition, and more preferably 1 to 20 mass%.

The total amount of the radical polymerization initiator in the clear ink composition (C1) is preferably 1 to 20 mass% relative to the total mass of the ink composition, and more preferably 5 to 15 mass%.

The total amount of the radical polymerization initiator in the clear ink composition (C2) is preferably 5 to 25 mass% relative to the total mass of the ink composition, and more preferably 10 to 20 mass%.

### (Component D) Colorant

The colored ink composition used in the present invention comprises (Component D) a colorant corresponding to each color. The clear ink comprises substantially no colorant, but a colorant may be used in some cases in order to improve a slight yellowing of the clear ink. In such cases, the content of the colorant in the clear ink is no greater than 1 mass%.

The colorant that can be used in the present invention is not particularly limited, and various known pigments and dyes may be selected appropriately according to an intended application. Among them, as a colorant, a pigment is preferable particularly from the viewpoint of excellent light fastness.

Pigments that are preferably used in the present invention are now described.

With regard to the pigments, there is no particular limitation, and any generally commercially available organic pigment and inorganic pigment, resin particles dyed with a dye, etc. may be used. Furthermore, a commercial pigment dispersion or a surface-treated pigment such as, for example, a dispersion of a pigment in an insoluble resin, etc. as a dispersion medium or a pigment having a resin grafted on the surface, etc. may be used as long as the effects of the present invention are not impaired.

Examples of these pigments include pigments described in, for example, 'Ganryo no Jiten (Pigment Dictionary)', Ed. by Seishiro Ito (2000), W. Herbst, K. Hunger, Industrial Organic Pigments, JP-A-2002-12607, JP-A-2002-188025, JP-A-2003-26978, and JP-A-2003-342503.

Specific examples of the organic pigment and the inorganic pigment that can be used in the present invention include, as those exhibiting a yellow color, monoazo pigments such as C.I. Pigment Yellow 1 (Fast Yellow G, etc.) and C.I. Pigment Yellow 74, disazo pigments such as C.I. Pigment Yellow 12 (Disazo Yellow AAA, etc.) and C.I. Pigment Yellow 17, benzidine-free azo pigments such as C.I. Pigment Yellow 180, azo lake pigments such as C.I. Pigment Yellow 100 (Tartrazine Yellow Lake, etc.), condensed azo pigments such as C.I. Pigment Yellow 95 (Azo Condensation Yellow GR, etc.), acidic dye lake pigments such as C.I. Pigment Yellow 115 (Quinoline Yellow Lake, etc.), benzimidazolone pigments such as and C.I. Pigment Yellow 120 (Novoperm Yellow 2HG), basic dye lake pigments such as C.I. Pigment Yellow 18 (Thioflavine Lake, etc.), anthraquinone pigments such as Flavanthrone Yellow (Y-24), isoindolinone pigments such as Isoindolinone Yellow 3RLT (Y-110), quinophthalone pigments such as Quinophthalone Yellow (Y-138), isoindoline pigments such as Isoindoline Yellow (Y-139), nitroso pigments such as C.I. Pigment Yellow 153 (Nickel Nitroso Yellow, etc.), and metal complex azomethine pigments such as C.I. Pigment Yellow 117 (Copper Azomethine Yellow, etc.).

Examples of pigments exhibiting a red or magenta color include monoazo pigments such as C.I. Pigment Red 3 (Toluidine Red, etc.), disazo pigments such as C.I. Pigment Red 38 (Pyrazolone Red B, etc.), azo lake pigments such as C.I. Pigment Red 53:1 (Lake Red C, etc.) and C.I. Pigment Red 57:1 (Brilliant Carmine 6B), condensed azo pigments such as C.I. Pigment Red 144 (Azo Condensation Red BR, etc.), acidic dye lake pigments such as C.I. Pigment Red 174 (Phloxine B Lake, etc.), basic dye lake pigments such as C.I. Pigment Red 81 (Rhodamine 6G' Lake, etc.), anthraquinone pigments such as C.I. Pigment Red 177 (Dianthraquinonyl Red, etc.), thioindigo pigments such as C.I. Pigment Red 88 (Thioindigo Bordeaux, etc.), perinone pigments such as C.I. Pigment Red 194 (Perinone Red, etc.), perylene pigments such as C.I. Pigment Red 149 (Perylene Scarlet, etc.), quinacridone pigments such as C.I. Pigment violet 19 (unsubstituted quinacridone, CINQUASIA Magenta RT-355T; manufactured by Ciba Japan) and C.I. Pigment Red 122 (Quinacridone Magenta, etc.), isoindolinone pigments such as C.I. Pigment Red 180 (Isoindolinone Red 2BLT, etc.), and alizarin lake pigments such as C.I. Pigment Red 83 (Madder Lake, etc.).

Examples of pigments exhibiting a blue or cyan color include disazo pigments such as C.I. Pigment Blue 25 (Dianisidine Blue, etc.), phthalocyanine pigments such as C.I. Pigment Blue 15 (Phthalocyanine Blue, etc.) and C.I. Pigment Blue 15:3 (IRGALITE BLUE GLVO; manufactured by Ciba Japan), acidic dye lake pigments such as C.I. Pigment Blue 24 (Peacock Blue Lake, etc.), basic dye lake pigments such as C.I. Pigment Blue 1 (Victoria Pure Blue BO Lake, etc.), anthraquinone pigments such as C.I. Pigment Blue 60 (Indanthrone Blue, etc.), and alkali blue pigments such as C.I. Pigment Blue 18 (Alkali Blue V-5:1).

Examples of pigments exhibiting a green color include phthalocyanine pigments such as C.I. Pigment Green 7 (Phthalocyanine Green) and C.I. Pigment Green 36 (Phthalocyanine Green), and azo metal complex pigments such as C.I. Pigment Green 8 (Nitroso Green).

Examples of pigments exhibiting an orange color include isoindoline pigments such as C.I. Pigment Orange 66 (Isoindoline Orange) and anthraquinone pigments such as C.I. Pigment Orange 51 (Dichloropyranthrone Orange).

Examples of pigments exhibiting a black color include carbon black, titanium black, and aniline black.

Specific examples of white pigments that can be used include basic lead carbonate (2PbCO₃Pb(OH)₂, also known as silver white), zinc oxide (ZnO, also known as zinc white), titanium oxide (TiO₂, also known as titanium white), and strontium titanate (SrTiO₃, also known as titan strontium white).

Titanium oxide has, compared with other white pigments, a low specific gravity, a high refractive index, and is chemically and physically stable, and therefore has high hiding power and coloring power as a pigment and, furthermore, has excellent durability toward acids, alkalis, and other environments. It is therefore preferable to use titanium oxide as the white pigment. It is of course possible to use another white pigment (which can be any white pigment, in addition to the white pigments cited above) as necessary.

For dispersion of the colorant, for example, a dispersing machine such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet type jet mill may be used.

For dispersion of the colorant, a dispersant such as a surfactant may be added. Furthermore, when the colorant is added, as a dispersion adjuvant, it is also possible to use a synergist as necessary according to the various types of colorant. The dispersion adjuvant is preferably used at at least 1 part by mass but no greater than 50 parts by mass relative to 100 parts by mass of the colorant.

When a pigment is used, the ink composition used in the present invention preferably comprises a dispersant in order to disperse the pigment in the ink composition in a stable manner. The dispersant for the pigment is preferably a polymeric dispersant. The 'polymeric dispersant' referred to in the present invention means a dispersant having a weight-average molecular weight of at least 1,000.

The content of the dispersant in the ink composition is appropriately selected according to the intended application, but it is preferably 0.05 to 15 mass% relative to the mass of the entire ink composition.

In the colored ink composition, a solvent may be added as a dispersion medium for various components such as the colorant, or the polymerizable compound, which is a low molecular weight component, may be used as a dispersion medium without using a solvent, and since the colored ink composition of the present invention is preferably an actinic radiation curing type liquid and the colored ink composition is cured after being applied on top of a recording medium, it is preferable for it to be solvent-free. This is because, if solvent remains in the cured object formed from the cured ink composition, the solvent resistance is degraded and the VOC (Volatile Organic Compound) problem of residual solvent occurs. From this viewpoint, it is preferable to use the polymerizable compound as a dispersion medium. Among them, it is preferable to select a polymerizable compound having a low viscosity in terms of improvement of dispersion suitability and handling properties of the photocurable composition.

In addition, the colored ink composition and the clear ink (C2) preferably have a content of solvent, including water, of no greater than 5 mass%, more preferably 3 mass%, yet more preferably 1 mass%, and particularly preferably none. However, this does not exclude the colored ink composition and the clear ink (C2) containing a small amount of water as moisture.

Since excellent coloration is achieved by finer particles, it is preferable for the average particle size of the colorant used here to be at least 0.01 µm but no greater than 0.4 µm, and more preferably at least 0.02 µm but no greater than 0.2 µm. In order to make the maximum particle size be no greater than 3 µm, and preferably no greater than 1 µm, it is preferable for the colorant, the dispersant, and the dispersion medium to be selected, and dispersion conditions and filtration conditions to be set. By such control of particle size, clogging of a head nozzle can be suppressed, and the storage stability of the ink composition, and the transparency and curing sensitivity of the ink composition can be maintained. In the present invention, by using the dispersant having excellent dispersibility and stability which is described above, a uniform and stable dispersed substance can be obtained even when a fine particulate colorant is used.

The particle size of the colorant may be measured by a known measurement method. Specifically, it may be measured by a centrifugal sedimentation light transmission method, an X-ray transmission method, a laser diffraction/scattering method, or a dynamic light scattering method. In the present invention, a value obtained by measurement using the laser diffraction/scattering method is employed.

The content of the colorant may be selected appropriately according to the color and the intended application, but from the viewpoint of image density and storage stability, it is preferably 0.5 to 30 mass% relative to the mass of the entire colored ink composition, more preferably 1.0 to 20 mass%, and particularly preferably 2.0 to 10 mass%.

### (Other components)

The ink composition used in the present invention may comprise as necessary, in addition to the above-mentioned components, a surfactant, a polymerization inhibitor, a sensitizer, a co-sensitizer, a UV absorber, an antioxidant, an antifading agent, a conductive salt, a polymer compound, a basic compound, a leveling additive, a matting agent and, for adjusting film physical properties, a polyester resin, polyurethane resin, vinyl resin, acrylic resin, rubber resin, or wax, etc. They are described in JP-A-2009-185186 and may be used in the present invention as well.

### <Surfactant>

In the present invention, the clear ink composition preferably comprises a surfactant. Furthermore, the colored ink composition may comprise a surfactant, however it is preferable for the colored ink composition not to comprise a surfactant.

Examples of the surfactant used in the present invention include the surfactants below. For example, those described in JP-A-62-173463 and JP-A-62-183457 can be cited. Specific examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl allyl ethers, acetylene glycols, and polyoxyethylene/polyoxypropylene block copolymers, and cationic surfactants such as alkylamine salts and quaternary ammonium salts. As the above known surfactants, an organofluoro compound may be used. The organofluoro compound is preferably hydrophobic. Examples of the organofluoro compound include fluorine-based surfactants, oil-like fluorine-based compounds (e.g. fluorine oils), and solid fluorine compound resins (e.g. tetrafluoroethylene resin), and those described in JP-B-57-9053 (8th to 17th columns) and JP-A-62-135826.

The other surfactant used in the present invention is not particularly limited to the surfactants described above, and it may be an additive that, for the concentration added, is capable of reducing the surface tension efficiently.

Preferred examples of the surfactant include a silicone compound. Furthermore, among the silicone compounds, a silicone compound having an ethylenic double bond in the molecule is preferable. Adhesion to an image can be further improved by the use of the polymerizable compound and a silicone compound having an ethylenic double bond in the molecule.

Specific examples of the silicone compound include BYK-300, BYK-302, BYK-306, BYK-307, BYK-310, BYK-315, BYK-320, BYK-322, BYK-323, BYK-325, BYK-330, BYK-331, BYK-333, BYK-337, BYK-344, BYK-370, BYK-375, BYK-377, BYK-UV3500, BYK-UV3510, and BYK-UV3570 manufactured by BYK-Chemie; TEGO-Rad 2100, TEGO-Rad 2200N, TEGO-Rad 2250, TEGO-Rad 2300, TEGO-Rad 2500, TEGO-Rad 2600, and TEGO-Rad 2700 manufactured by Degussa; and Glanol 100, Glanol 115, Glanol 400, Glanol 410, Glanol 435, Glanol 440, Glanol 450, B-1484, Polyflow ATF-2, KL-600, UCR-L72, and UCR-L93 manufactured by Kyoeisha Chemical Co., Ltd. They may be used singly or as a mixture of a plurality thereof.

The amount of surfactant added is not particularly limited, but from the viewpoint of stable discharge properties and surface tension being in a desired range, it is preferably 0.05 to 5 mass% of the entire ink, more preferably 0.1 to 3 mass%, and particularly preferably 0.3 to 2 mass%.

### <Polymerization inhibitor>

The ink composition used in the present invention preferably comprises a polymerization inhibitor from the viewpoint of improving the storage stability. The polymerization inhibitor may be used singly or in combination of two or more types. However, it is preferable to use two or more types in combination.

When the ink composition is used as an inkjet recording ink composition, it is preferably heated in the range of 25°C to 80°C to thus make it less viscous and then discharged, and in order to prevent clogging of a head due to thermal polymerization it is preferable to add a polymerization inhibitor.

Examples of the polymerization inhibitor include a nitroso-based polymerization inhibitor, a hydroquinone, a benzoquinone, p-methoxyphenol, TEMPO, TEMPOL, Al cupferron, and a hindered amine. Among them, a nitroso-based polymerization inhibitor, a hindered amine-based polymerization inhibitor, and a phenol-based polymerization initiator are preferable. In the colored ink composition, preferable examples of the polymerization inhibitor include a combination of two or more compounds selected from the group consisting of a nitroso-based polymerization inhibitor, a hindered amine-based polymerization inhibitor, and a phenol-based polymerization inhibitor, and a combination of a hindered amine-based polymerization inhibitor and a phenol-based polymerization inhibitor is particularly preferable.

Specific examples of the nitroso-based polymerization inhibitor preferably used in the present invention are shown below, but not limited thereto.

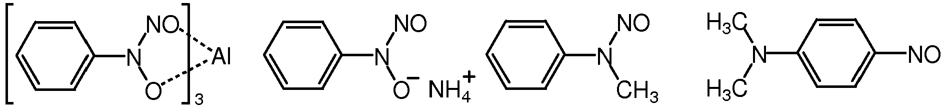

Examples of the nitroso-based polymerization inhibitor include a commercial product such as FIRSTCURE ST-1 manufactured by Chem First. Examples of the hindered amine-based polymerization inhibitor include a commercial product such as TINUVIN292, TINUVIN770DF, TINUVIN765, and TINUVIN123. Examples of the phenol-based polymerization inhibitor include a commercial product such as MEHQ (4-methoxyphenol).

The content of the polymerization inhibitor in the ink composition of the present invention is preferably in the range of 0.01 to 5 mass% relative to the ink composition, more preferably 0.1 to 4 mass%, yet more preferably 0.5 to 4 mass%. When in the numerical range above, it is possible to suppress polymerization during storage and preparation of the ink composition and prevent clogging of an inkjet head nozzle.

### (Properties of ink)

While taking into consideration dischargeability, the ink composition used in the present invention has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25 °C to 80 °C, and more preferably 25 °C to 50 °C) is preferably 3 to 15 mPa·s, and more preferably 3 to 13 mPa·s. With regard to the ink composition used in the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink droplets have landed can be suppressed, and as a result there is the advantage that the image quality is improved.

The 'viscosity' referred to here is a viscosity determined using a model RE80 viscometer manufactured by Toki Sangyo Co., Ltd.. The model RE80 viscometer is a conical rotor/flat plate system E-type viscometer, and measurement is carried out at a rotational speed of 10 rpm using a rotor code No. 1 rotor. For those having a viscosity of higher than 60 mPa·s, measurement was carried out by changing the rotational speed as necessary to 5 rpm, 2.5 rpm, 1 rpm, 0.5 rpm, etc.

The ink composition used in the present invention preferably has a surface tension at 25°C of 32 to 40 mN/m, and more preferably 35 to 38 mN/m. When in the above-mentioned range, the surface gloss is excellent.

Here, the surface tension is a value measured at 25°C by the Wilhelmy method using a general surface tensiometer (e.g. a CBVP-Z surface tensiometer manufactured by Kyowa Interface Science Co., Ltd., etc.).

In the present invention, the ink set preferably comprises as the colored ink composition at least a yellow ink composition, a magenta ink composition, a cyan ink composition, and a black ink composition, and may further comprise an ink composition of another color.

Specifically, it is preferable for it to further comprise light cyan and light magenta ink compositions. In this case, the colored ink composition comprises a total of six colors, that is, a yellow ink composition, a magenta ink composition, a cyan ink composition, a black ink composition, a light cyan ink composition, and a light magenta ink composition.

The 'dark ink composition' referred to in the present invention means an ink composition for which the content of the colorant exceeds 1 mass % of the entire ink composition. The colorant is not particularly limited; a known colorant may be used, and examples thereof include a pigment and a disperse dye.

The ink set of the present invention may comprise at least one dark ink composition and at least one light ink composition. The dark ink composition and the light ink composition employ colorants of similar colors, the ratio of the colorant concentration of the dark ink composition to the colorant concentration of the light ink composition is preferably dark ink composition:light ink composition = 15:1 to 4:1, more preferably 12:1 to 4:1, and yet more preferably 10:1 to 4.5:1. When the ratio is in the above-mentioned range, a vivid full color image with little feeling of grain can be obtained.

Furthermore, the ink set of the present invention may comprise a white ink composition. The white ink composition is a ink composition which comprises a white pigment.

As described above, the white ink composition may be used as the white layer 18 of FIG. 1 or may be used as an colored ink composition forming an image layer. It is preferable to use the white ink composition for forming the white layer. When the white ink composition is used, the printed material formed by the ink set preferably has a 3 layer configuration.

### II. Inkjet recording method

An ink set for multiple layer formation that is a preferred embodiment of the actinic radiation-curing type ink set of the present invention may be used in order to form two layers, that is, an image layer and a clear ink layer. In addition, in a region where a secondary color is formed using YMCK color ink compositions, the colored inks precisely form an image layer comprising two or more layers.

The inkjet recording method of the present invention comprises an image formation step of carrying out image formation by discharging a colored ink composition and a clear ink layer formation step of forming a clear ink layer by discharging a clear ink composition.

Furthermore, the order of the image formation step and the clear ink layer formation step may be selected appropriately according to the intended image. In the present invention, it is preferable to comprise the image formation step and the clear ink layer formation step in this order. In this case, the clear ink layer is preferably formed above the recording medium and the image layer as a solid image which covers the whole area where the image is formed by the image formation step.

Specifically, in order to obtain the printed material shown in FIG. 1, the recording method comprises the image formation step and the clear layer formation step in this order. The step of forming the white layer 18 above the transparent recording medium 12 is arbitrary.

In the present invention, the ink jet recording method that is particularly preferably used comprises a scanning step of reciprocatingly moving in a first direction relative to a recording medium an ink jet head comprising a plurality of nozzle arrays comprising a first nozzle array having a plurality of nozzles arranged for discharging a colored ink composition and a second nozzle array having a plurality of nozzles arranged for discharging a clear ink composition (C1), a relative movement step of moving the recording medium relative to the ink jet head in a second direction that is not parallel to the first direction, a discharge control step of dividing the nozzle arrays (first nozzle array and second nozzle array) into a plurality of regions in the second direction and controlling ink discharge of the ink jet head for each of the divided nozzle region units, and an actinic radiation irradiation step of carrying out irradiation with actinic radiation of ink that has been discharged from the ink jet head in the discharge control step and is attached to the recording medium, the actinic radiation irradiation step being a step of carrying out said irradiation with actinic radiation by dividing an area that is to be irradiated with actinic radiation into a plurality of regions corresponding to the divided nozzle regions and controlling the amount of light for each of the divided irradiation regions individually for each region.

Furthermore, when the present invention further comprises the clear ink composition (C2), it may preferably be incorporated into the inkjet recording method in the same manner as for C1.

The clear ink layer is formed from the clear ink C1 and/or the clear ink C2. When the clear ink C1 is used, it is preferable to carry out a heating step for evaporating Component S at a time from after the discharge step for C1 (preferably, immediately after it has been discharged and landed on a recording medium) up to the actinic radiation irradiation step.

As a heating method, a known heating method may be used, and examples include a method in which hot air is blown onto the recording medium and a method in which the recording medium is contacted with part of a heated member such as a heated roller or platen.

Furthermore, it is preferable to use an inkjet recording method comprising a step in which the recording medium is heated at 30°C to 80°C at a time from immediately after the discharge of ink in the clear ink layer formation step up to curing (fixation) of the landed ink by means of an actinic radiation light source (curing light source). It is surmised that this causes Component S in the clear ink (C1) layer to evaporate, the film thickness of the clear ink (C1) layer decreases, the curing sensitivity improves, and the blocking resistance also improves. The heating temperature is more preferably 30°C to 60°C, and yet more preferably 40°C to 50°C. It is preferable for the heating temperature to be in the above range, since swell and contract of a substrate can be prevented, clogging of a head nozzle can be suppressed, and stickiness of image surface can be suppressed.

Moreover, the printed material of the present invention is preferably a printed material recorded by the inkjet recording method of the present invention.

An inkjet recording method is explained in detail below by reference to drawings.

### (Overall configuration of inkjet recording equipment)

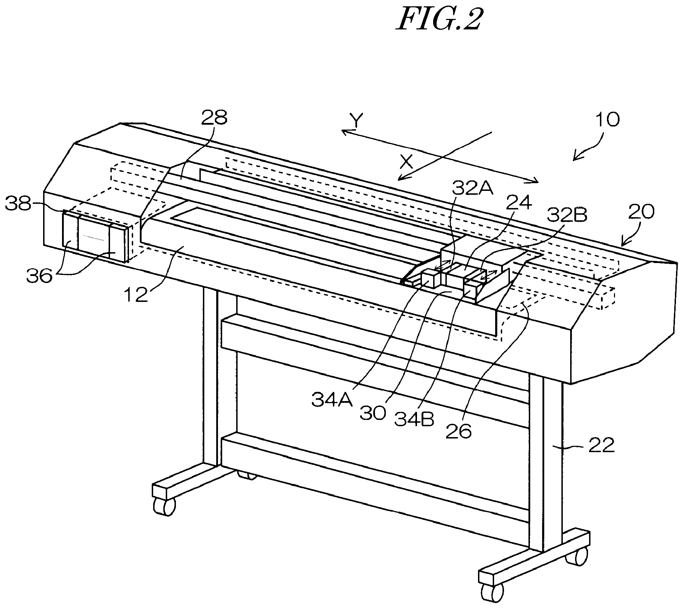

FIG. 2 is an external perspective view showing one example of ink jet recording equipment suitably used in the present invention. This ink jet recording equipment 10 is a wide format printer that forms a color image above a recording medium 12 using a UV curing type ink (UV curable ink). The wide format printer is equipment that is suitable for recording on a wide printing region such as for a large size poster or a commercial wall advertisement. Here, one corresponding to A3+ or greater is called 'wide format'.

The ink jet recording equipment 10 comprises a main body 20 and support legs 22 for supporting the main body 20. The main body 20 is provided with a drop-on-demand type ink jet head 24 for discharging an ink toward a recording medium (media) 12, a platen 26 for supporting the recording medium 12, and a guide mechanism 28 and a carriage 30 as head movement means (scanning means).

The guide mechanism 28 is disposed above the platen 26 so as to extend perpendicular to the transport direction (X direction) of the recording medium 12 and along the scanning direction (Y direction), which is parallel to a medium support face of the platen 26. The carriage 30 is supported so that it can move reciprocatingly in the Y direction along the guide mechanism 28. The carriage 30 is equipped with the ink jet head 24, provisional curing light sources (pinning light sources) 32A and 32B for irradiating the ink above the recording medium 12 with UV, and main curing light sources (curing light sources) 34A and 34B.

The provisional curing light sources 32A and 32B are light sources for emitting UV for preliminary curing of an ink to a degree such that adjacent droplets do not coalesce after ink droplets discharged from the ink jet head 24 land on the recording medium 12. The main curing light sources 34A and 34B are light sources for emitting UV for carrying out additional exposure after preliminary curing and finally completely curing the ink (main curing). Although details are described later, either one or both of the main curing light sources 34A and 34B are configured so as to be movable in the X direction so as to be aligned in the Y direction with the ink jet head 24 and the provisional curing light sources 32A and 32B.

The ink jet head 24, the provisional curing light sources 32A and 32B, and the main curing light sources 34A and 34B disposed on the carriage 30 move integrally (together) with the carriage 30 along the guide mechanism 28. The reciprocating movement direction (Y direction) of the carriage 30 can be called a 'main scanning direction' and the transport direction (X direction) of the recording medium 12 can be called a 'sub scanning direction'. The Y direction corresponds to the 'first direction' and the X direction corresponds to the 'second direction'.

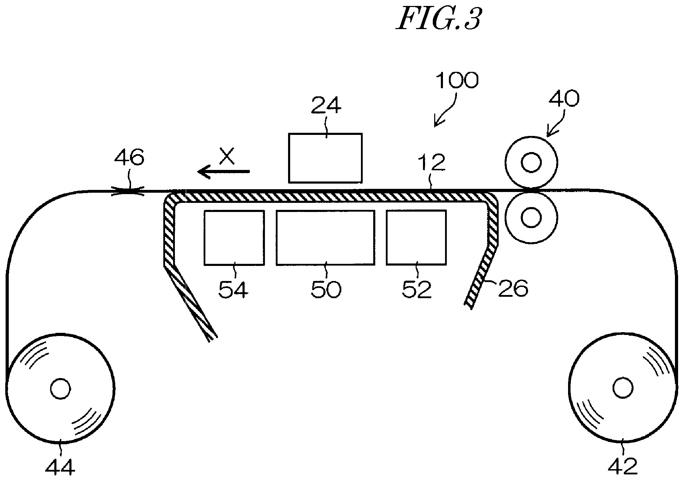

As the recording medium 12, various media such as paper, nonwoven fabric, vinyl chloride, synthetic chemical fiber, polyethylene, polyester, and tarpaulin may be used, regardless of material or permeability. The recording medium 12 is fed from the back side of the equipment in a rolled state (see FIG. 3) and wound up by a wind-up roller (not illustrated in FIG. 2, reference number 44 in FIG. 3). Ink droplets are discharged from the ink jet head 24 onto the recording medium 12 transported on the platen 26, and the ink droplets attached to the recording medium 12 are irradiated with UV from the provisional curing light sources 32A and 32B and the main curing light sources 34A and 34B.

In FIG. 2, a mounting section 38 for an ink cartridge 36 is provided on the left-hand side of the front face of the main body 20. The ink cartridge 36 is a replaceable ink supply source (ink tank) storing a UV curing type ink. The ink cartridges 36 are provided so as to correspond to each color ink used in the ink jet recording equipment 10 of the present example. Each ink cartridge 36 for the respective color is connected to the ink jet head 24 via an independently formed ink supply route, which is not illustrated. When the amount of each color ink remaining becomes small, the ink cartridge 36 is replaced.

Furthermore, although it is not illustrated, a maintenance section for the ink jet head 24 is provided on the right-hand side of the front face of the main body 20. The maintenance section is provided with a cap for preventing the ink jet head 24 from drying out when not printing and a wiping member (blade, web, etc.) for cleaning a nozzle face (ink discharge face) of the ink jet head 24. The cap for capping the nozzle face of the ink jet head 24 is provided with an ink receptor for receiving ink droplets discharged from the nozzle for maintenance.

### (Explanation of recording medium transport route)

FIG. 3 is an explanatory view schematically showing a recording medium transport route in the ink jet recording equipment 10. As shown in FIG. 3, the platen 26 is formed in an inverted gutter shape, and its upper face acts as a support face for the recording medium 12 (medium support face). Disposed on the upstream side, in the recording medium transport direction (X direction), in the vicinity of the platen 26 is a pair of nip rollers 40 as recording medium transport means for intermittently transporting the recording medium 12. These nip rollers 40 move the recording medium 12 in the recording medium transport direction on the platen 26.

The recording medium 12, which is fed out from a supply-side roll (feed-out supply roll) 42 constituting medium transport means of a roll-to-roll system, is intermittently transported in the recording medium transport direction by means of the pair of nip rollers 40 provided at the entrance (upstream side in the recording medium transport direction of the platen 26) of a printing section. The recording medium 12 that has arrived at the printing section immediately below the ink jet head 24 is subjected to printing by the ink jet head 24 and wound up by the wind-up roll 44 after printing. A guide 46 for the recording medium 12 is provided on the downstream side in the recording medium transport direction of the printing section.

A temperature control section 50 for controlling the temperature of the recording medium 12 during printing is provided on the reverse face of the platen 26 (the face opposite to the face supporting the recording medium 12) at a position opposite the ink jet head 24 in the printing section. When the recording medium 12 during printing is controlled to have a predetermined temperature, values of physical properties such as viscosity or surface tension of ink droplets that have landed on the recording medium 12 attain desired values, and it becomes possible to obtain a desired dot size. If necessary, a pre-temperature control section 52 may be provided on the upstream side of the temperature control section 50, and a post-temperature control section 54 may be provided on the downstream side of the temperature control section 50.

In the present invention, by using at least one selected from the group consisting of the pre-temperature control section 52, the temperature control section 50, and the post-temperature control section 54, an intended heating temperature can be obtained.

### (Explanation of ink jet head)

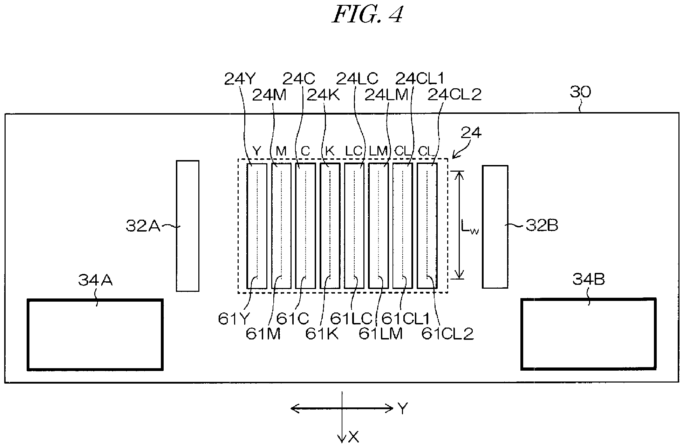

FIG. 4 is a transparent plan view showing an example of the configuration of the ink jet head 24, the provisional curing light sources 32A and 32B, and the main curing light sources 34A and 34B disposed on the carriage 30.

Nozzle arrays 61 Y, 61 M, 61C, 61 K, 61 LC, 61 LM, 61 CL1, and 61 CL2 for discharging inks of each color are provided in the ink jet head 24 for inks of each of yellow (Y), magenta (M), cyan (C), black (K), light cyan (LC), and light magenta (LM) colors, a clear (transparent) (CL1) ink, and a clear (transparent) (CL2) ink. In FIG. 4, the nozzle arrays are illustrated by dotted lines, and individual nozzles are not illustrated. In the explanation below, the nozzle arrays 61 Y, 61 M, 61C, 61 K, 61 LC, 61 LM, 61 CL1, and 61 CL2 might collectively be denoted by reference numeral 61.

The type of ink colors (number of colors) and the combination of colors are not limited to those of the present embodiment. For example, a mode in which LC and LM nozzle arrays are omitted, a mode in which a nozzle array for a white ink is added, a mode in which a nozzle array for a metal ink is added, a mode in which a nozzle array for discharging a special color ink is added, a mode in which a nozzle array for discharging a plurality of clear inks is added etc. are possible. Furthermore, the order for the arrangement of color nozzle arrays is also not restricted. However, a configuration in which an ink having low curing sensitivity toward UV among the plurality of ink types is disposed on the side closer to the provisional curing light source 32A or 32B is preferable.

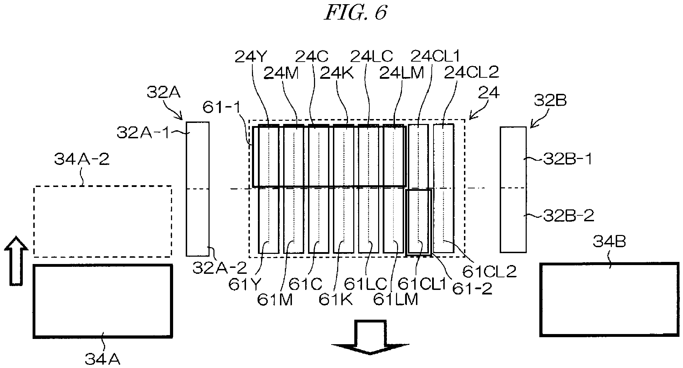

Furthermore, due to the use of a plurality of clear inks (e.g. C1 and C2, etc.), a system that can desirably select and use a high surface gloss mode and a low surface gloss mode can be provided. For example, in a high surface gloss mode in which a color layer is layered as a lower layer and a clear layer is layered as an upper layer, due to the use of heads in parts enclosed by rectangles in FIG. 6, there is division into use of the upstream half of the paper feed as a color head and use of the downstream half of the paper feed for a clear ink, thus giving a desired gloss image. In a state in which the left and right light sources (32A-1, 32B-1) of the color ink head for fixing an image are turned ON, but the left and right light sources (left and right light sources (32A-2, 32B-2) of the clear head 61CL1 of FIG. 6) of 61CL1 for the clear ink C1 are turned OFF and the light sources (34A and 34B in FIG. 6) on the downstream of the paper feed are turned ON, a sufficient amount of ink C1 for achieving high surface gloss is discharged, the solvent is evaporated, and a film with a small film thickness is cured by actinic radiation. It is surmised that this enables an ink image having high surface gloss and excellent blocking resistance and stretchability to be obtained. On the other hand, in a low surface gloss mode, the clear ink C2 is used, and by curing the ink C2 immediately after landing with actinic radiation in a state in which the left and right light sources (32A-2, 32B-2) of the clear head 61CL2 of FIG. 6 are turned ON, an ink image having low surface gloss is preferably obtained.

It is key that the amount of clear ink discharged in order to obtain a high surface gloss image is an amount sufficient for the clear ink to sufficiently spread while wet and then be cured. The time from firing of an ink droplet to exposure to actinic radiation also varies according to the width or resolution of the output image. Because of this, when the maximum amount of clear ink discharged, which is determined by head frequency, discharge amount, resolution, whether printing is monodirectional or bidirectional, etc., is defined as 100, it is necessary to adjust the amount of clear ink discharged that is necessary for obtaining a high surface gloss as appropriate (determining limits for the amount of clear ink liquid). In order to obtain sufficient smoothness, it is preferable to increase the amount of ink, but the film thickness of the clear ink becomes large and unevenness might be caused during curing. On the other hand, when the amount of ink is small, sufficient spreading while wet cannot be ensured, and dots are easily formed. It is necessary to determine appropriate limits for the amount of clear ink for each of the conditions while adjusting the balance of the above requirements. Although it is preferable for droplets of the clear ink C1 and the clear ink C2 to be fired onto an upper layer of a color layer (image area), droplets may be fired directly onto a recording medium (non-image area). The clear ink C1 and the clear ink C2 may be fired at the same time.

It is possible to form a head module for the nozzle array 61 of each color and form an ink jet head 24 that can carry out color drawing by arranging the head modules. For example, a mode in which a head module 24Y having the nozzle array 61 Y for discharging a yellow ink, a head module 24M having the nozzle array 61 M for discharging a magenta ink, a head module 24C having the nozzle array 61C for discharging a cyan ink, a head module 24K having the nozzle array 61 K for discharging a black ink, and head modules 24LC, 24LM, 24CL1, and 24CL2 having the nozzle arrays 61 LC, 61 LM, 61 CL1, and 61 CL2 for discharging the respective LC, LM, CL1, and CL2 inks are disposed and arranged at equal intervals along the reciprocating movement direction (the main scanning direction, the Y direction) of the carriage 30 is also possible. A module group (head group) comprising the respective color head modules 24Y, 24M, 24C, 24K, 24LC, 24LM, 24CL1, and 24CL2 may be interpreted as being the 'ink jet head', or each module may be interpreted as being the 'ink jet head'. Alternatively, a configuration in which ink flow paths for the respective colors are separately formed in the interior of one ink jet head 24 and said one head comprises a nozzle array for discharging inks of a plurality of colors is also possible.

In each nozzle array 61, a plurality of nozzles are arranged at fixed intervals in one line (in a straight line) along the recording medium transport direction (the sub scanning direction, the X direction). In the ink jet head 24 of this example, the arrangement pitch (nozzle pitch) of nozzles forming each nozzle array 61 is 254 µm (100 dpi), the number of nozzles forming one line nozzle array 61 is 256 nozzles, and the overall length Lw of the nozzle array 61 (nozzle array overall length) is about 65 mm (254 µm x 255 = 64.8 mm). Furthermore, the discharge frequency is 15 kHz, and the droplet quantity discharged can be adjusted to three levels, that is, 10 pL, 20 pL, and 30 pL, by changing the drive waveform.

As an ink discharge method for the ink jet head 24, a method (piezo jet method) in which ink droplets are fired by deformation of a piezoelectric element (piezo actuator) is employed. As a discharge energy-generation device, as well as a mode in which an electrostatic actuator is used (electrostatic actuator method), a mode in which a bubble is generated by heating an ink using a heating body (heating device) such as a heater and an ink droplet is fired by the pressure obtained (thermal jet method) may be employed. Since a UV curing type ink usually has high viscosity compared with a solvent ink, when a UV curing type ink is used it is preferable to employ the piezo jet method, which has a relatively large discharge force.

### (Drawing mode)

The ink jet recording equipment 10 shown in the present example employs drawing control by the multipass method and can change printing resolution by changing the number of printing passes. For example, three types of drawing modes, that is, high productivity mode, standard mode, and high image quality mode, are prepared, and the printing resolution is varied for each mode. The drawing mode can be selected according to the purpose of printing or the intended application.

In the high productivity mode, printing is carried out with a resolution of 600 dpi (main scanning direction) x 400 dpi (sub scanning direction). In the case of the high productivity mode, a resolution of 600 dpi is achieved in the main scanning direction by 2 passes (two scans). In the first scan (outward pass of the carriage 30), dots are formed with a resolution of 300 dpi. In the second scan (return pass), dots are formed at 300 dpi so as to fill in between the dots formed by the first scan (outward pass), thus obtaining a resolution of 600 dpi in the main scanning direction.

On the other hand, with regard to the sub scanning direction, the nozzle pitch is 100 dpi, and dots are formed with a resolution of 100 dpi in the sub scanning direction by one main scan (1 pass). Therefore, a resolution of 400 dpi is achieved by carrying out gap-filling printing by 4 pass printing (4 scans). The main scanning speed of the carriage 30 in the high productivity mode is 1,270 mm/sec.

In the standard mode, printing is carried out with a resolution of 600 dpi x 800 dpi, and the resolution of 600 dpi x 800 dpi is obtained by 2 pass printing for the main scanning direction and 8 pass printing for the sub scanning.

In the high image quality mode, printing is carried out with a resolution of 1,200 x 1,200 dpi, and the resolution of 1,200 dpi x 1,200 dpi is obtained by 4 pass printing for the main scanning direction and 12 pass printing for the sub scanning.

### <Swath width by shingling scanning>

In the drawing mode of wide format equipment, drawing conditions for shingling (interlacing) are determined for each of the set resolutions. Specifically, since shingling drawing is carried out by dividing the width Lw (nozzle array length) of a discharge nozzle array of an ink jet head by the number of passes (times of repetition of scanning), the swath width varies depending on the nozzle array width of the ink jet head and the number of passes (number of divisions for interlacing) in the main scanning direction and the sub scanning direction. Details of shingling drawing by a multipass method are explained in for example JP-A-2004-306617.

As one example, the relationship between the swath width and the number of passes in shingling drawing when a QS-10 head (100 dpi, 256 nozzles) manufactured by a FUJIFILM Dimatix is as in the Table below (Table 1). The swath width that is expected by drawing is the value obtained by dividing the nozzle array width by the product of the number of passes in the main scanning direction and the number of passes in the sub scanning direction.

**Table 1**

| | | | | |
|---|---|---|---|---|
| Width of nozzle array used (mm) | 64.8 | 64.8 | 64.8 | 64.8 |
| Number of main passes | 1 | 1 | 2 | 2 |
| Number of sub passes | 2 | 4 | 2 | 4 |
| Swath width (mm) | 32.4 | 16.2 | 16.2 | 8.1 |

### (Configuration of UV irradiation section)

As shown in FIG. 4, the provisional curing light sources 32A and 32B are disposed on left and right sides of the ink jet head 24 in the carriage movement direction (Y direction). Furthermore, the main curing light sources 34A and 34B are disposed on the downstream side, in the recording medium transport direction (X direction), of the ink jet head 24. The main curing light sources 34A and 34B are disposed further outside (position further away) than the provisional curing light sources 32A and 32B in the Y direction from the ink jet head 24. The main curing light sources 34A and 34B are configured so that they can move in a direction (-X direction) opposite to the recording medium transport direction, and their positions can be changed so as to be aligned with the provisional curing light sources 32A and 32B and the ink jet head 24 along the carriage movement direction.

A color ink droplet that has been discharged from a nozzle (nozzle contained in the nozzle array 61 Y, 61 M, 61C, 61 K, 61 LC, or 61 LM) for a colored ink composition (color ink) of the ink jet head 24 and has landed on the recording medium 12 is irradiated with UV for preliminary curing by means of the provisional curing light source 32A (or 32B) that passes thereabove immediately thereafter.

Furthermore, an ink droplet on the recording medium 12 that has passed through the printing region of the ink jet head 24 accompanying intermittent transport of the recording medium 12 is irradiated by UV for main curing by means of the main curing light sources 34A and 34B.

When the banding phenomenon of a clear ink layer is examined in detail, the color ink requires pinning light in order to fix the position of the fired droplet, but since the clear ink layer forms a high gloss surface layer in the case of the clear ink C1, there is little necessity for pinning a droplet at the fired position. Instead, it is preferable that when forming a clear ink (C1) layer, the amount of pinning light corresponding to the discharge position for the clear ink (C1) is set to OFF (0 mJ/cm²) or the amount of irradiation light is decreased so that landed droplets are not pinned, and the ink is made to spread easily while wet, thus achieving planarization and uniformization of the layer.

On the other hand, when low surface gloss is required, pinning is carried out immediately after a droplet has landed, thus preventing the ink from spreading while wet and increasing the roughness of the clear ink. When low surface gloss is obtained, the clear ink C2 is more suitable than the clear ink C1, and it is preferable to irradiate with pinning light.

Furthermore, in the present example, the clear ink that has been discharged from the nozzle for a clear ink (the nozzle contained in the nozzle arrays 61CL1 and 61 CL2) and has landed on the recording medium is irradiated with substantially the same amount of UV as that for the main curing treatment by means of the main curing light source 34A that has been moved to a position where UV irradiation corresponding to the position where the clear ink is discharged is possible.

The provisional curing light sources 32A and 32B may be switched on at the same time during printing by the ink jet head 24, but the lifespan of the light sources can be increased by switching on only the provisional curing light source that is to the rear with respect to movement of the carriage in the main scanning direction. Furthermore, the main curing light sources 34A and 34B are switched on at the same time during printing by the ink jet recording equipment 10. In a drawing mode where the scanning speed is low, one thereof may be switched off, and the timing with which the provisional curing light sources 32A and 32B are made to start emitting light can be the same as or different from the timing with which the main curing light sources 34A and 34B are made to start emitting light.

### (Explanation of movement of main curing light source)

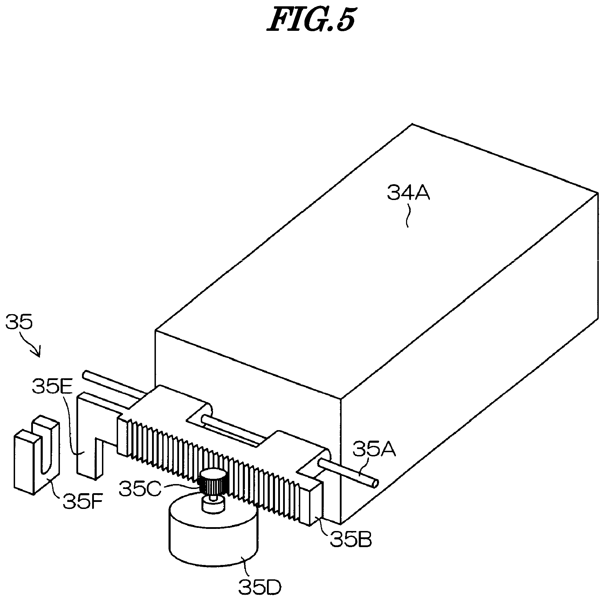

FIG. 5 is a perspective view showing a configuration example of a movement mechanism (light source movement part) 35 for the main curing light source 34A. The light source movement part 35 shown in this figure employs a rack and pinion linear movement mechanism. That is, the light source movement part 35 comprises a shaft 35A that is fixedly disposed along the recording medium transport direction, which is the direction of movement for the main curing light source 34A, a rack 35B that is mounted on a case of the main curing light source 34A and has tooth-shaped asperities along the shaft 35A, a drive motor 35D that has a pinion gear 35C mounted on a rotating shaft, and an optical position sensor 35F for detecting a detection piece 35E formed on an end part of the rack.

When the rotational shaft of the drive motor 35D is rotated, the pinion gear 35C rotates, the rack 35B moves along the shaft 35A due to meshing between the pinion gear 35C and the rack 35B, and the main curing light source 34A moves along the shaft 35A together with the rack 35B. When the detection piece 35E provided at the extremity of the rack 35B enters a detection range of the position sensor 35F, rotation of the drive motor 35D is stopped, and the main curing light source 34A stops at a predetermined position.

A movement mechanism having the same configuration may be provided on the main curing light source 34B positioned on the side opposite to the main curing light source 34A relative to the ink jet head 24 so that it is configured to be movable. Furthermore, the main curing light source 34A may be configured to be movable between a plurality of positions by providing a plurality of the position sensors 35F.

### (Explanation of image formation process)

The ink jet recording equipment 10 shown in the present example is configured so that an image having a multi-layer structure is formed by layering a image layer (illustrated by reference numeral 14 in FIG. 1) formed from a color ink (Y, M, C, K, LC, LM, etc.) and a clear ink layer (illustrated by reference numeral 16 in FIG. 1) formed from a clear ink. The amount of UV irradiation is controlled according to the order of layer formation and UV absorption characteristics (ink curing characteristics).

For example, when a white ink composition is used as an optional component, since the white ink composition contains titanium oxide, zinc oxide, etc. as a pigment, the UV transmittance is poor compared with a color ink and a clear ink, and when the same amount of UV per unit volume as for the color ink or the clear ink is applied, the curing time is long. In order to eliminate any difference in curing characteristics caused by the UV transmission characteristics of the clear ink and the color ink, irradiation with UV is controlled so that the amount of UV irradiation per unit time is larger for the clear ink than for the color ink. A specific example of such image formation is described later.

From the viewpoint of UV transmission, the black ink composition is classified as an ink that requires a longer curing time, but since it is used for formation of an image layer and it is necessary to prevent interference between fired droplets by subjecting it to preliminary curing immediately after firing droplets, it is classified as a color ink.

### <Surface gloss layer (transparent layer)>

The clear ink layer, which serves as an overcoat layer for a color layer (image layer) formed from a color ink, is required to work in both a high surface gloss mode (gloss mode) and a low surface gloss mode (matte mode). A matte mode is relatively easily obtained even with a conventional wide format printer system, in which the clear ink C2 is cured before spreading while wet by means of pinning light immediately after a droplet is fired. When low surface gloss is required, by pinning the clear ink C2 immediately after it has landed, the ink is prevented from spreading while wet, thus increasing the roughness of a clear ink C2 layer. Because of this, when the clear ink C2 is used, it is preferable to irradiate the ink with pinning light immediately after it has landed. On the other hand, in order to achieve high surface gloss, since, unlike the color layer and the clear ink C2 layer, an overcoat layer of the clear ink C1 is not required to have resolution, it is preferable to employ a mechanism in which it is not exposed to pinning light so that an ink droplet after being fired positively spreads while wet to thus promote planarization, or a mechanism in which the action of curing by means of pinning light is suppressed. Therefore, the clear ink C2 layer and a base color layer, which is required to have high resolution and image quality, are cured by pinning immediately after being fired, and for the clear ink C1 layer high surface gloss is achieved by not carrying out pinning exposure immediately after firing or by decreasing the amount of pinning light. In order to form a good (smooth) clear ink surface, which is a surface gloss layer, if a multiple layer image is formed by drawing a plurality of times after rewinding each time, since there is the problem that dust is caught by winding or the position of the base color image is displaced, it is preferable to draw two layers, that is, a color layer and a clear ink layer, at once. In order to realize this, it is preferable to separately provide an inkjet head and a pinning light source on the upstream and the downstream in the recording medium transport direction and control them independently. In addition, since the clear ink C1 is required to have sufficient spreading while wet, the amount thereof discharged via the inkjet head is preferably larger than a normal color ink. Details are described later.

In accordance with an experiment, the color layer and the clear ink C2 layer are preferably irradiated immediately after firing with an amount of pinning light per unit area of 1 mJ/cm² to 20 mJ/cm², and more preferably 2 mJ/cm² to 6 mJ/cm². On the other hand, with regard to the clear ink C1 layer, it is preferable to apply an amount of pinning light of 0 mJ/cm² to 4 mJ/cm² immediately after a droplet is fired, and more preferably 0 mJ/cm² to 2 mJ/cm².

Pinning light is applied once to multiple times by carriage scanning in order to prevent the droplet shape from collapsing due to coalescence or interference with another ink immediately after the droplet is fired or prevent the droplet from moving. Curing light means exposure for completely curing the ink forming an image. Curing light is also applied multiple times by carriage scanning. The total amount of exposure reaches from 200 mJ/cm² up to 1,000 to 3,000 mJ/cm² as a result of one to multiple times of pinning exposure and multiple times of curing exposure. The tendency for ink sensitivity is determined by the sensitivity with respect to irradiation wavelength and the content of the initiator and the sensitizer contained in the UV curing type ink, and the ink is cured by radical polymerization.

In the present embodiment, the provisional curing light source irradiation regions are divided according to the drawing regions of divided nozzle regions forming each layer such as a color (colored ink) layer, a white (white ink) layer, or a transparent (clear ink) layer so that appropriate pinning light can be applied according to the divided nozzle regions, and the amount of light for each region (illumination intensity distribution) is controlled. Details are described later.

### (Detailed explanation of image formation process)

Refer to Fig. 6, with regard to an image formation method that is applied to the ink jet recording equipment 10 shown in the present example, each nozzle array 61 is divided into a plurality of regions in the recording medium transport direction, and a color image layer and a clear ink layer (a transparent layer) are formed by discharging the color ink or the clear ink using any of the divided regions. The number of divisions of the nozzle array 61 is the number N of image formation layers.

Furthermore, the configuration is such that the recording medium 12 is intermittently fed out in one direction in units that are obtained by dividing the length, in the recording medium transport direction, of the divided region of the nozzle array 61 by the number of multiple passes (units determined by (overall length of nozzle array Lw/number N of image formation layers)/number of multiple passes), and a layer of the colored ink discharged from a region on the downstream side in the recording medium transport direction of the nozzle array 61 is layered on a layer of the clear ink discharged from a region on the upstream side in the same direction. Here, the 'number of multiple passes' is defined as the product of the number of passes in the carriage scanning direction and the number of passes in the recording medium transport direction.

In the explanation below, the length of the irradiation area in the recording medium transport direction of the main curing light sources 34A and 34B is considered to be the same as the length in the recording medium transport direction of the main curing light sources 34A and 34B. The actual length in the recording medium transport direction of the main curing light sources 34A and 34B is determined so that a predetermined irradiation area is obtained while taking into consideration spreading of the irradiation area. Moreover, the 'number N of image formation layer' can also be expressed as the 'number of divisions'.

FIG. 6 is an explanatory view schematically showing the configuration of the ink jet head 24 forming an image having the layer structure shown in FIG. 1 and the arrangement of the main curing light sources 34A and 34B. The recording medium transport direction (X direction) is from top to bottom as shown by the downward arrow in the figure, and the reciprocating movement direction (Y direction) for the carriage 30 is the left and right direction.

As shown in FIG. 6, each nozzle array 61 is divided into an upstream side region 61-1 and a downstream side region 61-2, the colored inks are discharged only from the upstream side region 61-1 of the nozzle arrays 61 Y, 61 M, 61C, 61 K, 61 LC, and 61LM, and the clear inks are discharged only from the downstream side region 61-2 of the nozzle array 61CL1. When an image layer 14 (see FIG. 1) is formed from the colored inks discharged from the upstream side region 61-1, the recording medium 12 is moved only by a distance ((Lw/2)/number of multiple passes) in the recording medium transport direction, and a clear ink layer 16 is formed on the previously formed image layer 14 from the clear ink discharged from the downstream side region 61-2.

While the clear ink layer 16 is being formed above the image layer 14, a colored ink is discharged only from the region 61-1, which is on the upstream side of the nozzle array 61 CL1, at a position of discharge of the colored ink that is adjacent to the position of discharge of the clear ink and on the upstream side in the recording medium transport direction. That is, at the same time as formation of the clear ink layer 16, formation of the next color image progresses. Furthermore, the multipass method explained above is applied to discharge of a clear ink for forming the clear ink layer 16 and discharge of a colored ink for forming the image layer 14.

### (Configuration example of provisional curing light source unit)

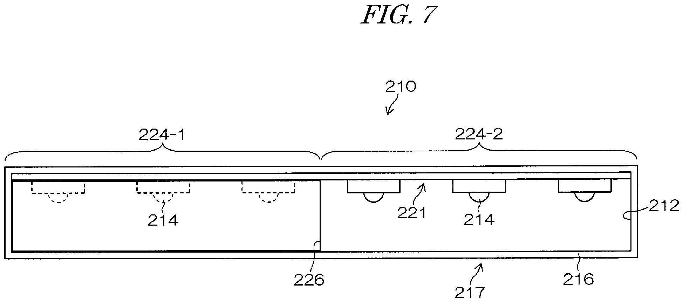

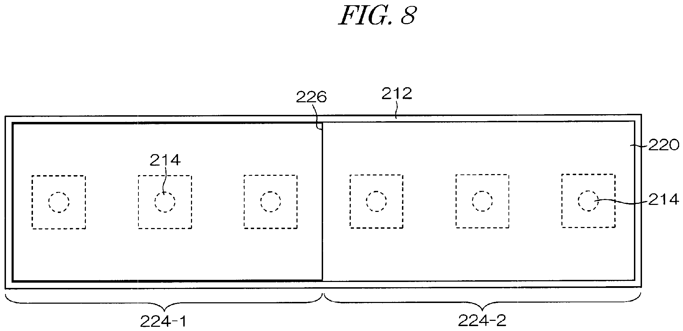

FIG. 7 is a transparent side view showing a configuration example of a provisional curing light source unit that is used as the provisional curing light sources 32A and 32B of the present embodiment. FIG. 8 is a transparent plan view thereof. A provisional curing light source unit 210 related to the configuration example shown in FIG. 7 and FIG. 8 has a substantially rectangular parallelepiped box shape. The provisional curing light source unit 210 has a structure in which a plurality of UV light-emitting diode devices (hereinafter, referred to as 'UV-LED devices') 214 are housed in an aluminum housing 212, and a transparent type light diffuser plate 216 is disposed on a bottom face of the housing 212.

A wiring board 220 on which the UV-LED devices 214 are mounted is disposed in an upper part of the housing 212 in a state in which an LED-mounting face 221 is directed toward the light diffuser plate 216 (a state in which the light-emitting face of the UV-LED devices 214 is directed downward in FIG. 7).

The number of UV-LED devices 214 mounted on the wiring board 220 is not particularly limited, but from the viewpoint of a required UV irradiation width and cost, the smaller the better. In this example, six UV-LED devices 214 are aligned in one line on the wiring board 220. In order to obtain a UV irradiation width that enables UV irradiation to be carried out all at once for the nozzle array width Lw along the recording medium transport direction (X direction) of the ink jet head 24 explained in FIG. 4 and FIG. 6, the six UV-LED devices 214 are aligned in the recording medium transport direction. The lateral direction in FIG. 7 corresponds to the recording medium transport direction (X direction), and the recording medium 12 is transported from right to left in FIG. 7.

The wiring board 220 employs a metal substrate having strengthened heat releasing and heat resistance properties. Although the detailed structure of the metal substrate is not illustrated, an insulation layer is formed above a metal plate such as an aluminum or copper plate, and the UV-LED devices 214 and a LED drive wiring circuit (anode wiring, cathode wiring), etc. are formed above the insulation layer. A metal base substrate in which a circuit is formed above a base metal or a metal core substrate in which a metal plate is embedded within a substrate may be used.

Furthermore, an area, around the UV-LED devices 214, of the LED-mounting face 221 of the wiring board 220 is subjected to a high-reflectance white resist treatment having UV resistance. Due to this white resist layer (not illustrated), UV can be reflected and scattered by the surface of the wiring board 220, and light emitted by the UV-LED devices 214 can be efficiently used in UV irradiation for preliminary curing.

The light diffuser plate 216 is a milky white plate that is formed from an optical material that diffuses light emitted from the UV-LED devices 214 while allowing it to be transmitted. For example, the light diffuser plate 216 employs a white acrylic plate in which a white pigment (light-diffusing material) is dispersed. It is not limited to a white acrylic plate, and an optical member molded by dispersing and mixing light-diffusing microparticles in a transparent material such as glass can also be used. Light diffuser plates having different transmittance or diffusion characteristics can be obtained by changing the content or the average particle size of the light-diffusing material (white pigment, etc.).

Means for diffusing light as a transparent type light diffuser plate is not limited to means in which a silica powder is dispersed in an acrylic resin, and can easily be realized by carrying out a frosting treatment, an opaque glass treatment, a ground glass treatment, etc. of the surface of a substrate formed from fused silica.

Such a transparent type light diffuser plate 216 is disposed in the lower part of the housing 212 so as to face the LED-mounting face 221 of the wiring board 220. In FIG. 7, a lower face (reference numeral 217) of the light diffuser plate 216 is a light-emitting face that opposes the recording medium (not illustrated). When all of the UV-LED devices 214 (six in this example) are switched on, UV is applied to the recording medium 12 from the light-emitting face 217 of the light diffuser plate 216 with a light irradiation width of at least the nozzle array width Lw of the ink jet head 24.

In the provisional curing light source unit 210 of this example, the LED array in which the six UV-LED devices 214 are aligned in the X direction is divided into two. That is, the plurality of UV-LED devices 214 aligned in the X direction are divided into two regions, an upstream side region 224-1 and a downstream side region 224-2 in the recording medium transport direction (X direction), each of the divided regions 224-1 and 224-2 comprising three UV-LED devices 214.

A light-shielding partition member 226 is provided within the housing 212 as an area-restricting member for defining regions of the LED device array that is divided into two, and it has a structure in which light from the UV-LED devices 214 in one region does not enter the other region. In general, UV-LED devices have a wide irradiation area and have the property of propogating while spreading, but as in this example because of the structure in which an area surrounding the LED device is covered by the partition member 226 the irradiation regions can be separated.

It is also possible to control the amount of light emission of the UV-LED devices 214 within the region individually for each of the divided regions 224-1 and 224-2. For example, when a layer is formed using the clear ink, the three UV-LED devices 214 belonging to the upstream side region 224-1 are switched off, and the three UV-LED devices 214 belonging to the downstream side region 224-2 are switched on.

In accordance with the combination of such division of the light-emitting area by the partition member 226 and control of light emission of the UV-LED devices belonging to each region 224-1 or 224-2, the UV irradiation region can be divided, and the amount of light in each of the divided irradiation regions can be controlled individually.

That is, the configuration example shown in FIG. 7 and FIG. 8 is a top irradiation type LED light source unit in which a row of the UV-LED devices are disposed in the upper part of the light source box, and the LED irradiation switch-on region is divided and controlled according to the divided regions of the nozzle array of the ink jet head 24. Examples of control of the amount of light include current value control, pulse width modulation control, and on-off control. The configuration is provided with any of current control means for controlling a current value, pulse width modulation control means for carrying out pulse width modulation control, and on-off control means for carrying out on-off control, or an appropriate combination thereof.

The configuration is not limited to that illustrated in FIG. 7 and FIG. 8; for example, a lower face of the housing 212 can be provided with a high reflectance aluminum plate that defines an irradiation region, and the irradiation region on the upstream side/downstream side can be changed by displacing the aluminum plate. Alternatively, a mode in which the irradiation region is changed by exchanging a frame of the high reflectance aluminum plate is also possible. In this case, since the irradiation area is restricted by the high reflectance aluminum plate, this aluminum plate corresponds to the 'area-restricting member'. Other than the above, a mode in which the irradiation region is restricted by providing a mechanical shutter, a liquid crystal shutter, etc. for limiting the light irradiation area is possible.

### (Specific example)

An image shown in FIG. 1 has two image formation layers; an image layer 14 is formed above a reflective recording medium 12, and a clear ink layer 16 is formed above the image layer 14. For an image having such a structure, the image layer 14 is visible when viewed from a direction V with the reflective recording medium 12 or an optional white layer 18 as a background.

The explanation below is given with reference to FIG. 6. In order to obtain high surface gloss in a high surface gloss mode by overlaying a clear ink layer above an image layer, an image layer is formed by using, as heads used for formation of an image layer, Y, M, C, K, LC, and LM heads on the upstream side and by turning ON lamps of light sources (32A-1 and 32B-1) at opposite sides thereof. Subsequently, as a head used for formation of a clear ink C1 layer, a head 61CL1 on the CL downstream side is used, and the lamps of light sources (32A-2 and 32B-2) on opposite sides thereof are turned OFF, thus ensuring that there is sufficient time for the clear ink C1 to spread while wet so that high surface gloss is realized. Subsequently, light sources 34A and 34B further downstream are turned ON, thus fully curing the colored ink and the clear ink.

On the other hand, in order to obtain a low surface gloss (matte) image by overlaying a clear ink C2 layer above an image layer, a color image is formed by similarly using, as heads for forming an image layer, the Y, M, C, K, LC, and LM heads on the upstream side and by turning the lamps of the light sources (32A-1 and 32B-1) on the opposite sides thereof ON. Subsequently, for formation of a clear ink C2 layer, a head 61 CL2 on the CL downstream side is used, lamps of light sources (32A-2 and 32B-2) on opposite sides thereof are turned ON, and the discharged clear ink C2 is cured before spreading while wet, thus giving an image having low surface gloss with the surface in a rough state. Subsequently, the main curing light sources 34A and 34B further downstream are turned ON, thus fully curing the image.

In general, when the high surface gloss mode and the low surface gloss mode are compared, in the case of the high surface gloss mode, the amount of ink discharged from a head is preferably large, and in the case of the low surface gloss mode, the amount of ink is preferably small. By changing the amount of ink in this way, a desired result is easily obtained.

A step of obtaining an image having high surface gloss is explained below in detail.

Step 1 is a formation step for the image layer 14 in FIG. 1. In FIG. 6, the provisional curing light source on the left-hand side is denoted by 32A, and the main curing light source is denoted by 34A.

First, a carriage 30 is scanned in a carriage movement direction, and a colored ink is discharged onto the recording medium 12 via the upstream side region 61-1, which includes the nozzle arrays 24Y, 24M, 24C, 24K, 24LC, and 24LM. Furthermore, the colored ink immediately after landing on the recording medium 12 is preliminarily cured by irradiation with UV with a low amount of light (1 to 5 mJ/cm² per scan of the carriage) by one carriage scan from the provisional curing light sources 32A-1 and 32B-1 positioned next to the nozzle arrays 24Y, 24M, 24C, 24K, 24LC, and 24LM, thus forming a gel state. By so doing, interference between landed colored ink droplets is prevented.

Subsequently, the recording medium 12 is moved in the recording medium transport direction only by a distance ((Lw/2)/number of multiple passes).

Step 2 is the period from the step of forming the image layer 14 to the step of forming the clear ink layer 16. By maintaining the preliminary cured state for a predetermined time, it is possible to increase the affinity between the recording medium 12 and the image layer 14, promote spreading of dots of the clear ink, promote suppression of pile height and, furthermore, improve the surface gloss of the color image.

Step 3 is the step of forming the clear ink layer 16. At the discharge position for the clear ink (on the already formed image layer 14) on the downstream side by only (Lw/2) from the discharge position for the color ink on the recording medium 12 in the recording medium transport direction, the carriage 30 (see FIG. 4) is scanned in the carriage movement direction, and the clear ink C1 is discharged onto the image layer 14 in the preliminarily cured state only from the downstream side region 61-2 of the nozzle array 61 CL1.

By turning OFF the provisional curing light sources 32B-1 and 32B-2 positioned next to the nozzle array 61 CL1, preliminary curing is prevented, and the clear ink C1 spreads.

Step 4 is the main curing treatment step. The clear ink layer 16 and the color image layer 14 are subjected to a main curing treatment using the main curing light source 34A and 34B disposed on the downstream side in the recording medium transport direction of the ink jet head 24. The amount of UV in such a main curing treatment is 10 mJ/cm² per scan of the carriage. By subjecting the clear ink layer 16 and the image layer 14 to main curing, the surface gloss of the clear image layer 16 is improved, and a balance can be achieved between improvement of the adhesion between the clear ink layer 16 and the image layer 14 and hardening of the film quality of the image layer 14.

Since a step of obtaining an image having low surface gloss is different from the step of obtaining an image having high surface gloss only in terms of the provisional curing light source being ON after discharging the clear ink C2, a detailed explanation thereof is omitted.

The present invention has the advantage that color images having different surface gloss are obtained by carrying out or not carrying out preliminary curing after discharge of a clear ink, preferably using the clear inks C1 and C2.

### (Ink supply system)

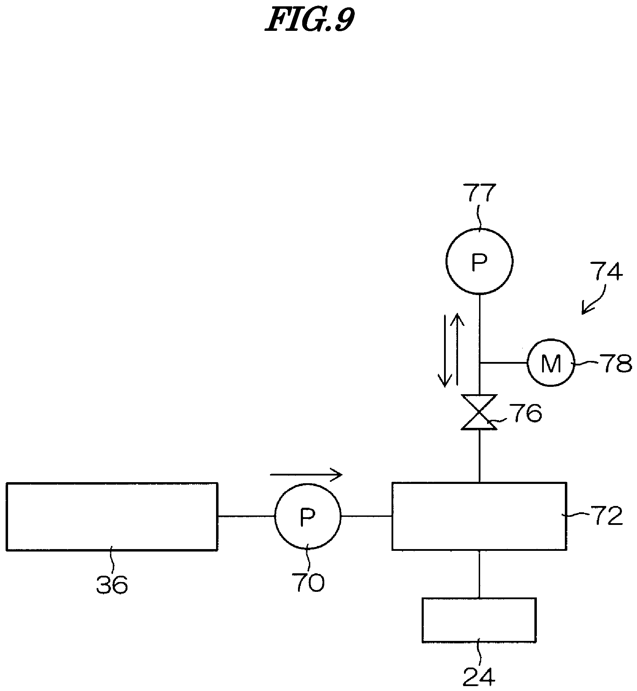

FIG. 9 is a block diagram showing the configuration of an ink supply system for the ink jet recording equipment 10. As shown in the figure, ink stored in the ink cartridge 36 is sucked up by a supply pump 70 and fed to the ink jet head 24 via a subtank 72. The subtank 72 is provided with a pressure-adjusting section 74 for adjusting the pressure of the ink in the interior. The pressure-adjusting section 74 is equipped with a pressurizing/decompressing pump 77 communicating with the subtank 72 via a valve 76, and a pressure gauge 78 provided between the valve 76 and the pressurizing/decompressing pump 77.

When carrying out normal printing, the pressurizing/decompressing pump 77 operates in a direction that sucks up the ink within the subtank 72, and the internal pressure of the subtank 72 and the internal pressure of the ink jet head 24 are maintained negative. When carrying out maintenance of the ink jet head 24, the pressurizing/decompressing pump 77 operates in a direction that pressurizes the ink within the subtank 72, the interior of the subtank 72 and the interior of the ink jet head 24 are forcibly pressurized, and the ink within the ink jet head 24 is discharged via a nozzle. The ink that has been forcibly discharged from the ink jet head 24 is stored in the above-mentioned ink receptor of the cap (not illustrated).

### (Explanation of control system for ink jet recording equipment)

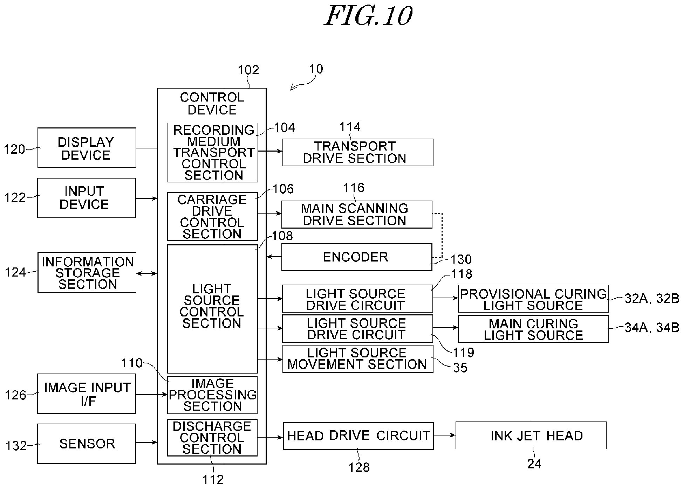

FIG. 10 is a block diagram showing the configuration of the ink jet recording equipment 10. As shown in the figure, the ink jet recording equipment 10 is provided with a control device 102 as control means. As the control device 102, for example, a computer, etc. equipped with a central processing unit (CPU) may be used. The control device 102 functions as a control device for controlling the entire ink jet recording equipment 10 in accordance with a predetermined program and also functions as a processing device for carrying out various types of processing. The control device 102 includes a recording medium transport control section 104, a carriage drive control section 106, a light source control section 108, an image processing section 110, and a discharge control section 112. Each of these sections is realized by a hardware circuit or by software, or a combination thereof.

The recording medium transport control section 104 controls a transport drive section 114 for carrying out transport of the recording medium 12 (see FIG. 2). The transport drive section 114 includes a drive motor for driving the nip rollers 40 shown in FIG. 3 and a drive circuit therefor. The recording medium 12 transported onto the platen 26 (see FIG. 2) is fed intermittently in the sub scanning direction at swath width units according to reciprocating scanning (printing pass movement) in the main scanning direction by the ink jet head 24.

The carriage drive control section 106 shown in FIG. 10 controls a main scanning drive section 116 for moving the carriage 30 (see FIG. 2) in the main scanning direction. The main scanning drive section 116 includes a drive motor linked to a movement mechanism of the carriage 30 and a control circuit therefor. The light source control section 108 is control means for controlling the emission of light from the provisional curing light sources 32A and 32B via a light source drive circuit 118 and for controlling the emission of light from the main curing light sources 34A and 34B via a light source drive circuit 119. As the provisional curing light sources 32A and 32B and the main curing light sources 34A and 34B, UV-LED devices or UV lamps such as metal halide lamps are used.

Connected to the control device 102 are an input device 120 such as an operation panel, and a display device 122. The input device 120 is means for manually inputting an external operation signal into the control device 102, and can employ various forms such as a keyboard, a mouse, a touch panel, and an operation button. As the display device 122, various forms such as a liquid crystal display, an organic EL display, and a CRT may be used. An operator can carry out selection of the drawing mode, input of print conditions, input and editing of auxiliary information, etc. by operating the input device 120 and can check various types of information such as input content and search results by display on the display device 122.

Furthermore, the ink jet recording equipment 10 is provided with an information storage section 124 for storing various types of information and an image input interface 126 for retrieving image data for printing. As the image input interface, a serial interface may be used or a parallel interface may be used. This section may be equipped with a buffer memory (not illustrated) in order to increase the communication speed.

Image data that have been inputted via the image input interface 126 are converted into data for printing (dot data) in the image processing section 110. The dot data are usually formed by subjecting continuous tone image data to color conversion processing and halftone processing. The color conversion processing is processing for converting image data expressed as sRGB, etc. (for example, image data with 8 bits for each color of RGB) into color data of each color ink used in the ink jet recording equipment 10.

The halftone processing is processing for converting the color data of each color formed by the color conversion processing into dot data of each color by processing using an error diffusion method, a threshold matrix, etc. As means for the halftone processing, various types of known means such as an error diffusion method, a dither method, a threshold matrix method, and a density pattern method may be used. The halftone processing usually converts gray-scale image data having a grayscale value of at least 3 into grayscale image data having a grayscale value that is less than the original grayscale value. In the most simple example, the conversion is into dot image data of two values (dot on or off), but in halftone processing it is also possible to carry out multi value quantization corresponding to the type of dot size (e.g. three types, that is, large dot, intermediate dot, and small dot, etc.).

The 2 value or multi value image data (dot data) thus obtained are used as ink discharge data (fired droplet control data) for controlling the drive (ON)/non-drive (OFF) of each nozzle and furthermore the amount of liquid droplet (dot size) in the multi value case.

The discharge control section 112 generates a discharge control signal for a head drive circuit 128 based on the dot data generated in the image processing section 110. Furthermore, the discharge control section 112 comprises a drive waveform generation section, which is not illustrated. The drive waveform generation section is means for generating a drive voltage signal for driving a discharge energy-generating device (a piezo device in this example) corresponding to each nozzle of the ink jet head 24. Waveform data of the drive voltage signal are stored in advance in the information storage section 124, and the waveform data to be used are outputted as necessary. A signal (drive waveform) outputted from the drive waveform generation section is supplied to the head drive circuit 128. The signal outputted from the drive waveform generation section can be digital waveform data or an analogue voltage signal.

By applying a common drive voltage signal to each discharge energy-generating device of the ink jet head 24 via the head drive circuit 128 and on-off switching of a switch device (not illustrated) connected to an individual electrode of each energy-generating device according to the discharge timing of each nozzle, the ink is discharged from the corresponding nozzle.

The information storage section 124 stores a program that is executed by the CPU of the control device 102, and various types of data necessary for control, etc. The information storage section 124 stores set information regarding resolution and the number of passes (the number of repetitions of scanning) according to the drawing mode, information regarding control of the provisional curing light sources 32A and 32B and the main curing light sources 34A and 34B, etc.

An encoder 130 is mounted on the drive motor of the main scanning drive section 116 and the drive motor of the transport drive section 114, and outputs a pulse signal according to the amount of rotation and the rotational speed of the drive motor, and this pulse signal is fed to the control device 102. The position of the carriage 30 and the position of the recording medium 12 are known based on the pulse signal outputted from the encoder 130.

A sensor 132 is mounted on the carriage 30, and the width of the recording medium 12 is known based on a sensor signal from the sensor 132.

The control device 102 controls movement of the light source movement part 35 of the main curing light sources 34A and 34B. For example, when information regarding selection of the image formation process or information regarding the position of the main curing light sources 34A and 34B are inputted from the input device 120, the main curing light source 34A (34B) is moved to a position corresponding to the image formation process.

In accordance with the ink jet recording equipment and the image formation method that have the above-mentioned configuration, since the pinning exposure region can be divided and controlled so as to correspond to the divided regions of the nozzle array, appropriate curing processing can be realized for each ink layer. It is thereby possible to avoid the occurrence of the banding phenomenon in the clear ink layer. That is, by switching off the pinning exposure for the ink discharge region of the clear ink C1 or reducing the amount of light, spreading of the clear ink C1 droplets can be promoted, thus achieving planarization and uniformization of the layer. This enables a situation in which periodic stripes are visible for each swath (occurrence of banding) to be avoided.

Furthermore, in accordance with the present embodiment, for the clear ink C1 for which high gloss is required, the amount of pinning light from the provisional curing light sources 32A and 32B is turned OFF immediately after discharge or a low amount of UV is applied, thus ensuring that there is sufficient time for spreading while wet while being substantially not cured and thereby realizing high smoothness and achieving high surface gloss. Subsequently, a high amount of UV is applied from the main curing light sources 34A and 34B to thus carry out curing, the amount of UV (amount of irradiation energy) is optimized for each ink used for drawing an image, and image formation in which two or more types of inks having different sensitivities are overlaid becomes possible.

Specifically, the colored ink is irradiated with a small amount of UV from the provisional curing light sources 32A and 32B immediately after a droplet is fired (landed on the recording medium) and turned into a preliminarily cured state, and after a dot spreading time has elapsed and the pile height is made uniform, it is irradiated with a large amount of UV from the main curing light source 34B (34A) and turned into a main cured state. It therefore becomes possible to increase the dot gain by taking a dot spreading time between the preliminary curing and the main curing and, furthermore, since time is taken for making the pile height uniform, the graininess of the image improves.

Moreover, since at least one of the main curing light sources 34A and 34B is configured so that it can move in parallel to the recording medium transport direction and can be selectively placed at a discharge position for an ink that has a low sensitivity toward UV and a low curing speed and, moreover, the area irradiated by the main curing light sources 34A and 34B is determined so as to correspond to the discharge area (overall length of nozzle array Lw/number N of image formation layers (number of divisions)) for the ink that has a low sensitivity toward UV and a low curing speed, only the ink that has a low sensitivity toward UV and a low curing speed is selectively irradiated with a large amount of UV, and problems due to difference in curing time between inks can be avoided.

In the present invention, the recording medium is not particularly limited, and a known recording medium may be used. Examples thereof include paper, paper laminated with a plastic (e.g. polyethylene, polypropylene, polystyrene, etc.), a metal plate (e.g. aluminum, zinc, copper, etc.), a plastic film (e.g. polyvinyl chloride (PVC), cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium is preferable, among them, a plastic film and paper are more preferable.

In the present invention, the minimum droplet volume of the nozzle for discharging a colored ink composition is preferably at least 5 pL but less than 20 pL, and the minimum droplet volume of the nozzle for discharging a clear ink composition (C1) is preferably at least 20 pL but no greater than 60 pL.

Furthermore, when comprising the clear ink composition (C2), the minimum droplet volume is preferably at least 20 pL but no greater than 60 pL as is the case with the clear ink composition (C1).

As described above, the clear ink composition forms a base layer or an overcoat layer and is not required to have a high resolution. On the other hand, the colored ink composition forms a color image and is required to have a high resolution. High productivity is obtained by increasing the minimum droplet volume of the nozzle for discharging the clear ink composition compared with the minimum droplet volume of the nozzle for discharging the colored ink composition.

In the present invention, since it is preferable for the ink composition discharged to have a fixed temperature, image formation equipment in which a section from the ink composition supply tank to the ink jet head may be thermally insulated and heated is preferably used. The method for controlling temperature is not particularly limited; for example, it is preferable to carry out control of heating according to the flow rate of the ink composition and the temperature of the environment by providing a plurality of temperature sensors in respective piping sections. A temperature sensor may be provided in the ink composition supply tank and in the vicinity of the nozzle of the ink jet head. Furthermore, it is preferable that the head unit that is to be heated is thermally isolated or insulated so that the main body is not affected by the temperature of the external atmosphere. In order to shorten the printer start up time that is required for heating or in order to reduce the loss of thermal energy, it is preferable to carry out thermal insulation from other portions and decrease the overall thermal capacity of the heating unit.

Since a radiation curing type ink composition such as the ink composition used in the present invention generally has higher viscosity than an aqueous ink composition that is usually used as an ink composition for ink jet recording, there is a large variation in viscosity due to change in temperature at the time of discharge. The variation in viscosity of the ink composition greatly affects change in liquid droplet size and speed of liquid droplet discharge, consequently causing degradation in image quality. It is therefore preferable to maintain a constant temperature for the ink composition at the time of discharge. The control range for the temperature of the ink composition is therefore preferably ±5°C of a set temperature, more preferably ±2°C of the set temperature, and yet more preferably ±1°C of the set temperature.

Since the ink composition used in the present invention has sufficient sensitivity, it cures sufficiently with low output actinic radiation. Specifically, the illumination intensity of the provisional curing light source is preferably in the range of 100 to 800 mW/cm². Furthermore, the illumination intensity of the main curing light source is preferably in the range of 800 to 1,600 mW/cm². When in this range, an image formed has excellent quality and productivity.

Among the ink compositions used in the present invention, the colored ink composition is irradiated with such UV preferably for 0.01 to 2 sec., more preferably 0.01 to 1.5 sec., and yet more preferably 0.01 to 1 sec. Furthermore, the clear ink composition is irradiated with such UV preferably for 0.01 to 2 sec., more preferably 0.1 to 1.5 sec., and yet more preferably 0.3 to 1 sec.

Irradiation with actinic radiation is carried out after a predetermined time has elapsed subsequent to landing of the ink composition (for a colored ink composition, preferably 0.01 to 0.5 sec., more preferably 0.01 to 0.3 sec., and yet more preferably 0.01 to 0.15 sec., and for a clear ink composition, preferably 0.01 to 0.5 sec., more preferably 0.01 to 0.3 sec., and yet more preferably 0.01 to 0.15 sec.).

By controlling the time from landing of the ink composition to irradiation in this way so that it is a very short time, it becomes possible to prevent the ink composition landed on the recording medium from spreading before curing. Furthermore, for a porous recording medium, the ink composition can be exposed before penetrating to a deep part where light can not reach, thus desirably preventing residual unreacted monomer.

### Example

The present invention is explained below more specifically by reference to Examples and Comparative Examples. However, the present invention should not be construed as being limited by these Examples. 'Parts' in the description below means 'parts by mass' and '%' means 'mass%' unless otherwise specified.

### Preparation of yellow mill base

| | |
|---|---|
| Yellow pigment: NOVOPERM YELLOW H2G (Clariant) | 30 parts by mass |
| SR9003 (propoxylated (2) neopentyl glycol diacrylate (compound obtained by diacrylating 2 mole propylene oxide adduct of neopentyl glycol), SARTOMER) | 30 parts by mass |
| BYK168 (dispersant, BYK Chemie) | 40 parts by mass |

The above components were stirred to give a yellow mill base. Preparation of a pigment mill base was carried out by placing them in an M50 disperser motor mill (Eiger Machinery, Inc.) and dispersing using zirconia beads having a diameter of 0.65 mm at a peripheral speed of 9 m/s for 8 hours.

### Preparation of magenta mill base

| | |
|---|---|
| Magenta pigment: CINQUASIA MAGENTA RT-355D (Ciba Japan) | 30 parts by mass |
| SR9003 | 30 parts by mass |
| BYK168 | 40 parts by mass |

The above components were stirred under the same dispersion conditions as for preparation of the yellow mill base, thus giving a magenta mill base.

### Preparation of cyan mill base

| | |
|---|---|
| Cyan pigment: IRGALITE BLUE GLVO (Ciba Japan) | 30 parts by mass |
| SR9003 | 30 parts by mass |
| BYK168 | 40 parts by mass |

The above components were stirred under the same dispersion conditions as for preparation of the yellow mill base, thus giving a cyan mill base.

### Preparation of black mill base

| | |
|---|---|
| Black pigment: SPECIAL BLACK 250 (Ciba Japan) | 30 parts by mass |
| SR9003 | 30 parts by mass |
| BYK168 | 40 parts by mass |

The above components were stirred under the same dispersion conditions as for preparation of the yellow mill base, thus giving a black mill base.

### Examples and Comparative Examples

### Method for preparing ink composition

Each of the ink compositions was obtained by mixing and stirring the materials described in Table 2 to Table 11. The numerical values in the tables denote the amount (parts by mass) of each of the components added.

The components described in Table 2 to Table 11 above were as follows.
NVC: N-vinylcaprolactam (VCAP, ISP)
NVF: N-vinylformamide (Beamset 770, Arakawa Chemical Industries, Ltd.)
CTFA: cyclic trimethylolpropane formal acrylate (SR-531, Sartomer)
PEA: phenoxyethyl acrylate (SR-339, Sartomer)
FA-512: dicyclopentanyloxyethyl acrylate (Hitachi Chemical Co., Ltd.)
THFA: tetrahydrofurfuryl acrylate (SR285, Sartomer)
TMPTA: trimethylolpropane triacrylate (SR351 S, Sartomer)
EOTMPTA: ethoxylated (3) trimethylolpropane triacrylate (SR454, Sartomer)
DPGDA: dipropylene glycol diacrylate (SR508, Sartomer)
SR-833: tricyclodecane dimethanol diacrylate (Sartomer)
NPGPODA: propoxylated (2) neopentyl glycol diacrylate (SR9003, Sartomer)
DVE-3: structure below, product name Rapicure DVE, ISP Japan 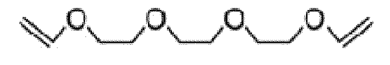
IBOA: isobornyl acrylate (Sartomer)
HDDA: 1,6-hexanediol diacrylate (SR238F, Sartomer)
DPHA: dipentaerythritol hexaacrylate (KAYARAD DPHA, Nippon Kayaku Co., Ltd.) CN964A85: urethane acrylate oligomer (average number of functional groups 2, Sartomer)
CN962: urethane acrylate oligomer (average number of functional groups 2, Sartomer)
Irg369: 2-benzyl-2-dimethylamino-1-(4-morpholinophenyl)butan-1-one (IRGACURE 369, Ciba Japan)
Irg184: 1-hydroxycyclohexyl phenyl ketone (IRGACURE 184, Ciba Japan)
Irg819: bis(2,4,6-trimethylbenzoyl)phenylphosphine oxide (IRGACURE 819, Ciba Japan)
TPO: 2,4,6-trimethylbenzoyldiphenylphosphine oxide (Darocur TPO, Ciba Japan)
ITX: isopropylthioxanthone (Firstcure ITX, Ciba Japan)
UV-12: FLORSTAB UV-12, KromaChem
TINUVIN 770DF: Ciba
MEHQ: 4-methoxyphenol, Tokyo Chemical Industry Co., Ltd.
KF-353: surfactant (modified silicone oil), Shin-Etsu Chemical Co., Ltd.
TEGORAD 2500: surfactant (Evonic Industries Degussa)
TEGORAD 2100: surfactant (Evonic Industries Degussa)
BYK307: surfactant, BYK Chemie
Methanol: boiling point 65°C, Tokyo Chemical Industry Co., Ltd.
Isopropyl alcohol: boiling point 82°C, Tokyo Chemical Industry Co., Ltd.
1-Butyl alcohol: boiling point 118°C, Tokyo Chemical Industry Co., Ltd.
Ethylene glycol monomethyl ether: boiling point 124°C, Tokyo Chemical Industry Co., Ltd.
1-Ethoxy-2-propanol: boiling point 133°C, Tokyo Chemical Industry Co., Ltd.
Diethylene glycol monobutyl ether: boiling point 230°C, Tokyo Chemical Industry Co., Ltd.

### <Inkjet recording method>

An image was printed as follows using an ink set comprising the yellow ink, the magenta ink, the cyan ink, the black ink, and the clear ink described in Tables 2 to 11, and evaluation was carried out.

Droplets of the ink composition obtained were fired onto a sheet of coated paper (OK-TOP, Oji Paper Co., Ltd.) and irradiated by passing under a light beam of a UV light-emitting diode (UV-LED) to thus cure the ink, thereby giving a printed material. In this example, the colored ink and the clear ink were discharged using inkjet recording equipment having a piezo type Q-class Sapphire QS-256/10 inkjet head (FUJIFILM DIMATIX, number of nozzles 256, liquid droplet volume 10 pL, 50 kHz, ink affinity treatment: silicon oxide), and as a light-emitting diode (UV-LED) for curing an NC4U134 manufactured by Nichia Corporation was used. The LED output UV light at a wavelength of 385 nm from 1 chip.

With regard to an image formation method in a high surface gloss mode, due to a clear ink layer (C1) being formed so as to overlay a color layer formed, as shown in FIG. 6 the head and the LED light source were divided so that the upstream side in the direction of transport of the recording medium was a color layer and the downstream side was a clear ink layer. The color layer was exposed such that the illumination intensity on the recording medium surface immediately after landing was fixed at 0.8 W/cm² and the exposure when one lamp was passing thereabove was set at 10 mJ/cm² by changing the transport speed. Furthermore, in the present example, exposure was carried out about 0.5 sec. after landing. The clear ink (C1) layer was cured with the light sources 34A and 34B while substantially not turning ON the light source 32B-2. Exposure was carried out by fixing the illumination intensity on the recording medium surface at 1,200 mW/cm² and setting the exposure at 30 mJ/cm² when one lamp was passing thereabove by changing the transport speed. The temperature control section 50, the pre-temperature control section 52, and post-temperature control section 54 described in FIG. 3 were all set to 55°C.

With regard to an image formation method in a low surface gloss mode, image formation was carried out in the same manner as in the image formation method for the high surface gloss mode except that the clear ink (C1) layer used for the high surface gloss mode was changed to a clear ink (C2) layer, and the light source 32B-2 was turned ON.

Images having a clear ink used in the evaluation below were solid images of yellow (Y), magenta (M), cyan (C), black (K), 3CG (YMC), and 4CG (YMCK) when discharged with a color density setting on a PC (personal computer) of 100%. A clear image was outputted on the image layer by setting the ink discharge limit for the clear ink at 30% (the maximum ink discharge in the mode being 100%). The evaluation below was carried out for a multiple layer formation image thus obtained using a colored ink and a clear ink.

### <Evaluation of blocking resistance>

100 sheets of samples in which an image was outputted on a coated paper (OK-TOP: 128 g/m², Oji Paper Co., Ltd.) at the same size as that of the output image sample obtained in the high surface gloss mode were stacked and placed in a constant temperature and constant humidity chamber at a temperature of 40°C and a humidity of 30% for 16 hours. Subsequently, the image surface was evaluated. Evaluation of an image was carried out for blocking resistance of images in which a clear ink layer was overlaid on a color layer.
A: no trace of ink transfer to print surface.
B: very slight trace of white base of stacked coated paper transferred to print surface but at a level that was not a problem in practice.
C: slight trace of white base of stacked coated paper transferred to print surface (less than 5% of the whole area and spot like) but at a level that was not a problem in practice.
D: a large number of traces of white base of stacked coated paper transferred to print surface (at least 5% of the whole area or less than 5% but aggregated and not spot like) and at a level that was a problem in practice.
E: a large number of traces of white base of stacked coated paper transferred to print surface (at least 50% of the whole area) and at a level that was a problem in practice.

### <Evaluation of surface gloss in high surface gloss mode and low surface gloss mode (visual evaluation)>

Evaluation of surface gloss in high surface gloss mode and low surface gloss mode was carried out by visually examining an image sample outputted as above. The sample was wrapped around a rod having a thickness of 10 cm, the state of the reflection of a fluorescent lamp (image clarity) was examined visually, and the surface gloss was evaluated using the ranking below.

### -Evaluation ranking for surface gloss in high surface gloss mode-

A: fluorescent lamp was clearly reflected, and an ideal smooth surface was obtained.
B: fluorescent lamp was slightly blurred depending on the reflection angle but at a level that was not a problem in practice.
C: fluorescent lamp was reflected with edges slightly blurred but at a level that was not a problem in practice.
D: fluorescent lamp reflection was slightly blurred from all angles examined, and at a level that was a problem in practice.
E: fluorescent lamp reflection was blurred from all angles examined and the surface was rough at a level that was a problem in practice.

### -Evaluation ranking for surface gloss in low surface gloss mode-

A: fluorescent lamp reflection was blurred from all angles examined and the surface was rough but at a level that was not a problem in practice.
B: fluorescent lamp reflection was blurred from all angles, or was very clear at a level that was a problem in practice.

### <Evaluation of stretchability>

In accordance with the inkjet recording method in the high surface gloss mode, a sample with an image formed from multiple layers was formed using an ink set of the Examples or Comparative Examples of Table 2 to Table 11 above a sheet of a transparent substrate (polycarbonate). The sample was produced so that the average thickness of the cured film was 30 µm.

A measurement piece with dimensions of 5 cm x 2 cm was cut out from each sample obtained and subjected to a stretch test using a stretching machine under the temperature conditions below, thus measuring the stretching ratio.

### Machine used: Tensilon (Shimadzu Corporation)

Measurement conditions: length at break was measured at room temperature and a tensile speed of 50 millimeter/min., and stretching ratio was calculated. The stretching ratio referred to here was determined from {(length at break - length before stretching)/length before stretching} x 100 ((e.g.) when there was break at 10 cm, {(10 cm - 5 cm)/5 cm} x 100 = 100% stretch).

The evaluation criteria for stretchability were as follows. Since the stretchability of a clear ink is influenced by a base color layer, the ranking below was applied using a value obtained from (stretching ratio of image for forming multiple layers)/(stretching ratio of single layer color layer image) as an index.
A: (stretching ratio of image for forming multiple layers)/(stretching ratio of single layer color layer image) was at least 0.8 and at a level that was not a problem in practice.
B: (stretching ratio of image for forming multiple layers)/(stretching ratio of single layer color layer image) was at least 0.7 but less than 0.8 and at a level that was not a problem in practice.
C: (stretching ratio of image for forming multiple layers)/(stretching ratio of single layer color layer image) was at least 0.5 but less than 0.7 and at a level that was not a problem in practice.
D: (stretching ratio of image for forming multiple layers)/(stretching ratio of single layer color layer image) was at least 0.3 but less than 0.5 and at a level that was a problem in practice.
E: (stretching ratio of image for forming multiple layers)/(stretching ratio of single layer color layer image) was less than 0.3 and at a level that was a problem in practice.

The evaluation results above are given in Table 2 to Table 11. Y, M, C, K, Lm, and Lc in the 'Ink set' column correspond to colored ink compositions, CL1 denotes the clear ink composition (C1), and CL2 denotes the clear ink composition (C2). '-' means none was contained.

**Table 2**

| Component list | | Example | | | | |
|---|---|---|---|---|---|---|
| | | Ink set 0 | | | | |
| | | Y | M | C | K | CL1 |
| Mill base | Yellow mill base | 8.00 | - | - | - | - |
| | Magenta mill base | - | 13.00 | - | - | - |
| | Cyan mill base | - | - | 8.00 | - | - |
| | Black mill base | - | - | - | 8.00 | - |
| | NVC | 13.00 | 13.00 | 13.00 | 13.00 | 9.50 |
| | NVF | 10.00 | 10.00 | 10.00 | 10.00 | - |
| | CTFA | 32.00 | 32.00 | 32.00 | 31.50 | - |
| | PEA | 13.00 | 10.00 | 14.00 | 12.00 | - |
| | FA-512 | 5.00 | 5.00 | 5.00 | 5.50 | - |
| | THFA | - | - | - | - | 13.30 |
| | IBOA | - | - | - | - | - |
| Monomer | SR351S (TMPTA) | 5.00 | 5.00 | 5.00 | 5.00 | - |
| | SR454 (EOTMPTA) | - | - | - | - | - |
| | SR-833 | - | - | - | - | 9.50 |
| | DPGDA | - | - | - | - | 45.46 |
| | NPGPODA | - | - | - | - | - |
| | DVE-3 | - | - | - | - | - |
| | HDDA | 3.00 | 3.00 | 3.00 | 3.00 | - |
| | DPHA | - | - | - | - | - |
| Oligomer | CN964A85 | - | - | - | - | 2.85 |
| | CN962 | 3.00 | 3.00 | 3.00 | 3.00 | - |
| Initiator | Irg369 | 2.00 | 1.50 | 2.00 | 2.00 | - |
| | Irg184 | - | - | - | - | - |
| | Irg819 | 2.00 | 1.50 | 2.00 | 3.00 | - |
| | TPO | - | - | - | - | 13.30 |
| | ITX | 3.00 | 2.00 | 2.00 | 3.00 | - |
| Solvent | Methanol | - | - | - | - | - |
| | Isopropyl alcohol | - | - | - | - | 5.00 |
| | 1-Butyl alcohol | - | - | - | - | - |
| | Ethylene glycol monomethyl ether | - | - | - | - | - |
| | 1-Ethoxy-2-propanol | - | - | - | - | - |
| | Diethylene glycol monobutyl ether | - | - | - | - | - |
| Additive | UV-12 | 1.00 | 1.00 | 1.00 | 1.00 | - |
| | MEHQ | - | - | - | - | - |
| | Tinuvin 770DF | - | - | - | - | 0.10 |
| Surfactant | KF-353 | - | - | - | - | - |
| | Tegorad 2500 | - | - | - | - | - |
| | Tegorad 2100 | - | - | - | - | 1.00 |
| Sum total [mass] | | 100 | 100 | 100 | 100 | 100 |
| Total amount of radically polymerizable compounds [mass] | | 84.00 | 81.00 | 85.00 | 83.00 | 80.61 |
| Sum total of monofunctional monomers [mass] | | 73.00 | 70.00 | 74.00 | 72.00 | 22.80 |
| Monofunctional monomer/total polymerizable compounds [mass%] | | 86.9 | 86.4 | 87.1 | 86.7 | 28.3 |
| Evaluation results | | Ink set 0 | | | | |
| | | K | 3CG | 4CG | | |
| Surface gloss of each color in high surface gloss mode | | C | C | C | | |
| Surface gloss of each color in low surface gloss mode | | A | A | A | | |
| Blocking resistance of each color | | C | C | C | | |
| Stretchability of each color | | C | C | C | | |

**Table 3**

| Component list | | Example | | | | | | | | | | | | | |
|---|---|---|---|---|---|---|---|---|---|---|---|---|---|---|---|
| | | Ink set 1 | | | | | | Ink set 2 | | | | | | | |
| | | Y | M | C | K | CL1 | CL2 | Y | M | C | K | Lm | Lc | CL1 | CL2 |
| Mill base | Yellow mill base | 8.00 | - | - | - | - | - | 8.00 | - | - | - | - | - | - | - |
| | Magenta mill base | - | 13.00 | - | - | - | - | - | 13.00 | - | - | 4.00 | - | - | - |
| | Cyan mill base | - | - | 8.00 | - | - | - | - | - | 8.00 | - | - | 2.00 | - | - |
| | Black mill base | - | - | - | 8.00 | - | - | - | - | - | 8.00 | - | - | - | - |
| | NVC | 13.00 | 13.00 | 13.00 | 13.00 | 9.50 | - | 23.00 | 23.00 | - | 23.00 | 23.00 | 23.00 | - | - |
| | NVF | 10.00 | 10.00 | 10.00 | 10.00 | - | - | - | - | - | - | - | - | - | - |
| | CTFA | 32.00 | 32.00 | 32.00 | 31.50 | - | - | 30.00 | 30.00 | - | 30.00 | 33.70 | 33.70 | - | - |
| | PEA | 13.00 | 10.00 | 14.00 | 12.00 | - | - | 9.00 | 4.00 | 9.00 | 8.50 | 13.50 | 13.50 | 9.6 | 11.95 |
| | FA-512 | 5.00 | 5.00 | 5.00 | 5.50 | - | - | 7.00 | 7.00 | 7.00 | 7.00 | 5.00 | 5.00 | - | - |
| | THFA | - | - | - | - | 13.30 | 14.00 | - | - | - | - | - | - | - | - |
| | IBOA | - | - | - | - | - | | - | - | - | - | - | - | - | - |
| Monomer | SR351S (TMPTA) | 5.00 | 5.00 | 5.00 | 5.00 | - | - | 5.00 | 5.00 | 5.00 | 5.00 | 7.00 | 7.00 | - | - |
| | SR454 (EOTMPTA) | - | - | - | - | - | - | - | - | - | - | - | - | - | - |
| | SR-833 | - | - | - | - | 9.50 | 10.00 | - | - | - | - | - | - | 16.0 | 20.00 |
| | DPGDA | - | - | - | - | 45.46 | 47.85 | - | - | - | - | - | - | 37.6 | 47.00 |
| | NPGPODA | - | - | - | - | - | - | - | - | - | - | - | - | - | - |
| | DVE-3 | - | - | - | - | - | - | - | - | - | - | - | - | - | - |
| | HDDA | 3.00 | 3.00 | 3.00 | 3.00 | - | - | 3.00 | 3.00 | 3.00 | 3.00 | 5.00 | 5.00 | - | - |
| | DPHA | - | - | - | - | - | - | - | - | - | - | - | - | 4.0 | 5.00 |
| Oligomer | CN964A85 | - | - | - | - | 2.85 | 3.00 | 3.00 | 3.00 | 3.00 | 3.00 | 3.00 | 5.00 | - | - |
| | CN962 | 3.00 | 3.00 | 3.00 | 3.00 | - | - | - | - | - | - | - | - | - | - |
| Initiator | Irg369 | 2.00 | 1.50 | 2.00 | 2.00 | - | - | - | - | - | - | - | - | - | - |
| | Irg184 | - | - | - | - | - | - | - | - | - | - | - | - | - | - |
| | Irg819 | 2.00 | 1.50 | 2.00 | 3.00 | - | - | 6.00 | 6.00 | 6.00 | 6.50 | 3.00 | 3.00 | - | - |
| | TPO | - | - | - | | | 14.00 | 2.00 | 2.00 | 2.00 | 2.00 | 1.00 | 1.00 | 11.2 | 14.00 |
| | ITX | 3.00 | 2.00 | 2.00 | 3.00 | - | 0.05 | 3.00 | 3.00 | 3.00 | 3.00 | 0.80 | 0.80 | - | 0.05 |
| Solvent | Methanol | - | - | - | - | - | - | - | - | - | - | - | - | - | - |
| | Isopropyl alcohol | - | - | - | - | 5.00 | - | - | - | - | | - | - | 20.0 | - |
| | 1-Butyl alcohol | - | - | - | - | - | - | - | - | - | - | - | - | - | - |
| | Ethylene glycol monomethyl ether | - | - | - | - | - | - | - | - | - | - | - | - | - | - |
| | 1-Ethoxy-2-propanol | - | - | - | - | - | - | - | - | | - | - | - | - | - |
| | Diethylene glycol monobutyl ether | - | - | - | - | - | - | - | - | - | - | - | - | - | - |
| Additive | UV-12 | 1.00 | 1.00 | 1.00 | 1.00 | - | - | 1.00 | 1.00 | 1.00 | 1.00 | 1.00 | 1.00 | 0.8 | 1.00 |
| | MEHQ | - | - | - | - | - | - | - | - | - | - | - | - | - | - |
| | Tinuvin 770DF | - | - | - | - | 0.10 | 0.10 | - | - | - | - | - | - | - | - |
| Surfactant | KF-353 | - | - | - | - | - | - | - | - | - | - | - | - | - | - |
| | Tegorad 2500 | - | - | - | - | - | - | - | - | - | - | - | - | 0.8 | 1.00 |
| | Tegorad 2100 | - | - | - | - | 1.00 | 1.00 | - | - | - | - | - | - | - | - |
| Sum total [mass] | | 100 | 100 | 100 | 100 | 100 | 100 | 100 | 100 | 100 | 100 | 100 | 100 | 100 | 100 |
| Total amount of radically polymerizable compounds [mass] | | 84.00 | 81.00 | 85.00 | 83.00 | 80.61 | 84.85 | 80.00 | 75.00 | 80.00 | 79.50 | 90.20 | 92.20 | 67.16 | 83.95 |
| Sum total of monofunctional monomers [mass] | | 73.00 | 70.00 | 74.00 | 72.00 | 22.80 | 24.00 | 69.00 | 64.00 | 69.00 | 68.50 | 75.20 | 75.20 | 9.56 | 11.95 |
| Monofunctional monomer/total polymerizable compounds [mass%] | | 86.9 | 86.4 | 87.1 | 86.7 | 28.3 | 28.3 | 86.3 | 85.3 | 86.3 | 86.2 | 83.4 | 81.6 | 14.2 | 14.2 |
| Evaluation results | | Ink set 1 | | | | | | Ink set 2 | | | | | | | |
| | | Y | M | C | K | | | Y | M | C | K | | | | |
| Surface gloss of each color in high surface gloss mode | | B | B | B | B | | | A | A | A | B | | | | |
| Surface gloss of each color in low surface gloss mode | | A | A | A | A | | | A | A | A | A | | | | |
| Blocking resistance of each color | | B | B | B | B | | | B | B | B | B | | | | |
| Stretchability of each color | | B | B | B | B | | | A | A | A | A | | | | |

**Table 4**

| Component list | | Example | | | | | | | | | | | | | | | |
|---|---|---|---|---|---|---|---|---|---|---|---|---|---|---|---|---|---|
| | | Ink set 3 | | | | | | | | Ink set 4 | | | | | | | |
| | | Y | M | C | K | Lm | Lc | CL1 | CL2 | Y | M | C | K | Lm | Lc | CL1 | CL2 |
| Mill base | Yellow mill base | 8.00 | - | - | - | - | - | - | - | 8.00 | - | - | - | - | - | - | - |
| | Magenta mill base | - | 13.00 | - | - | 4.00 | - | - | - | - | 13.00 | - | - | 4.00 | - | - | - |
| | Cyan mill base | - | - | 8.00 | - | - | 2.00 | - | - | - | - | 8.00 | - | - | 2.00 | - | - |
| | Black mill base | - | - | - | 8.00 | - | - | - | - | - | - | - | 8.00 | - | - | - | - |
| | NVC | 23.00 | 23.00 | 23.00 | 23.00 | 23.00 | 23.00 | - | - | 23.00 | - | 23.00 | 23.00 | - | 23.00 | - | - |
| | NVF | - | - | - | - | - | - | - | - | - | - | | - | - | - | - | - |
| | CTFA | 40.00 | 40.00 | 40.00 | 40.00 | 45.00 | 45.00 | - | - | 40.00 | - | 40.00 | 40.00 | - | 45.00 | - | - |
| | PEA | - | - | - | - | - | - | - | - | - | - | - | - | - | - | - | - |
| | FA-512 | 8.00 | 5.00 | 9.00 | 7.00 | 6.20 | 6.20 | - | - | 8.00 | 5.00 | 9.00 | 7.00 | 6.20 | 6.20 | - | - |
| | THFA | - | - | - | - | - | - | - | - | - | - | - | - | - | - | - | - |
| | IBOA | - | - | - | - | - | - | - | - | - | - | - | - | - | - | - | - |
| Monomer | SR351S (TMPTA) | 5.00 | 5.00 | 5.00 | 5.00 | 7.00 | 7.00 | - | - | 5.00 | 5.00 | 5.00 | 5.00 | 7.00 | 7.00 | - | - |
| | SR454 (EOTMPTA) | - | - | - | - | - | - | - | - | - | - | - | - | - | - | - | - |
| | SR-833 | - | - | - | - | - | - | 14.70 | 21.00 | - | - | - | - | - | - | 14.70 | 21.00 |
| | DPGDA | - | - | - | - | - | - | 32.90 | 47.00 | - | - | - | - | - | - | 32.90 | 47.00 |
| | NPGPODA | - | - | - | - | - | - | 11.20 | 16.00 | - | - | - | - | - | - | 11.20 | 16.00 |
| | DVE-3 | - | - | - | - | - | - | - | - | - | - | - | - | - | - | - | - |
| | HDDA | 3.00 | 3.00 | 3.00 | 3.00 | 5.00 | 5.00 | - | - | 3.00 | 3.00 | 3.00 | 3.00 | 5.00 | 5.00 | - | - |
| | DPHA | - | - | - | - | - | - | - | - | - | - | - | - | - | - | - | - |
| Oligomer | CN964A85 | 3.00 | 3.00 | 3.00 | 3.00 | 3.00 | 5.00 | - | - | 3.00 | 3.00 | 3.00 | 3.00 | 3.00 | 5.00 | - | - |
| | CN962 | - | - | - | - | - | - | - | - | - | - | - | - | - | - | - | - |
| Initiator | Irg369 | - | - | - | - | - | - | - | - | - | - | - | - | - | - | - | - |
| | Irg 184 | - | - | - | - | - | - | - | - | - | - | - | - | - | - | - | - |
| | Irg819 | 4.00 | 3.00 | 4.00 | 5.00 | 3.00 | 3.00 | - | - | 4.00 | 3.00 | 4.00 | 5.00 | 3.00 | 3.00 | - | - |
| | TPO | 2.00 | 2.00 | 2.00 | 2.00 | 2.00 | 2.00 | 9.80 | 14.00 | 2.00 | 2.00 | 2.00 | 2.00 | 2.00 | 2.00 | 9.80 | 14.00 |
| | ITX | 3.00 | 2.00 | 2.00 | 3.00 | 0.80 | 0.80 | - | - | 3.00 | 2.00 | 2.00 | 3.00 | 0.80 | 0.80 | - | - |
| Solvent | Methanol | - | - | - | - | - | - | - | - | - | - | - | - | - | - | - | - |
| | Isopropyl alcohol | - | - | - | - | - | - | 30.00 | - | - | - | - | - | - | - | 15.00 | - |
| | 1-Butyl alcohol | - | - | - | - | - | - | - | - | - | - | - | - | - | - | 15.00 | - |
| | Ethylene glycol monomethyl ether | - | - | - | - | - | - | - | - | - | - | - | - | - | - | - | - |
| | 1-Ethoxy-2-propanol | - | - | - | - | - | - | - | - | - | - | - | - | - | - | - | - |
| | Diethylene glycol monobutyl ether | - | - | - | - | - | - | - | - | - | - | - | - | - | - | - | - |
| Additive | UV-12 | 1.00 | 1.00 | 1.00 | 1.00 | 1.00 | 1.00 | 0.70 | 1.00 | 1.00 | 1.00 | 1.00 | 1.00 | 1.00 | 1.00 | 0.70 | 1.00 |
| | MEHQ | - | - | - | - | - | - | - | - | - | - | - | - | - | - | - | - |
| | Tinuvin 770DF | - | - | - | - | - | - | - | - | - | - | - | - | - | - | - | - |
| Surfactant | KF-353 | - | - | - | - | - | - | - | - | - | - | - | - | - | - | - | - |
| | Tegorad 2500 | - | - | - | - | - | - | - | - | - | - | - | - | - | - | - | - |
| | Tegorad 2100 | - | - | - | - | - | - | 0.70 | 1.00 | - | - | - | - | - | - | 0.70 | 1.00 |
| Sum total [mass] | | 100 | 100 | 100 | 100 | 100 | 100 | 100 | 100 | 100 | 100 | 100 | 100 | 100 | 100 | 100 | 100 |
| Total amount of radically polymerizable compounds [mass] | | 82.00 | 79.00 | 83.00 | 81.00 | 89.20 | 91.20 | 58.80 | 84.00 | 82.00 | 79.00 | 83.00 | 81.00 | 89.20 | 91.20 | 58.80 | - |
| Sum total of monofunctional monomers [mass] | | 71.00 | 68.00 | 72.00 | 70.00 | 74.20 | 74.20 | - | - | 71.00 | 68.00 | 72.00 | 70.00 | 74.20 | 74.20 | - | - |
| Monofunctional monomer/total polymerizable compounds [mass%] | | 86.6 | 86.1 | 86.7 | 86.4 | 83.2 | 81.4 | - | - | 86.6 | 86.1 | 86.7 | 86.4 | 83.2 | 81.4 | - | - |
| Evaluation results | | Ink set 3 | | | | | | | | Ink set 4 | | | | | | | |
| | | Y | M | C | K | | | | | Y | M | C | K | | | | |
| Surface gloss of each color in high surface gloss mode | | A | A | A | A | | | | | A | A | A | A | | | | |
| Surface gloss of each color in low surface gloss mode | | A | A | A | A | | | | | A | A | A | A | | | | |
| Blocking resistance of each color | | A | A | A | A | | | | | A | A | A | A | | | | |
| Stretchability of each color | | A | A | A | A | | | | | A | A | A | A | | | | |

**Table 5**

| Component list | | Example | | | | | | | | | | | | | | | |
|---|---|---|---|---|---|---|---|---|---|---|---|---|---|---|---|---|---|
| | | Ink set 5 | | | | | | | | Ink set 6 | | | | | | | |
| | | Y | M | C | K | Lm | Lc | CL1 | CL2 | Y | M | C | K | Lm | Lc | CL1 | CL2 |
| Mill base | Yellow mill base | 8.00 | - | - | - | - | - | - | - | 8.00 | - | - | - | - | - | - | - |
| | Magenta mill base | - | 13.00 | - | - | 4.00 | - | - | - | - | 13.00 | - | - | 4.00 | - | - | - |
| | Cyan mill base | - | - | 8.00 | - | - | 2.00 | - | - | - | - | 8.00 | - | - | 2.00 | - | - |
| | Black mill base | - | - | - | 8.00 | - | - | - | - | - | - | - | 8.00 | - | - | - | - |
| | NVC | 23.00 | 23.00 | 23.00 | 23.00 | 23.00 | 23.00 | - | - | 27.00 | 22.50 | 27.00 | 26.00 | 31.20 | 31.20 | - | - |
| | NVF | - | - | - | - | - | - | - | - | - | - | - | - | - | - | - | - |
| | CTFA | 40.00 | 40.00 | 40.00 | 40.00 | 45.00 | 45.00 | - | - | 49.00 | 48.00 | 48.50 | 49.00 | 49.80 | 49.80 | - | - |
| | PEA | - | - | - | - | - | - | - | - | - | - | - | - | - | - | - | - |
| | FA-512 | 8.00 | 5.00 | 9.00 | 7.00 | 6.20 | 6.20 | - | - | - | - | - | - | - | - | - | - |
| Monomer | THFA | - | - | - | - | - | - | - | - | - | - | - | - | - | - | - | - |
| | IBOA | - | - | - | - | - | - | - | - | - | - | - | - | - | - | - | - |
| | SR351S (TMPTA) | 5.00 | 5.00 | 5.00 | 5.00 | 7.00 | 7.00 | - | - | - | - | - | - | - | - | - | - |
| | SR454 (EOTMPTA) | - | - | - | - | - | - | - | - | 3.00 | 3.00 | 3.00 | 3.00 | 5.00 | 5.00 | - | - |
| | SR-833 | - | - | - | - | - | - | 10.00 | 20.00 | - | - | - | - | - | - | 6.00 | 20.00 |
| | DPGDA | - | - | - | - | - | - | 23.50 | 47.00 | - | - | - | - | - | - | - | 47.85 |
| | NPGPODA | - | - | - | - | - | - | 8.48 | 16.95 | - | - | - | - | - | - | - | - |
| | DVE-3 | - | - | - | - | - | - | - | - | - | - | - | - | - | - | 4.20 | 14.00 |
| | HDDA | 3.00 | 3.00 | 3.00 | 3.00 | 5.00 | 5.00 | - | - | - | - | - | - | - | - | - | - |
| | DPHA | - | - | - | - | - | - | - | - | - | - | - | - | - | - | - | - |
| Oligomer | CN964A85 | 3.00 | 3.00 | 3.00 | 3.00 | 3.00 | 5.00 | - | - | 3.00 | 3.00 | 3.00 | 3.00 | 3.00 | 5.00 | 0.90 | 3.00 |
| | CN962 | - | - | - | - | - | - | - | - | - | - | - | - | - | - | - | - |
| Initiator | Irg369 | - | - | - | - | - | - | - | - | - | - | - | - | - | - | - | - |
| | Irg184 | - | - | - | - | - | - | - | - | - | - | - | - | - | - | - | - |
| | Irg819 | 4.00 | 3.00 | 4.00 | 5.00 | 3.00 | 3.00 | - | - | 4.00 | 4.00 | 4.00 | 5.00 | 3.00 | 3.00 | - | - |
| | TPO | 2.00 | 2.00 | 2.00 | 2.00 | 2.00 | 2.00 | 7.00 | 14.00 | 2.00 | 3.00 | 3.00 | 2.00 | 2.00 | 2.00 | 4.20 | 14.00 |
| | ITX | 3.00 | 2.00 | 2.00 | 3.00 | 0.80 | 0.80 | - | 0.05 | 3.00 | 2.50 | 2.50 | 3.00 | 1.00 | 1.00 | 0.02 | 0.05 |
| Solvent | Methanol | - | - | - | - | - | - | - | - | - | - | - | - | - | - | - | - |
| | Isopropyl alcohol | - | - | - | - | - | - | 50.00 | - | - | - | - | - | - | - | 70.00 | - |
| | 1-Butyl alcohol | - | - | - | - | - | - | - | - | - | - | - | - | - | - | - | - |
| | Ethylene glycol monomethyl ether | - | - | - | - | - | - | - | - | - | - | - | - | - | - | - | - |
| | 1-Ethoxy-2-propanol | - | - | - | - | - | - | - | - | - | - | - | - | - | - | - | - |
| | Diethylene glycol monobutyl ether | - | - | - | - | - | - | - | - | - | - | - | - | - | - | - | - |
| Additive | UV-12 | 1.00 | 1.00 | 1.00 | 1.00 | 1.00 | 1.00 | 0.50 | 1.00 | 1.00 | 1.00 | 1.00 | 1.00 | 1.00 | 1.00 | - | - |
| | MEHQ | - | - | - | - | - | - | - | - | - | - | - | - | - | - | - | - |
| | Tinuvin 770DF | - | - | - | - | - | - | - | - | - | - | - | - | - | - | - | 0.10 |
| Surfactant | KF-353 | - | - | - | - | - | - | - | - | - | - | - | - | - | - | - | - |
| | Tegorad 2500 | - | - | - | - | - | - | - | - | - | - | - | - | - | - | - | - |
| | Tegorad 2100 | - | - | - | - | - | - | 0.50 | 1.00 | - | - | - | - | - | - | 0.30 | 1.00 |
| Sum total [mass] | | 100 | 100 | 100 | 100 | 100 | 100 | 100 | 100 | 100 | 100 | 100 | 100 | 100 | 100 | 100 | 100 |
| Total amount of radically polymerizable compounds [mass] | | 82.00 | 79.00 | 83.00 | 81.00 | 89.20 | 91.20 | - | - | 82.00 | 76.50 | 81.50 | 81.00 | 89.00 | 91.00 | - | - |
| Sum total of monofunctional monomers [mass] | | 71.00 | 68.00 | 72.00 | 70.00 | 74.20 | 74.20 | - | - | 76.00 | 70.50 | 75.50 | 75.00 | 81.00 | 81.00 | - | - |
| Monofunctional monomer/total polymerizable compounds [mass%] | | 86.6 | 86.1 | 86.7 | 86.4 | 83.2 | 81.4 | - | - | 92.7 | 92.2 | 92.6 | 92.6 | 91.0 | 89.0 | - | - |
| Evaluation results | | Ink set 5 | | | | | | | | Ink set 6 | | | | | | | |
| | | Y | M | C | K | | | | | Y | M | C | K | | | | |
| Surface gloss of each color in high surface gloss mode | | B | B | B | B | | | | | B | C | C | C | | | | |
| Surface gloss of each color in low surface gloss mode | | A | A | A | A | | | | | A | A | A | A | | | | |
| Blocking resistance of each color | | A | A | A | A | | | | | B | B | B | B | | | | |
| Stretchability of each color | | A | A | A | A | | | | | A | A | A | A | | | | |

**Table 6**

| Component list | | Example | | | | | | | | | | | | | | | |
|---|---|---|---|---|---|---|---|---|---|---|---|---|---|---|---|---|---|
| | | Ink set 7 | | | | | | | | Ink set 8 | | | | | | | |
| | | Y | M | C | K | Lm | Lc | CL1 | CL2 | Y | M | C | K | Lm | Lc | CL1 | CL2 |
| Mill base | Yellow mill base | 8.00 | - | - | - | - | - | - | - | 8.00 | - | - | - | - | - | - | - |
| | Magenta mill base | - | 13.00 | - | - | 4.00 | - | - | - | - | 13.00 | - | - | 4.00 | - | - | - |
| | Cyan mill base | - | - | 8.00 | - | - | 2.00 | - | - | - | - | 8.00 | - | - | 2.00 | - | - |
| | Black mill base | - | - | - | 8.00 | - | - | - | - | - | - | - | 8.00 | - | - | - | - |
| | NVC | 23.00 | 23.00 | - | 23.00 | 23.00 | 23.00 | - | - | 23.00 | - | 23.00 | 23.00 | 23.00 | 23.00 | - | - |
| | NVF | - | - | - | - | - | - | - | - | - | - | - | - | - | - | - | - |
| | CTFA | 45.00 | 42.50 | - | 43.00 | 49.80 | 49.80 | - | - | 45.00 | - | 43.50 | 45.00 | 49.80 | 49.80 | - | - |
| | PEA | - | - | - | - | - | - | - | - | - | - | - | - | - | - | - | - |
| | FA-512 | - | - | - | - | - | - | - | - | - | - | - | - | - | - | - | - |
| Monomer | THFA | - | - | - | - | - | - | - | - | - | - | - | - | - | - | - | - |
| | IBOA | - | - | - | - | - | - | - | - | - | - | - | - | - | - | - | - |
| | SR351S (TMPTA) | - | - | - | - | - | - | - | - | 3.00 | 3.00 | 3.00 | 3.00 | 5.00 | 5.00 | - | - |
| | SR454 (EOTMPTA) | 3.00 | 3.00 | 3.00 | 5.0 | 5.00 | 5.00 | - | - | - | - | - | - | - | - | - | - |
| | SR-833 | - | - | - | - | - | - | 21.00 | - | - | - | - | - | - | - | 14.00 | - |
| | DPGDA | - | - | - | - | - | - | 27.90 | - | - | - | - | - | - | - | 33.50 | - |
| | NPGPODA | - | - | - | - | - | - | - | - | - | - | - | - | - | - | - | - |
| | DVE-3 | - | - | - | - | - | - | 9.80 | 14.00 | - | - | - | - | - | - | 9.80 | 14.00 |
| | HDDA | 8.00 | 5.00 | 9.00 | 7.00 | 9.00 | 8.20 | - | - | 8.00 | 5.00 | 9.00 | 7.00 | 8.20 | 8.20 | - | - |
| | DPHA | - | - | - | - | 8.20 | - | - | - | - | - | - | - | - | - | - | - |
| Oligomer | CN964A85 | 3.00 | 3.00 | 3.00 | 3.00 | 3.00 | 5.00 | 0.70 | 1.00 | 3.00 | 3.00 | 3.00 | 3.00 | 3.00 | 5.00 | 2.10 | 3.00 |
| | CN962 | - | - | - | - | - | - | 0.00 | - | - | - | - | - | - | - | - | - |
| Initiator | Irg369 | - | - | - | - | - | - | - | - | - | - | - | - | - | - | - | - |
| | Irg184 | - | - | - | - | - | - | - | - | - | - | - | - | - | - | - | - |
| | Irg819 | 4.00 | 4.00 | 4.00 | 5.00 | 3.00 | 3.00 | - | - | 4.00 | 4.00 | 4.00 | 5.00 | 3.00 | 3.00 | - | - |
| | TPO | 2.00 | 3.00 | 3.00 | 2.00 | 2.00 | 2.00 | 9.80 | 14.00 | 2.00 | 3.00 | 3.00 | 2.00 | 2.00 | 2.00 | 9.80 | 14.00 |
| | ITX | 3.00 | 2.50 | 2.50 | 3.00 | 1.00 | 1.00 | 0.04 | 0.05 | 3.00 | 2.50 | 2.50 | 3.00 | 1.00 | 1.00 | 0.04 | 0.05 |
| Solvent | Methanol | - | - | - | - | - | - | - | - | - | - | - | - | - | -- | - | - |
| | Isopropyl alcohol | - | - | - | - | - | - | - | - | - | - | - | - | - | - | - | - |
| | 1-Butyl alcohol | - | - | - | - | - | - | 30.00 | - | - | - | - | - | - | - | - | - |
| | Ethylene glycol monomethyl ether | - | - | - | - | - | - | - | - | - | - | - | - | - | - | - | - |
| | 1-Ethoxy-2-propanol | - | - | - | - | - | - | - | - | - | - | - | - | - | - | 30.00 | - |
| | Diethylene glycol monobutyl ether | - | - | - | - | - | - | - | - | - | - | - | - | - | - | - | - |
| Additive | UV-12 | 1.00 | 1.00 | 1.00 | 1.00 | 1.00 | 1.00 | - | - | 1.00 | 1.00 | 1.00 | 1.00 | 1.00 | 1.00 | - | - |
| | MEHQ | - | - | - | - | - | - | - | - | - | - | - | - | - | - | - | - |
| | Tinuvin 770DF | - | - | - | - | - | - | 0.07 | 0.10 | - | - | - | - | - | - | 0.07 | 0.10 |
| Surfactant | KF-353 | - | - | - | - | - | - | - | - | - | - | - | - | - | - | - | - |
| | Tegorad 2500 | - | - | - | - | - | - | - | - | - | - | - | | - | - | 0.70 | 1.00 |
| | Tegorad 2100 | - | - | - | - | - | - | 0.70 | 1.00 | - | - | - | - | - | - | - | - |
| Sum total [mass] | | 100 | 100 | 100 | 100 | 100 | 100 | 100 | 100 | 100 | 100 | 100 | 100 | 100 | 100 | 100 | 100 |
| Total amount of radically polymerizable compounds [mass] | | 82.00 | 76.50 | - | 81.00 | 89.00 | 91.00 | - | - | 82.00 | 76.50 | 81.50 | 81.00 | 89.00 | 91.00 | - | - |
| Sum total of monofunctional monomers [mass] | | 68.00 | 65.50 | - | 66.00 | 72.80 | 72.80 | - | - | - | 65.50 | 66.50 | 68.00 | 72.80 | 72.80 | - | - |
| Monofunctional monomer/total polymerizable compounds [mass%] | | 82.9 | 85.6 | 81.6 | 81.5 | 81.8 | 80.0 | - | - | 82.9 | 85.6 | 81.6 | 84.0 | 81.8 | 80.0 | - | - |
| Evaluation results | | Ink set 7 | | | | | | | | Ink set 8 | | | | | | | |
| | | Y | M | C | K | | | | | Y | M | C | K | | | | |
| Surface gloss of each color in high surface gloss mode | | A | A | A | A | | | | | A | A | B | B | | | | |
| Surface gloss of each color in low surface gloss mode | | A | A | A | A | | | | | A | A | A | A | | | | |
| Blocking resistance of each color | | A | B | A | B | | | | | A | B | B | B | | | | |
| Stretchability of each color | | A | A | A | A | | | | | A | A | A | A | | | | |

**Table 7**

| Component list | | Example | | | | | | | | | | | | | | | |
|---|---|---|---|---|---|---|---|---|---|---|---|---|---|---|---|---|---|
| | | Ink set 9 | | | | | | | | Ink set 10 | | | | | | | |
| | | Y | M | C | K | Lm | Lc | CL1 | CL2 | Y | M | C | K | Lm | Lc | CL1 | CL2 |
| Mill base | Yellow mill base | 8.00 | - | - | - | - | - | - | - | 8.00 | - | - | - | - | - | - | - |
| | Magenta mill base | - | 13.00 | - | - | 4.00 | - | - | - | - | 13.00 | - | - | 4.00 | - | - | - |
| | Cyan mill base | - | - | 8.00 | - | - | 2.00 | - | - | - | - | 8.00 | - | - | 2.00 | - | - |
| | Black mill base | - | - | - | 8.00 | - | - | - | - | - | - | - | 8.00 | - | - | - | - |
| | NVC | 23.00 | 23.00 | 23.00 | 23.00 | 23.00 | 23.00 | - | - | 23.00 | 23.00 | 23.00 | 23.00 | 23.00 | 23.00 | - | - |
| | NVF | - | - | - | - | - | - | - | - | - | - | - | - | - | - | - | - |
| | CTFA | 45.00 | 42.50 | 43.50 | 45.00 | 49.80 | 49.80 | - | - | 45.00 | 42.50 | 43.50 | 45.00 | 49.80 | 49.80 | - | - |
| | PEA | - | - | - | - | - | - | - | - | - | - | - | - | - | - | - | - |
| | FA-512 | - | - | - | - | - | - | - | - | - | - | - | - | - | - | - | - |
| | THFA | - | - | - | - | - | - | - | - | - | - | - | - | - | - | - | - |
| Monomer | IBOA | - | - | - | - | - | - | - | - | - | - | - | - | - | - | - | - |
| | SR351S (TMPTA) | 3.00 | 3.00 | 3.00 | 3.00 | 5.00 | 5.00 | - | - | 3.00 | 3.00 | 3.00 | 3.00 | 5.00 | 5.00 | - | - |
| | SR454 (EOTMPTA) | - | - | - | - | - | - | - | - | - | - | - | - | - | - | - | - |
| | SR-833 | - | - | - | - | - | - | 14.00 | 20.00 | - | - | - | - | - | - | 14.00 | 20.00 |
| | DPGDA | - | - | - | - | - | - | 33.50 | 47.85 | - | - | - | - | - | - | 33.50 | 47.85 |
| | NPGPODA | - | - | - | - | - | - | - | - | - | - | - | - | - | - | - | - |
| | DVE-3 | - | - | - | - | - | - | 9.80 | 14.00 | - | - | - | - | - | - | 9.80 | 14.00 |
| | HDDA | 8.00 | 5.00 | 9.00 | 7.00 | 8.20 | 8.20 | - | - | 8.00 | 5.00 | 9.00 | 7.00 | 8.20 | 8.20 | - | - |
| | DPHA | - | - | - | - | - | - | - | - | - | - | - | - | - | - | - | - |
| Oligomer | CN964A85 | 3.00 | 3.00 | 3.00 | 3.00 | 3.00 | 5.00 | 2.10 | 3.00 | 3.00 | 3.00 | 3.00 | 3.00 | 3.00 | 5.00 | 2.10 | 3.00 |
| | CN962 | - | - | - | - | - | - | - | - | - | - | - | - | - | - | - | - |
| Initiator | Irg369 | - | - | - | - | - | - | - | - | - | - | - | - | - | - | - | - |
| | Irg184 | - | - | - | - | - | - | - | - | - | - | - | - | - | - | - | - |
| | Irg819 | 4.00 | 4.00 | 4.00 | 5.00 | 3.00 | 3.00 | - | - | 4.00 | 4.00 | 4.00 | 5.00 | 3.00 | 3.00 | - | - |
| | TPO | 2.00 | 3.00 | 3.00 | 2.00 | 2.00 | 2.00 | 9.80 | 14.00 | 2.00 | 3.00 | 3.00 | 2.00 | 2.00 | 2.00 | 9.80 | 14.00 |
| | ITX | 3.00 | 2.50 | 2.50 | 3.00 | 1.00 | 1.00 | 0.04 | 0.05 | 3.00 | 2.50 | 2.50 | 3.00 | 1.00 | 1.00 | 0.04 | 0.05 |
| Solvent | Methanol | - | - | - | - | - | - | - | - | - | - | - | - | - | - | 30.00 | - |
| | Isopropyl alcohol | - | - | - | - | - | - | - | - | - | - | - | - | - | - | - | - |
| | 1-Butyl alcohol | - | - | - | - | - | - | - | - | - | - | - | - | - | - | - | - |
| | Ethylene glycol monomethyl ether | - | - | - | - | - | - | 30.00 | - | - | - | - | - | - | - | - | - |
| | 1-Ethoxy-2- propanol | - | - | - | - | - | - | - | - | - | - | - | - | - | - | - | - |
| | Diethylene glycol monobutyl ether | - | - | - | - | - | - | - | - | - | - | - | - | - | - | - | - |
| Additive | UV-12 | 1.00 | 1.00 | 1.00 | 1.00 | 1.00 | 1.00 | - | - | 1.00 | 1.00 | 1.00 | 1.00 | 1.00 | 1.00 | - | - |
| | MEHQ | - | - | - | - | - | - | - | - | - | - | - | - | - | - | - | - |
| | Tinuvin 770DF | - | - | - | - | - | - | 0.07 | 0.10 | - | - | - | - | - | - | 0.10 | 0.10 |
| Surfactant | KF-353 | - | - | - | - | - | - | 0.70 | 1.00 | - | - | - | - | - | - | 1.00 | 1.00 |
| | Tegorad 2500 | - | - | - | - | - | - | - | - | - | - | - | - | - | - | - | - |
| | Tegorad 2100 | - | - | - | - | - | - | - | - | - | - | - | - | - | - | - | - |
| Sum total [mass] | | 100 | 100 | 100 | 100 | 100 | 100 | 100 | 100 | 100 | 100 | 100 | 100 | 100 | 100 | 100 | 100 |
| Total amount of radically polymerizable compounds [mass] | | 82.00 | 76.50 | 81.50 | 81.00 | 89.00 | 91.00 | 59.40 | 84.85 | 82.00 | 76.50 | 81.50 | 81.00 | 89.00 | 91.00 | 59.40 | 84.85 |
| Sum total of monofunctional monomers [mass] | | 68.00 | 65.50 | 66.50 | 68.00 | 72.80 | 72.80 | - | - | 68.00 | 65.50 | 66.50 | 68.00 | 72.80 | 72.80 | - | - |
| Monofunctional monomer/total polymerizable compounds [mass%] | | 82.9 | 85.6 | 81.6 | 84.0 | 81.8 | 80.0 | - | - | 82.9 | 85.6 | 81.6 | 84.0 | 81.8 | 80.0 | - | - |
| Evaluation results | | Ink set 9 | | | | | | | | Ink set 10 | | | | | | | |
| | | Y | M | C | K | | | | | Y | M | C | K | | | | |
| Surface gloss of each color in high surface gloss mode | | B | B | B | B | | | | | B | B | B | C | | | | |
| Surface gloss of each color in low surface gloss mode | | A | A | A | A | | | | | A | A | A | A | | | | |
| Blocking resistance of each color | | A | C | C | C | | | | | A | A | A | A | | | | |
| Stretchability of each color | | B | B | B | B | | | | | A | A | A | A | | | | |

**Table 8**

| Component list | | Example | | | | | | | | | | | | | | | |
|---|---|---|---|---|---|---|---|---|---|---|---|---|---|---|---|---|---|
| | | Ink set 11 | | | | | | | | Ink set 12 | | | | | | | |
| | | Y | M | C | K | Lm | Lc | CL1 | CL2 | Y | M | c | K | Lm | Lc | CL1 | CL2 |
| | Yellow mill base | 8.00 | - | - | - | - | - | - | - | 6.40 | - | - | - | - | - | - | - |
| Mill base | Magenta mill base | - | 13.00 | - | - | 4.00 | - | - | - | - | 16.40 | - | - | 3.25 | - | - | - |
| | Cyan mill base | - | - | 8.00 | - | - | 2.00 | - | - | - | - | 8.65 | - | - | 1.13 | - | - |
| | Black mill base | - | - | - | 8.00 | - | - | - | - | - | - | - | 8.05 | - | - | - | - |
| | NVC | 23.00 | 23.00 | 23.00 | 23.00 | 23.00 | 23.00 | - | - | 22.50 | 24.00 | 24.00 | 23.00 | 24.00 | 24.00 | - | - |
| | NVF | - | - | - | - | - | - | - | - | - | - | - | - | - | - | - | - |
| | CTFA | 45.00 | 42.50 | 43.50 | 45.00 | 49.80 | 49.80 | - | - | 53.00 | 51.00 | 51.35 | 50.60 | 55.00 | 55.00 | - | - |
| | PEA | - | - | - | - | - | - | - | - | - | - | - | - | - | - | - | - |
| | FA-512 | - | - | - | - | - | - | - | - | - | - | - | - | - | - | - | - |
| | THFA | - | - | - | - | - | - | - | - | - | - | - | - | - | - | - | - |
| | IBOA | - | - | - | - | - | - | - | - | - | - | - | - | - | - | 9.8 | 14.00 |
| Monomer | SR351S (TMPTA) | 3.00 | 3.00 | 3.00 | 3.00 | 5.00 | 5.00 | - | - | - | - | - | - | - | - | 3.5 | 5.00 |
| | SR454 (EOTMPTA) | - | - | - | - | - | - | - | - | 3.50 | - | 2.90 | 2.80 | 4.05 | 6.17 | - | - |
| | SR-833 | - | - | - | - | - | - | - | 20.00 | - | - | - | - | - | - | 14.0 | 20.00 |
| | DPGDA | - | - | - | - | - | - | - | 47.85 | - | - | - | - | - | - | 30.8 | 44.00 |
| | NPGPODA | - | - | - | - | - | - | - | - | - | - | - | - | - | - | - | - |
| | DVE-3 | - | - | - | - | - | - | 9.8 | 14.00 | - | - | - | - | - | - | - | - |
| | HDDA | 8.00 | 5.00 | 9.00 | 7.00 | 8.20 | 8.20 | - | - | - | - | - | - | - | - | - | - |
| | DPHA | - | - | - | - | - | - | - | - | - | - | - | - | - | - | - | - |
| Oligomer | CN964A85 | 3.00 | 3.00 | 3.00 | 3.00 | 3.00 | 5.00 | 2.1 | 3.00 | 4.80 | - | 4.00 | 3.75 | 5.00 | 5.00 | - | - |
| | CN962 | - | - | - | - | - | - | - | - | - | - | - | - | - | - | - | - |
| Initiator | Irg369 | - | - | - | - | - | - | - | - | - | - | - | - | - | - | - | - |
| | Irg184 | - | - | - | - | - | - | - | - | - | - | - | - | 1.60 | 1.60 | - | - |
| | Irg819 | 4.00 | 4.00 | 4.00 | 5.00 | 3.00 | 3.00 | - | - | 3.00 | 2.80 | 2.80 | 5.00 | 2.80 | 2.80 | - | - |
| | TPO | 2.00 | 3.00 | 3.00 | 2.00 | 2.00 | 2.00 | 9.8 | 14.00 | 2.80 | 2.80 | 2.80 | 2.80 | 2.90 | 2.90 | 9.8 | 14.00 |
| | ITX | 3.00 | 2.50 | 2.50 | 3.00 | 1.00 | 1.00 | - | 0.05 | 3.00 | 2.00 | 2.00 | 3.00 | 0.40 | 0.40 | - | - |
| Solvent | Methanol | - | - | - | - | - | - | - | - | - | - | - | - | - | - | - | - |
| | Isopropyl alcohol | - | - | - | - | - | - | - | - | - | - | - | - | - | - | 30.00 | - |
| | 1-Butyl alcohol | - | - | - | - | - | - | - | - | - | - | - | - | - | - | - | - |
| | Ethylene glycol monomethyl ether | - | - | - | - | - | - | - | - | - | - | - | - | - | - | - | - |
| | 1-Ethoxy-2-propanol | - | - | - | - | - | - | - | - | - | - | - | - | - | - | - | - |
| | Diethylene glycol monobutyl ether | - | - | - | - | - | - | 30.00 | - | - | - | - | - | - | - | - | - |
| Additive | UV-12 | 1.00 | 1.00 | 1.00 | 1.00 | 1.00 | 1.00 | - | - | 1.00 | 1.00 | 1.00 | 1.00 | 1.00 | 1.00 | 0.7 | 1.00 |
| | MEHQ | - | - | - | - | - | - | - | - | - | - | 0.50 | - | - | - | 0.7 | 1.00 |
| | Tinuvin 770DF | - | - | - | - | - | - | 0.1 | 0.10 | - | - | - | - | - | - | - | - |
| Surfactant | KF-353 | - | - | - | - | - | - | 0.7 | 1.00 | - | - | - | - | - | - | - | - |
| | Tegorad 2500 | - | - | - | - | - | - | - | - | - | - | - | - | - | - | - | - |
| | Tegorad 2100 | - | - | - | - | - | - | - | - | - | - | - | - | - | - | 0.7 | 1.00 |
| Sum total [mass] | | 100 | 100 | 100 | 100 | 100 | 100 | 100 | 100 | 100 | 100 | 100 | 100 | 100 | 100 | 100 | 100 |
| Total amount of radically polymerizable compounds [mass] | | 82.00 | 76.50 | 81.50 | 81.00 | 89.00 | 91.00 | 59.40 | - | 83.80 | 75.00 | 82.25 | - | 88.05 | 90.17 | - | - |
| Sum total of monofunctional monomers [mass] | | 68.00 | 65.50 | 66.50 | 68.00 | 72.80 | 72.80 | - | - | 75.50 | 75.00 | 75.35 | 73.60 | 79.00 | 79.00 | - | - |
| Monofunctional monomer/total polymerizable compounds [mass%] | | 82.9 | 85.6 | 81.6 | 84.0 | 81.8 | 80.0 | - | - | 90.1 | 100.0 | 91.6 | 91.8 | 89.7 | 87.6 | - | - |
| Evaluation results Evaluation results | | Ink set 11 | | | | | | | | Ink set 12 | | | | | | | |
| | | Y | M | C | K | | | | | Y | M | C | K | | | | |
| Surface gloss of each color in high surface gloss mode | | A | A | A | B | | | | | A | A | A | A | | | | |
| Surface gloss of each color in low surface gloss mode | | A | A | A | A | | | | | A | A | A | A | | | | |
| Blocking resistance of each color | | C | C | C | C | | | | | A | A | A | A | | | | |
| Stretchability of each color | | A | A | A | A | | | | | A | A | A | A | | | | |

**Table 9**

| Component list | | Comparative Example | | | | | | | | | |
|---|---|---|---|---|---|---|---|---|---|---|---|
| | | Ink set 1 | | | | | Ink set 2 | | | | |
| | | Y | M | C | K | CL2 | Y | M | C | K | CL2 |
| Mill base | Yellow mill base | 8.00 | - | - | - | - | 8.00 | - | - | - | - |
| | Magenta mill base | - | 13.00 | - | - | - | - | 13.00 | - | - | - |
| | Cyan mill base | - | - | 8.00 | - | - | - | - | 8.00 | - | - |
| | Black mill base | - | - | - | 8.00 | - | - | - | - | 8.00 | - |
| Monomer | NVC | - | - | - | - | - | 23.00 | 23.00 | 23.00 | 23.00 | - |
| | NVF | - | - | - | - | - | - | - | - | - | - |
| | CTFA | 30.00 | 30.00 | 30.00 | 30.00 | - | - | - | - | - | - |
| | PEA | 36.00 | 33.00 | 37.00 | 35.00 | - | 48.00 | 45.00 | 49.00 | 47.00 | - |
| | FA-512 | 5.00 | 5.00 | 5.00 | 5.50 | - | 7.00 | 7.00 | 7.00 | 7.00 | - |
| | SR351S (TMPTA) | 5.00 | 5.00 | 5.00 | 5.00 | - | - | - | - | - | - |
| | SR454 (EOTMPTA) | - | - | - | - | - | - | - | - | - | - |
| | DPGDA | - | - | - | - | 47.85 | - | - | - | - | 47.85 |
| | SR-833 | - | - | - | - | 34.00 | - | - | - | - | 34.00 |
| | DVE-3 | - | - | - | - | - | - | - | - | - | - |
| | HDDA | 3.00 | 3.00 | 3.00 | 3.00 | - | 3.00 | 3.00 | 3.00 | 3.00 | - |
| Oligomer | CN964A85 | - | - | - | - | 3.00 | 3.00 | 3.00 | 3.00 | 3.00 | 3.00 |
| | CN962 | 3.00 | 3.00 | 3.00 | 3.00 | - | - | - | - | - | - |
| Initiator | Irg369 | 2.00 | 2.00 | 2.00 | 1.50 | - | - | - | - | - | |
| | Irg819 | 4.00 | 3.00 | 4.00 | 5.00 | - | 4.00 | 3.00 | 4.00 | 5.00 | - |
| | TPO | - | - | - | - | 14.00 | - | - | - | - | 14.00 |
| | ITX | 3.00 | 2.00 | 2.00 | 3.00 | 0.05 | 3.00 | 2.00 | 2.00 | 3.00 | 0.05 |
| Additive | UV-12 | 1.00 | 1.00 | 1.00 | 1.00 | - | 1.00 | 1.00 | 1.00 | 1.00 | - |
| | Tinuvin 770DF | - | - | - | - | 0.10 | - | - | - | - | 0.10 |
| Surfactant | Tegorad 2100 | - | - | - | - | | - | - | - | - | 1.00 |
| Sum total [mass] | | 100 | 100 | 100 | 100 | 100 | 100 | 100 | 100 | 100 | 100 |
| Total amount of radically polymerizable compounds [mass] | | 82.00 | 79.00 | 83.00 | 81.50 | 84.85 | 84.00 | 81.00 | 85.00 | 83.00 | 84.85 |
| Sum total of monofunctional monomers [mass] | | 71.00 | 68.00 | 72.00 | 70.50 | - | 78.00 | 75.00 | 79.00 | 77.00 | - |
| Monofunctional monomer/total polymerizable compounds [mass%] | | 86.6 | 86.1 | 86.7 | 86.5 | - | 92.9 | 92.6 | 92.9 | 92.8 | - |
| Evaluation results | | Ink set 1 | | | | | Ink set 2 | | | | |
| | | Y | M | C | K | | Y | M | C | K | |
| Surface gloss of each color in high surface gloss mode | | D | D | D | E | | E | E | E | E | |
| Surface gloss of each color in low surface gloss mode | | A | A | A | A | | A | A | A | A | |
| Blocking resistance of each color | | D | D | D | E | | D | D | D | E | |
| Stretchability of each color | | E | E | E | E | | E | E | E | E | |

**Table 10**

| Component list | | Comparative Example | | | | | | | | | | | |
|---|---|---|---|---|---|---|---|---|---|---|---|---|---|
| | | Ink set 3 | | | | | Ink set 4 | | | | | | |
| | | Y | M | C | K | CL2 | Y | M | C | K | Lm | Lc | CL2 |
| Mill base | Yellow mill base | 8.00 | - | - | - | - | 8.00 | - | - | - | - | - | - |
| | Magenta mill base | | 13.00 | - | - | - | - | 13.00 | - | - | 4.00 | - | - |
| | Cyan mill base | - | - | 8.00 | - | - | - | - | 8.00 | - | - | 2.00 | - |
| | Black mill base | - | - | - | 8.00 | - | - | - | - | 8.00 | - | - | - |
| Monomer | NVC | - | - | - | - | - | - | - | - | - | - | - | - |
| | NVF | 23.00 | 23.00 | 23.00 | 23.00 | - | 27.00 | 22.50 | 27.00 | 26.00 | 31.20 | 31.20 | - |
| | CTFA | 28.00 | 27.00 | 28.00 | 28.00 | - | 49.00 | 48.00 | 48.50 | 49.00 | 49.80 | 49.80 | - |
| | PEA | 13.00 | 10.00 | 14.00 | 12.00 | - | - | - | - | - | - | - | - |
| | FA-512 | 5.00 | 5.00 | 5.00 | 5.50 | - | - | - | - | - | - | - | - |
| | SR351S (TMPTA) | 5.00 | 5.00 | 5.00 | 5.00 | - | - | - | - | - | - | - | - |
| | SR454 (EOTMPTA) | - | - | - | - | - | 3.00 | 3.00 | 3.00 | 3.00 | 5.00 | 5.00 | - |
| | DPGDA | - | - | - | - | 50.00 | - | - | - | - | - | - | 40.85 |
| | SR-833 | - | - | - | - | 36.85 | - | - | - | - | - | - | 30.00 |
| | DVE-3 | - | - | - | - | - | - | - | - | - | - | - | 14.00 |
| | HDDA | 3.00 | 3.00 | 3.00 | 3.00 | - | - | - | - | - | - | - | - |
| Oligomer | CN964A85 | - | - | - | - | 3.00 | 3.00 | 3.00 | 3.00 | 3.00 | 3.00 | 5.00 | 1.00 |
| | CN962 | 3.00 | 3.00 | 3.00 | 3.00 | - | - | - | - | - | - | - | - |
| Initiator | Irg369 | 2.00 | 2.00 | 2.00 | 1.50 | - | - | - | - | - | - | - | - |
| | Irg819 | 4.00 | 4.00 | 4.00 | 5.00 | - | 4.00 | 4.00 | 4.00 | 5.00 | 3.00 | 3.00 | - |
| | TPO | - | - | - | - | 9.00 | 2.00 | 3.00 | 3.00 | 2.00 | 2.00 | 2.00 | 14.00 |
| | ITX | 5.00 | 4.00 | 4.00 | 5.00 | 0.05 | 3.00 | 2.50 | 2.50 | 3.00 | 1.00 | 1.00 | 0.05 |
| Additive | UV-12 | 1.00 | 1.00 | 1.00 | 1.00 | - | 1.00 | 1.00 | 1.00 | 1.00 | 1.00 | 1.00 | - |
| | Tinuvin 770DF | - | - | - | - | 0.10 | - | - | - | - | - | - | 0.10 |
| Surfactant | Tegorad 2100 | - | - | - | - | 1.00 | - | - | - | - | - | - | - |
| Sum total [mass] | | 100 | 100 | 100 | 100 | 100 | 100 | 100 | 100 | 100 | 100 | 100 | 100 |
| Total amount of radically polymerizable compounds [mass] | | 80.00 | 76.00 | 81.00 | 79.50 | 89.85 | 82.00 | 76.50 | 81.50 | 81.00 | 89.00 | 91.00 | 85.85 |
| Sum total of monofunctional monomers [mass] | | 69.00 | 65.00 | 70.00 | 68.50 | - | 76.00 | 70.50 | 75.50 | 75.00 | 81.00 | 81.00 | - |
| Monofunctional monomer/total polymerizable compounds [mass%] | | 86.3 | 85.5 | 86.4 | 86.2 | - | 92.7 | 92.2 | 92.6 | 92.6 | 91.0 | 89.0 | - |
| Evaluation results | | Ink set 3 | | | | | Ink set 4 | | | | | | |
| | | Y | M | C | K | | Y | M | | C | K | | |
| Surface gloss of each color in high surface gloss mode | | E | E | E | E | | E | E | | E | E | | |
| Surface gloss of each color in low surface gloss mode | | A | A | A | A | | A | A | | A | A | | |
| Blocking resistance of each color | | D | D | D | E | | D | D | | D | E | | |
| Stretchability of each color | | E | E | E | E | | E | E | | E | E | | |

**Table 11**

| Component list | | Comparative Example | | | | |
|---|---|---|---|---|---|---|
| | | Ink set 5 | | | | |
| | | Y | M | C | K | CL2 |
| Mill base | Yellow mill base | 8.00 | - | - | - | - |
| | Magenta mill base | - | 13.00 | - | - | - |
| | Cyan mill base | - | - | 8.00 | - | - |
| | Black mill base | - | - | - | 8.00 | - |
| Monomer | NVC | - | - | - | - | - |
| | NVF | 23.00 | 23.00 | 23.00 | 23.00 | - |
| | CTFA | 28.00 | 27.00 | 28.00 | 28.00 | - |
| | PEA | 13.00 | 10.00 | 14.00 | 12.00 | - |
| | FA-512 | 5.00 | 5.00 | 5.00 | 5.50 | - |
| | SR351S (TMPTA) | 5.00 | 5.00 | 5.00 | 5.00 | - |
| | SR454 (EOTMPTA) | - | - | - | - | - |
| | NPGPODA | - | - | - | - | 77.60 |
| | DVE-3 | - | - | - | - | 10.70 |
| | HDDA | 3.00 | 3.00 | 3.00 | 3.00 | - |
| Oligomer | CN964A85 | - | - | - | - | - |
| | CN962 | 3.00 | 3.00 | 3.00 | 3.00 | - |
| Initiator | Irg369 | 2.00 | 2.00 | 2.00 | 1.50 | - |
| | Irg819 | 4.00 | 4.00 | 4.00 | 5.00 | - |
| | Irg184 | - | - | - | - | 3.00 |
| | TPO | - | - | - | - | 8.50 |
| | ITX | 5.00 | 4.00 | 4.00 | 5.00 | - |
| Additive | UV-12 | 1.00 | 1.00 | 1.00 | 1.00 | - |
| | Tinuvin 770DF | - | - | - | - | 0.10 |
| Surfactant | BYK307 | - | - | - | - | 0.10 |
| Sum total [mass] | | 100 | 100 | 100 | 100 | 100 |
| Total amount of radically polymerizable compounds [mass] | | 80.00 | 76.00 | 81.00 | 79.50 | 88.30 |
| Sum total of monofunctional monomers [mass] | | 69.00 | 65.00 | 70.00 | 68.50 | - |
| Monofunctional monomer/total polymerizable compounds [mass%] | | 86.3 | 85.5 | 86.4 | 86.2 | - |
| Evaluation results | | Ink set 5 | | | | |
| | | Y | | C | K | |
| Surface gloss of each color in high surface gloss mode | | E | E | E | E | |
| Surface gloss of each color in low surface gloss mode | | A | A | A | A | |
| Blocking resistance of each color | | D | D | D | E | |
| Stretchability of each color | | E | E | E | E | |

### Explanation of Reference Numerals and Symbols

10 ink jet recording equipment, 12 recording medium, 14 image layer, 16 clear ink layer, 18 white layer, 20 main body, 22 support legs, 24 ink jet head, 26 platen, 28 guide mechanism, 30 carriage, 32A, 32B provisional curing light source, 34A, 34B main curing light source, 35 movement mechanism (light source movement part), 35A shaft, 35B rack, 35C pinion gear, 35D drive motor, 35E detection piece, 35F position sensor, 36 ink cartridge, 38 mounting section, 40 nip roller, 42 supply-side roll, 44 wind-up roll, 46 guide, 50 temperature control section, 52 pre-temperature control section, 54 post-temperature control section, 61, 61C, 61M, 61Y, 61K, 61LC, 61LM, 61CL1, 61CL2 nozzle array, 61-1 upstream side region, 61-2 downstream side region, 70 supply pump, 72 subtank, 74 pressure-adjusting section, 76 valve, 77 pressurizing/decompressing pump, 78 pressure gauge, 102 control device, 104 recording medium transport control section, 106 carriage drive control section, 108 light source control section, 110 image processing section, 112 discharge control section, 114 transport drive section, 116 main scanning drive section, 120 input device, 124 information storage section, 128 head drive circuit, 130 encoder, 132 sensor.

## Claims

1. An actinic radiation-curing type ink set comprising a colored ink composition and a clear ink composition (C1),
the colored ink composition comprising (Component A1) a radically polymerizable compound, (Component B1) a polymerization initiator, and (Component D) a colorant, and
the clear ink composition (C1) comprising (Component A2) a radically polymerizable compound, (Component B2) a polymerization initiator, and (Component S) an organic solvent
wherein the colored ink composition comprises at least a bisacylphosphine oxide as the polymerization initiator, and the clear ink composition (C1) comprises a monoacylphosphine oxide as the polymerization initiator.

2. The actinic radiation-curing type ink set according to Claim 1, wherein it further comprises a clear ink composition (C2) that does not comprise an organic solvent, and the clear ink composition (C2) comprises (Component A3) a radically polymerizable compound and (Component B3) a polymerization initiator.

3. The actinic radiation-curing type ink set according to Claim 2 the clear ink composition (C2) comprises a monoacylphosphine oxide as the polymerization initiator.

4. The actinic radiation-curing type ink set according to any one of Claims 1 to 3, wherein the colored ink composition does not contain an organic solvent.

5. The actinic radiation-curing type ink set according to any one of Claims 1 to 4, wherein the actinic radiation-curing type ink set is for forming multiple layers.

6. The actinic radiation-curing type ink set according to any one of Claims 1 to 5, wherein said Component S comprises at least one type selected from the group consisting of an alcohol, a polyhydric alcohol, a polyhydric alcohol ether, a nitrogen-containing compound, and a sulfur-containing compound.

7. The actinic radiation-curing type ink set according to any one of Claims 1 to 6, wherein said Component S comprises at least one type selected from the group consisting of an alcohol, a polyhydric alcohol, and a polyhydric alcohol ether.

8. The actinic radiation-curing type ink set according to any one of Claims 1 to 7, wherein said Component S has a content in the clear ink composition (C1) of 1 to 80 mass%.

9. The actinic radiation-curing type ink set according to any one of Claims 1 to 8, wherein said Component S comprises at least one type selected from the group consisting of methanol, isopropyl alcohol, 1-butyl alcohol, 1-ethoxy-2-propanol, ethylene glycol monomethyl ether, and diethylene glycol monobutyl ether.

10. The actinic radiation-curing type ink set according to any one of Claims 1 to 9, wherein the colored ink composition comprises (Component A1-2) a compound represented by Formula (a-2) as Component A1, 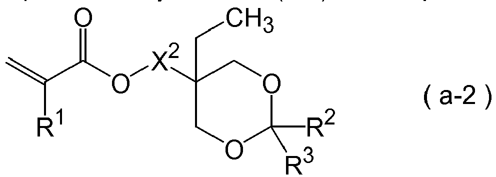 wherein in Formula (a-2), R¹, R², and R³ independently denote a hydrogen atom, a methyl group, or an ethyl group and X² denotes a single bond or a divalent linking group.

11. The actinic radiation-curing type ink set according to any one of Claims 1 to 10, wherein the colored ink composition comprises a monofunctional radically polymerizable compound at 60 to 100 mass% relative to the total amount of Component A1.

12. An inkjet recording method using the actinic radiation-curing type ink set according to any one of Claims 1 to 11, the method comprising, in this order:
an image formation step of forming a color image by discharging the colored ink composition onto a recording medium; and
a clear ink layer formation step of forming a clear ink layer by discharging the clear ink composition (C1).

13. The inkjet recording method according to Claim 12, wherein it further comprises a step of heating the recording medium at 30°C to 80°C subsequent to the clear ink layer formation step.

14. A printed material obtained by the method according to Claim 12 or 13.

15. Use of the actinic radiation-curing type ink set according to any one of Claims 1 to 11 as an actinic radiation-curing type inkjet ink set for formation of multiple layers.

## Patentansprüche

1. Tintenset vom durch aktinische Strahlung härtbaren Typ aufweisend eine farbige Tintenzusammensetzung und eine klare Tintenzusammensetzung (C1), wobei
die farbige Tintenzusammensetzung aufweist (Komponente A1) eine radikalisch polymerisierbare Verbindung, (Komponente B1) einen Polymerisationsinitiator, und (Komponente D) einen Farbstoff, und
die klare Tintenzusammensetzung (C1) aufweist (Komponente A2) eine radikalisch polymerisierbare Verbindung, (Komponente B2) einen Polymerisationsinitiator, und (Komponente S) ein organisches Lösungsmittel,
wobei die farbige Tintenzusammensetzung mindestens ein Bisacylphosphinoxid als den Polymerisationsinitiator aufweist, und die klare Tintenzusammensetzung (C1) ein Monoacylphosphinoxid als den Polymerisationsinitiator aufweist.

2. Tintenset vom durch aktinische Strahlung härtbaren Typ nach Anspruch 1, das außerdem eine klare Tintenzusammensetzung (C2) aufweist, die kein organisches Lösungsmittel enthält, und wobei die klare Tintenzusammensetzung (C2) aufweist (Komponente A3) eine radikalisch polymerisierbare Verbindung und (Komponente B3) einen Polymerisationsinitiator.

3. Tintenset vom durch aktinische Strahlung härtbaren Typ nach Anspruch 2, wobei die klare Tintenzusammensetzung (C2) ein Monoacylphosphinoxid als den Polymerisationsinitiator aufweist.

4. Tintenset vom durch aktinische Strahlung härtbaren Typ nach einem der Ansprüche 1 bis 3, wobei die farbige Tintenzusammensetzung kein organisches Lösungsmittel enthält.

5. Tintenset vom durch aktinische Strahlung härtbaren Typ nach einem der Ansprüche 1 bis 4, das ein Tintenset vom durch aktinische Strahlung härtbaren Typ zur Erzeugung mehrerer Schichten ist.

6. Tintenset vom durch aktinische Strahlung härtbaren Typ nach einem der Ansprüche 1 bis 5, wobei die Komponente S mindestens einen Verbindungstyp aufweist, der ausgewählt ist aus der Gruppe, die aus einem Alkohol, einem mehrwertigen Alkohol, einem mehrwertigen Etheralkohol, einer Stickstoff enthaltenden Verbindung und einer Schwefel enthaltenden Verbindung besteht.

7. Tintenset vom durch aktinische Strahlung härtbaren Typ nach einem der Ansprüche 1 bis 6, wobei die Komponente S mindestens einen Verbindungstyp aufweist, der ausgewählt ist aus der Gruppe, die aus einem Alkohol, einem mehrwertigen Alkohol und einem mehrwertigen Etheralkohol besteht.

8. Tintenset vom durch aktinische Strahlung härtbaren Typ nach einem der Ansprüche 1 bis 7, wobei die Komponente S einen Gehalt von 1 bis 80 Masseprozent in der klaren Tintenzusammensetzung (C1) hat.

9. Tintenset vom durch aktinische Strahlung härtbaren Typ nach einem der Ansprüche 1 bis 8, wobei die Komponente S mindestens einen Verbindungstyp aufweist, der ausgewählt ist aus der Gruppe, die aus Methanol, Isopropylalkohol, 1-Butylalkohol, 1-Ethoxy-2-propanol, Ethylenglykol-monomethylether und Diethylenglykol-monobutylether besteht.

10. Tintenset vom durch aktinische Strahlung härtbaren Typ nach einem der Ansprüche 1 bis 9, wobei die farbige Tintenzusammensetzung (Komponente A1-2) eine Verbindung, die durch Formel (a-2) repräsentiert wird, als Komponente A1 aufweist 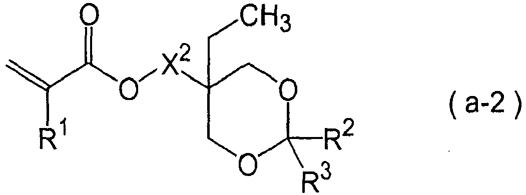 wobei in Formel (a-2), R¹, R², und R³ unabhängig ein Wasserstoffatom, eine Methylgruppe oder eine Ethylgruppe bezeichnen, und X² eine Einfachbindung oder eine zweiwertige Verbindungsgruppe bezeichnet.

11. Tintenset vom durch aktinische Strahlung härtbaren Typ nach einem der Ansprüche 1 bis 10, wobei die farbige Tintenzusammensetzung 60 bis 100 Masseprozent, bezogen auf die Gesamtmenge an Komponente A1, einer monofunktionellen radikalisch polymerisierbaren Verbindung aufweist.

12. Tintenstrahl-Aufzeichnungsverfahren, das das Tintenset vom durch aktinische Strahlung härtbaren Typ nach einem der Ansprüche 1 bis 11 verwendet, wobei das Verfahren aufweist, in dieser Reihenfolge:
einen Bilderzeugungsschritt des Erzeugens eines Farbbilds durch Ausstoßen der farbigen Tintenzusammensetzung auf ein Aufzeichnungsmedium; und
einen Erzeugungsschritt einer Schicht aus klarer Tinte des Erzeugens einer klaren Tintenschicht durch Ausstoßen der klaren Tintenzusammensetzung (C1).

13. Tintenstrahl-Aufzeichnungsverfahren nach Anspruch 12, das außerdem einen Schritt des Erhitzens des Aufzeichnungsmediums bei 30 °C bis 80 °C nach dem Erzeugungsschritt der Schicht aus klarer Tinte aufweist.

14. Druckerzeugnis, das durch das Verfahren nach Anspruch 12 oder 13 erhalten wurde.

15. Verwendung des Tintensets vom durch aktinische Strahlung härtbaren Typ nach einem der Ansprüche 1 bis 11 als ein Tintenstrahl-Tintenset vom durch aktinische Strahlung härtbaren Typ zur Erzeugung mehrerer Schichten.

## Revendications

1. Jeu d'encres de type durcissant par rayonnement actinique comprenant une composition d'encre colorée et une composition d'encre incolore (C1),
la composition d'encre colorée comprenant (Composant A1) un composé polymérisable par radicaux, (Composant B1) un initiateur de polymérisation, et (Composant D) un colorant, et
la composition d'encre incolore (C1) comprenant (Composant A2) un composé polymérisable par radicaux, (Composant B2) un initiateur de polymérisation, et (Composant S) un solvant organique,
dans lequel la composition d'encre colorée comprend au moins un oxyde de bisacylphosphine pour l'initiateur de polymérisation, et la composition d'encre incolore (C1) comprend un oxyde de monoacylphosphine pour l'initiateur de polymérisation.

2. Jeu d'encres de type durcissant par rayonnement actinique selon la revendication 1, dans lequel celui-ci comprend en outre une composition d'encre incolore (C2) ne comprenant pas de solvant organique, et la composition d'encre incolore (C2) comprend (Composant A3) un composé polymérisable par radicaux et (Composant B3) un initiateur de polymérisation.

3. Jeu d'encres de type durcissant par rayonnement actinique selon la revendication 2, dans lequel la composition d'encre incolore (C2) comprend un oxyde de monoacylphosphine pour l'initiateur de polymérisation.

4. Jeu d'encres de type durcissant par rayonnement actinique selon l'une quelconque des revendications 1 à 3, dans lequel la composition d'encre colorée ne contient pas de solvant organique.

5. Jeu d'encres de type durcissant par rayonnement actinique selon l'une quelconque des revendications 1 à 4, dans lequel le jeu d'encres de type durcissant par rayonnement actinique est destiné à la formation de couches multiples.

6. Jeu d'encres de type durcissant par rayonnement actinique selon l'une quelconque des revendications 1 à 5, dans lequel ledit composant S comprend au moins un type sélectionné parmi le groupe consistant en un alcool, un alcool polyhydrique, un éther d'alcool polyhydrique, un composé contenant de l'azote, et un composé contenant du soufre.

7. Jeu d'encres de type durcissant par rayonnement actinique selon l'une quelconque des revendications 1 à 6, dans lequel ledit composant S comprend au moins un type sélectionné parmi le groupe consistant en un alcool, un alcool polyhydrique, et un éther d'alcool polyhydrique.

8. Jeu d'encres de type durcissant par rayonnement actinique selon l'une quelconque des revendications 1 à 7, dans lequel ledit composant S présente une teneur dans la composition d'encre incolore (C1) comprise entre 1 et 80 % en masse.

9. Jeu d'encres de type durcissant par rayonnement actinique selon l'une quelconque des revendications 1 à 8, dans lequel ledit composant S comprend au moins un type sélectionné parmi le groupe consistant en du méthanol, de l'alcool isopropylique, de l'alcool 1-butylique, du 1-éthoxy-2-propanol, de l'éther monométhylique d'éthylèneglycol et de l'éther monobutylique de diéthylèneglycol.

10. Jeu d'encres de type durcissant par rayonnement actinique selon l'une quelconque des revendications 1 à 9, dans lequel la composition d'encre colorée comprend (Composant A1-2) un composé représenté par la formule (a-2) pour le Composant A1, 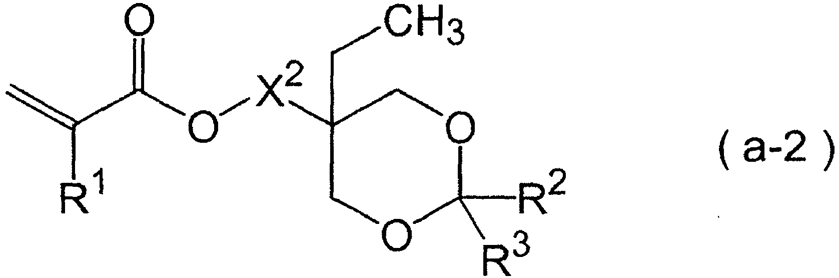 dans lequel, dans la formule (a-2), R¹, R² et R³ indiquent indépendamment un atome d'hydrogène, un groupe méthyle, ou un groupe éthyle, et X² indique une liaison unique ou un groupe de liaison divalent.

11. Jeu d'encres de type durcissant par rayonnement actinique selon l'une quelconque des revendications 1 à 10, dans lequel la composition d'encre colorée comprend un composé monofonctionnel polymérisable par radicaux à 60 à 100 % en masse par rapport à la quantité totale de composant A1.

12. Procédé d'enregistrement à jet d'encre utilisant le jeu d'encres de type durcissant par rayonnement actinique selon l'une quelconque des revendications 1 à 11, le procédé comprenant, dans cet ordre :
une étape de formation d'image pour former une image couleur en déchargeant la composition d'encre colorée sur un support d'enregistrement, et
une étape de formation de couche d'encre incolore pour former une couche d'encre incolore en déchargeant la composition d'encre incolore (C1).

13. Procédé d'enregistrement à jet d'encre selon la revendication 12, dans lequel celui-ci comprend en outre une étape de chauffage du support d'enregistrement à 30 °C à 80 °C suite à l'étape de formation de couche d'encre incolore.

14. Matériau imprimé obtenu par le procédé selon la revendication 12 ou 13.

15. Utilisation du jeu d'encres de type durcissant par rayonnement actinique selon l'une quelconque des revendications 1 à 11 comme jeu d'encres de type durcissant par rayonnement actinique pour la formation de couches multiples.
